# EUROPEAN PATENT APPLICATION

(11) **EP 1 510 909 A1**
(43) Date of publication of application: **02.03.2005**
(21) Application number: 03730804.6
(22) Date of filing: 03.06.2003
(51) Int. Cl.: G06F 3/02, G06F 1/16

(54) **FOLDABLE KEYBOARD**

(30) Priority: 04.06.2002 JP 2002163440; 11.06.2002 JP 2002169724; 13.06.2002 JP 2002172691; 13.06.2002 JP 2002172841
(71) Applicant: BROTHER KOGYO KABUSHIKI KAISHA, Nagoya-shi, Aichi-ken 467-8561 (JP)
(72) Inventor: MOCHIZUKI, Isao BROTHER KOGYO KABUSHIKI KAISHA, Nagoya-shi, Aichi 467-8561 (JP); TAKAGI, Takeyuki BROTHER KOGYO KABUSHIKI KAISHA, Nagoya-shi, Aichi 467-8561 (JP)
(74) Representative: Smith, Samuel Leonard
(86) International application number: PCT/JP2003/007028
(87) International publication number: WO 2003/104961

(57) **Abstract**

A first key unit 37 in a first keyboard unit 3 is mounted on a first base plate 5 so that the first key unit is turnable, while a second key unit 47 in a second keyboard unit 4 is mounted on a second base plate 8 so that the second key unit is turnable. A gear teeth part 43 formed in a circular arc face 42 of a first gear member 44 placed in one side of a first support plate 6 is engaged with a gear teeth part 53 formed in a circular arc face 52 of a second gear member 54 placed in one side of a second support plate 9.

## Description

### TECHNICAL FIELD

The present invention relates to a foldable keyboard having good portability and excellent operationality and, particularly, to a foldable keyboard including two keyboard units which can be placed in desired positions by a simple operation after unfolded from a folded state.

### BACKGROUND ART

Heretofore, there have been proposed various types of foldable keyboards including two separate keyboard units rotatably connected with each other. When the keyboard is not used, the keyboard units are superposed one on top of the other into a folded compact state, thus making it easy to carry anywhere. During use, on the other hand, the keyboard units are opened from the folded state, thus providing high operationality equivalent to standard keyboards.

For example, Japanese patent No. 3,201,456 (Japanese unexamined patent publication No. Hei 9-34612) and Japanese patent No. 3,254,658 (Japanese unexamined patent publication No. Hei 9-34611) each disclose a foldable keyboard including an enclosure and a keyboard, both being divided into two at respective centers in longitudinal directions, which are rotatably engaged with each other through a joint arm, thereby making the keyboard freely foldable.

Moreover, Japanese unexamined patent publication No. 2000-56904 discloses a foldable keyboard in which two separate keyboards, at least one of which is slidably supported in a support plate, are connected to both sides of a back plate so that the separate keyboards are rotatable through the support plate.

In each keyboard mentioned above, the two separate keyboard units are rotatably connected with each other so that they are superposed in a compact state during nonuse to enhance portability of the keyboard and they are rotated outwards to be unfolded, allowing operation with high operationality equal to standard keyboards.

Meanwhile, a user operates a keyboard in the same position and thus operating for long hours will tax his body and eyes. Therefore the placement relation between key tops in the keyboard has been reviewed from the ergonomic standpoint. For instance, keyboard users have different finger lengths, shapes, and others. If ergonomically considering the structures of the keyboard, it is desired that the placement relation between the key tops is a most easiest placement relation to use for each user.

In each keyboard disclosed in the aforementioned Japanese patent No. 3,201,456 (Japanese unexamined patent publication No. Hei 9-34612) and Japanese patent No. 3,254,658 (Japanese unexamined patent publication No. Hei 9-34611), the two keyboard units are used directly when opened from the folded state; however, a positional relation between the two keyboard units cannot be changed to a using state preferable to each user.

In the keyboard disclosed in Japanese unexamined patent publication No. 2000-56904, to set the two keyboard units in a using state, they are rotated outwards from a folded state to an unfolded state and then one of the keyboard units slidably supported on the support plate is slid toward the other keyboard. Thus, the keyboard units are set in the using state where they are close to each other. Similar to the above case, the positional relation between the two keyboard units in this state cannot be changed to a desired using state for each user.

U.S. patent No. 5,574,481 discloses a foldable keyboard including two separate keyboard units which are connected to be movable close to or apart from each other and each keyboard unit is rotatable in a horizontal direction with respect to a placement plane of the keyboard.

Such foldable keyboard is usable in a normal state when the keyboard units are placed in contact with each other, while the keyboard is usable in a slanted state of each keyboard unit with an operating face tilted to a user when the keyboard units are turned with respect to each other.

In the keyboard disclosed in the aforementioned U.S. Patent No. 5,574,481, each keyboard unit is constructed to be turnable but has to be turned in a state apart from the placement plane. In order to place each keyboard unit in the slanted state with the operating face being tilted to the user into a most suitable position for the user, accordingly, the user has to turn each keyboard unit to a desired slanted state while holding one of the keyboard units in the left hand and the other in the right hand. This operation is very troublesome and fine adjustment is very difficult.

The present invention has been made to solve the above problems and has a purpose to provide a foldable keyboard including two keyboard units which can be placed in a desired operating state by a simple operation after the keyboard units are opened from a folded state.

### DISCLOSURE OF INVENTION

(1) To achieve the above purpose, the foldable keyboard according to a first invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein the first keyboard unit includes a first base plate and a first key unit including a plurality of key switches arranged on a first support plate mounted on the first base plate, the first support plate being turnable in a horizontal direction; the second keyboard unit includes a second base plate and a second key unit including a plurality of key switches arranged on a second support plate mounted on the second base plate, the second support plate being turnable in a horizontal direction; the rotational connecting part includes a support shaft which rotatably supports the first base plate and the second base plate; and the keyboard further comprises a first gear member placed in one side of the first support plate and formed with a predetermined circular arc face and a first gear teeth part in the circular arc face; and a second gear member placed in one side of the second support plate and formed with a predetermined circular arc face and a second gear teeth part in the circular arc face, the second gear teeth part being engaged with the first gear teeth part.

The foldable keyboard according to the first invention is characterized by comprising a locking mechanism which is placed between the first base plate and the first key unit or between the second base plate and the second key unit and is used for locking the first key unit or the second key unit in a desired turning position.

The foldable keyboard according to the first invention is characterized in that the locking mechanism is constructed of a locking recess formed in the circular arc face in the first gear member or the second gear member and a locking piece provided in the first base plate or the second base plate and engaged in the locking recess.

The foldable keyboard according to the first invention is characterized in that the first support plate in the first key unit is placed to be turnable about a predetermined turning axis on the first base plate and is formed, in one side, with a circular arc face coincident with a turning radius of the first support plate which turns about the turning axis, and the circular arc face of the first gear member is equal in curvature radius to the circular arc face of the first support plate and in that the second support plate in the second key unit is placed to be turnable about a predetermined turning axis on the second base plate and is formed, in one side, with a circular arc face coincident with a turning radius of the second support plate which turns about the turning axis, and the circular arc face of the second gear member is equal in curvature radius to the circular arc face of the second support plate.

The foldable keyboard according to the first invention is characterized in that the first gear teeth part formed in the first gear member includes a plurality of first gear teeth including a lower tooth positioned below an upper surface of the first gear member and an upper tooth positioned above the upper surface of the first gear member, the second gear teeth part formed in the second gear member includes a plurality of second gear teeth including a lower tooth positioned below an upper surface of the second gear member and an upper tooth positioned above the upper surface of the second gear member, and the plurality of the first gear teeth and the second gear teeth are engaged with each other through their respective upper teeth and lower teeth.

In the foldable keyboard according to the first invention having the above structure, the first base plate of the first keyboard and the second base plate in the second keyboard unit are rotatably connected by the support shaft of the rotational connecting part. During use of the keyboard, accordingly, both units are rotated to come apart from each other into a horizontal state. During nonuse of the keyboard, both units are rotated about the support shaft to come close to each other into a superposed state.

In the keyboard, the first key unit in the keyboard unit is provided to be turnable on the first base plate, while the second key unit in the second keyboard unit is provided to be turnable on the second base plate. The first gear teeth part formed in the circular arc face of the first gear member placed in one side of the first support plate is engaged with the second gear teeth part formed in the circular arc face of the second gear member placed in one side of the second support plate. Accordingly, prior to use of the keyboard, a user horizontally turns one of the key units on the first or second base plate, which causes the other key unit to turn synchronously. Such a very simple operation allows the user to arrange each keyboard unit in a desired operating state so that the user may operate the keyboard in a most suitable state for him.

The locking mechanism for locking the first or second key unit in a desired turning position is provided between the first base plate and the first key unit or between the second base plate and the second key unit. This locking mechanism makes it possible to lock the first and second key units in their desired turning positions after the key units have been turned synchronously to the desired turning positions. The keyboard can be fixed in the most suitable operating state for each user.

The locking mechanism is simply constructed of the locking recess formed in the circular arc face of the first or second gear member and the locking piece provided in the first or second base plate and in the locking recess. Thus, the locking mechanism in the first and second key units can be achieved at lower cost. Because the locking recess is formed in the circular arc face of the first or second gear member in which the second gear teeth part are formed, the locking recess can be made at the same time with the formation of the second gear teeth part, resulting in a reduction in cost.

The circular arc faces of the first gear teeth part and the support plate in the first key unit are equal in curvature radius and the circular arc faces of the second gear teeth part and the support plate in the second key unit are equal in curvature radius. Thus, the circular arc face of the first gear teeth part and the circular arc face of the support plate in the first key unit coincide with each other and the circular arc face of the second gear teeth part and the circular arc face of the support plate in the second key unit coincide with each other. This can prevent displacement between the circular arc faces and configure the first and second key units with a good appearance.

Furthermore, the first gear teeth part has a plurality of first gear teeth including a lower tooth positioned below the upper surface of the first gear member and an upper tooth positioned above the upper surface of the first gear member, while the second gear teeth part has a plurality of second gear teeth including a lower tooth positioned below the upper surface of the second gear member and an upper tooth positioned above the upper surface of the second gear member. The plurality of first and second gear teeth are engaged with each other though their upper and lower teeth. Consequently, the engagement between the first and second gear teeth can continuously be held without release by cooperation between their respective lower and upper teeth even during rotation of the first and second keyboard units from the folded state to the horizontal state.

(2) To achieve the above purpose, the foldable keyboard according to the second invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein the first keyboard unit includes a first base plate and a first key unit including a plurality of key switches arranged on a first support plate mounted on the first base plate, the first support plate being turnable in a horizontal direction; the second keyboard unit includes a second base plate and a second key unit including a plurality of key switches arranged on a second support plate mounted on the second base plate, the second support plate being turnable in a horizontal direction; the rotational connecting part includes a support shaft which rotatably supports the first base plate and the second base plate and a sliding member which is slidably fitted on the support shaft and formed with a gear teeth part; the keyboard further comprises: a first gear member placed in one side of the first support plate and formed with a predetermined circular arc face and a first gear tooth in the circular arc face, the first gear tooth being engaged with the gear teeth part; and a second gear member placed in one side of the second support plate and formed with a predetermined circular arc face and a second gear tooth being engaged with the gear teeth part.

The foldable keyboard according to the second invention is characterized by comprising a locking mechanism which is placed between the first base plate and the first key unit or between the second base plate and the second key unit and which is used for locking the first key unit or the second key unit in a desired turning position.

The foldable keyboard according to the second invention is characterized in that the locking mechanism is constructed of a locking recess formed in the circular arc face in the first gear member or the second gear member and a locking piece provided in the first base plate or the second base plate and engaged in the locking recess.

The foldable keyboard according to the second invention is characterized in that the first support plate in the first key unit is placed to be turnable about a predetermined turning axis on the first base plate and is formed, in one side, with a circular arc face coincident with a turning radius of the first support plate which turns about the turning axis, and the circular arc face of the first gear member is equal in curvature radius to the circular arc face of the first support plate, and in that the second support plate in the second key unit is placed to be turnable about a predetermined turning axis on the second base plate and is formed, in one side, with a circular arc face coincident with a turning radius of the second support plate which turns about the turning axis, and the circular arc face of the second gear member is equal in curvature radius to the circular arc face of the second support plate.

In the foldable keyboard according to the second invention having the above structure, the first base plate in the first keyboard unit and the second base plate in the second keyboard unit are rotatably supported by the support shaft of the rotational connecting part. Thus, during use of the keyboard, both units are rotated to come apart from each other into a horizontal state. During nonuse of the keyboard, both units are rotated about the support shaft to come close to each other into a superposed state.

In the keyboard, the first key unit in the keyboard unit is provided to be turnable on the first base plate, while the second key unit in the second keyboard unit is provided to be turnable on the second base plate. The first gear teeth formed in the circular arc face of the first gear member placed in one side of the first support plate are engaged with the gear teeth of the sliding member slidably fitted on the support shaft and the second gear teeth formed in the circular arc face of the second gear member placed in one side of the second support plate are engaged with the gear teeth of the sliding member. Accordingly, prior to use of the keyboard, a user horizontally turns one of both key units on the first or second base plate, which causes the other key unit to turn synchronously. Such a very simple operation allows the user to arrange each keyboard unit in a desired operating state so that the user may operate the keyboard in a most suitable state for him.

In the foldable keyboard according to the second invention, the locking mechanism for locking the first or second key unit in a desired turning position is provided between the first base plate and the first key unit or between the second base plate and the second key unit. This locking mechanism makes it possible to lock the first and second key units in their turning desired turning positions after the key units have been turned synchronously to the desired turning positions. The keyboard can be fixed in the most suitable operating state for each user.

In the foldable keyboard according to the second invention, the locking mechanism is simply constructed of the locking recess formed in the circular arc face of the first or second gear member, and the locking piece provided in the first or second base plate and engaged in the locking recess. Thus, the locking mechanism in the first and second key units can be achieved at lower cost. Because the locking recess is formed in the circular arc face of the first or second gear member in which the second gear teeth part are formed, the locking recess can be made at the same time with the formation of the second gear teeth part, resulting in a reduction in cost.

In the foldable keyboard according to the second invention, the circular arc face of the first gear teeth and the circular arc face of the support plate in the first key unit are equal in curvature radius and the circular arc face of the second gear teeth and the circular arc face of the support plate in the second key unit are equal in curvature radius. Thus, the circular arc faces of the first gear teeth and the support plate in the first key unit coincide with each other and the circular arc faces of the second gear teeth and the support plate in the second key unit coincide with each other. This can prevent displacement between the circular arc faces and configure the first and second key units with a good appearance.

(3) To achieve the above purpose, the foldable keyboard according to the third invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein the first keyboard unit includes a first base plate and a first key unit including a plurality of key switches arranged on a first support plate mounted on the first base plate, the first support plate being turnable in a horizontal direction; the second keyboard unit includes a second base plate and a second key unit including a plurality of key switches arranged on a second support plate mounted on the second base plate, the second support plate being turnable in a horizontal direction; the rotational connecting part includes a support shaft which rotatably supports the first base plate and the second base plate and a sliding member which is slidably fitted on the support shaft; and the keyboard further comprises: a first support member placed in one side of the first support plate; a second support member placed in one side of the second support plate; and a linking mechanism including a first link member (280) which links the sliding member and the first support member and a second link member which links the sliding member and the second support member.

The foldable keyboard according to the third invention is characterized by comprising a locking mechanism which is placed between the first base plate and the first key unit or between the second base plate and the second key unit and which is used for locking the first key unit or the second key unit in a desired turning position.

The foldable keyboard according to the third invention is characterized in that the locking mechanism is constructed of a locking recess formed in the circular arc face in the first support member or the second support member and a locking piece provided in the first base plate or the second base plate and engaged in the locking recess.

The foldable keyboard according to the third invention is characterized in
that the first support plate in the first key unit is placed to be turnable about a predetermined turning axis on the first base plate and is formed, in one side, with a circular arc face coincident with a turning radius of the first support plate which turns about the turning axis, and the first support member is formed with a circular arc face equal in curvature radius to the circular arc face of the first support plate, and in that the second support plate in the second key unit is placed to be turnable about a predetermined turning axis on the second base plate and is formed, in one side, with a circular arc face coincident with a turning radius of the second support plate which turns about the turning axis, and the second support member is formed with a circular arc face equal in curvature radius to the circular arc face of the second support plate.

In the foldable keyboard according to the third invention having the above structure, the first base plate in the first keyboard unit and the second base plate in the second keyboard unit are rotatably supported by the support shaft of the rotational connecting part. Thus, during use of the keyboard, both units are rotated to come apart from each other into a horizontal state. During nonuse of the keyboard, both units are rotated about the support shaft to come close to each other into a superposed state.

In the keyboard, the first key unit in the keyboard unit is provided to be turnable on the first base plate, while the second key unit in the second keyboard unit is provided to be turnable on the second base plate. The first support member placed in one side of the first support plate is linked with the sliding member slidably fitted on the support shaft through the first link member and the second support member placed in one side of the second support plate is linked with the sliding member through the second link member. Accordingly, prior to use of the keyboard, a user horizontally turns one of the key units on the first or second base plate, which causes the other key unit to turn synchronously. Such a very simple operation allows the user to arrange each keyboard unit in a desired operating state so that the user may operate the keyboard in a most suitable state for him.

The locking mechanism for locking the first or second key unit in a desired turning position is provided between the first base plate and the first key unit or between the second base plate and the second key unit. This locking mechanism makes it possible to lock the first and second key units in their desired turning positions after the key units have been turned synchronously to the desired turning positions. The keyboard can be fixed in the most suitable operating state for each user.

The locking mechanism is simply constructed of the locking recess formed in the circular arc face of the first or second support member and the locking piece provided in the first or second base plate and engaged in the locking recess. Thus, the locking mechanism in the first and second key units can be achieved at lower cost. Because the locking recess is formed in the circular arc face of the first or second support member, the locking recess can be made at the same time with the formation of the circular arc face, resulting in a reduction in cost.

The circular arc face of the first support member and the circular arc face of the support plate in the first key unit are equal in curvature radius and the circular arc face of the second support member and the circular arc face of the support plate in the second key unit are equal in curvature radius. Thus, the circular arc face of the first support member and the circular arc face of the support plate in the first key unit coincide with each other, and the circular arc face of the second support member and the circular arc face of the support plate in the second key unit coincide with each other. This can prevent displacement between the circular arc faces and configure the first and second key units with a good appearance.

(4) To achieve the above purpose, the foldable keyboard according to the fourth invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein the first keyboard unit includes a first base plate and a first key unit including a plurality of key switches arranged on a first support plate mounted on the first base plate, the first support plate being turnable in a horizontal direction; the second keyboard unit includes a second base plate and a second key unit including a plurality of key switches arranged on a second support plate mounted on the second base plate, the second support plate being turnable in a horizontal direction; the rotational connecting part includes a support shaft which rotatably supports the first base plate and the second base plate; and the keyboard further comprises holding mechanisms which are placed between the first base plate and the first key unit and between the second base plate and the second key unit and which are used to hold the first key unit and the second key unit independently from each other in desired turning positions.

The foldable keyboard according to the fourth invention is characterized in that the holding mechanism includes: first support member placed in one side of the first support plate and formed with a predetermined circular arc face and a plurality of first locking recesses in the circular arc face; a first locking piece provided in the first base plate and engaged in the first locking recess; a second support member placed in one side of the second support plate and formed with a predetermined circular arc face and a plurality of second locking recesses in the circular arc face; and a second locking piece provided in the second base plate and engaged in the second locking recess.

The foldable keyboard according to the fourth invention is characterized in that the first support member is provided with a scale at a position corresponding to each first locking recess, and the second support member is provided with a scale at a position corresponding to each second locking recess.

The foldable keyboard according to the fourth invention is characterized in that the first support plate in the first key unit is placed to be turnable about a predetermined turning axis on the first base plate and is formed, in one side, with a circular arc face coincident with a turning radius of the first support plate which turns about the turning axis, and the circular arc face of the first support member is equal in curvature radius to the circular arc face of the first support plate, and in that the second support plate in the second key unit is placed to be turnable about a predetermined turning axis on the second base plate and is formed, in one side, with a circular arc face coincident with a turning radius of the second support plate which turns about the turning axis, and the circular arc face of the second support member is equal in curvature radius to the circular arc face of the second support plate.

The foldable keyboard according to the fourth invention is characterized in that the holding mechanism includes: a first support member placed in one side of the first support plate and formed with a predetermined circular arc face; a first damping member provided in the first base plate and held in contact with the circular arc face of the first support plate; a second support member placed in one side of the second support plate and formed with a predetermined circular arc face; and a second damping member provided in the second base plate and held in contact with the circular arc face of the second support plate.

The foldable keyboard according to the fourth invention is characterized in a foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard, wherein the rotational connecting part includes a support shaft which rotatably supports a first base plate and a second base plate; the first keyboard unit includes the first base plate and a first key unit including a plurality of key switches arranged on a first support plate mounted on the first base plate, the first support plate being turnable in a horizontal direction; the second keyboard unit includes the second base plate and a second key unit including a plurality of key switches arranged on a second support plate mounted on the second base plate, the second support plate being turnable in a horizontal direction; and the first support plate is allowed to turn in a horizontal direction through a first turning shaft provided on the first base plate, and the second support plate is allowed to turn in a horizontal direction through a second turning shaft provided on the second base plate.

In the foldable keyboard according to the fourth invention having the above structure, the first base plate in the first keyboard unit and the second base plate in the second keyboard unit are rotatably supported by the support shaft of the rotational connecting part. Thus, during use of the keyboard, both units are rotated to come apart from each other into a horizontal state. During nonuse of the keyboard, both units are rotated about the support shaft to come close to each other into a superposed state.

In the keyboard, the first key unit in the keyboard unit is provided to be turnable on the first base plate, while the second key unit in the second keyboard unit is provided to be turnable on the second base plate. The holding mechanisms are provided between the first base plate and the first key unit and between the second base plate and second key unit to hold the first and second key units independently from each other in their respective desired turning positions with respect to the first and second base plates. Prior to use of the keyboard by the user, the first key unit can be turned horizontally on the first base plate and held in the turning position by the holding mechanism. Similarly, the second key unit can be turned horizontally on the second base plate and held in the turning position by the holding mechanism. Thus, the first and second key units can be held independently in respective desired turning positions by the holding mechanisms. Such a very simple operation allows the user to independently place the keyboard units in a desired operating state so that the user may operate the keyboard in a most suitable state for him.

To lock the first key unit in the desired turning position, the first locking piece provided in the first base plate is engaged in the first locking recess of the first support member placed on the first support plate. To lock the second key unit in the desired turning position, the second locking piece provided in the second base plate is engaged in the second locking recess of the second support member placed on the second support plate. In each case, it is simply constructed of the locking recess and the locking piece, so that the locking mechanism in the first and second key units can be achieved at lower cost. Because the first locking recess is formed in the circular arc face of the first support member and the second locking recess is formed in the circular arc face of the second support member, the locking recesses can be made at the same time with the formation of the circular arc faces of the first and second support members, resulting in a reduction in cost.

Furthermore, the first support member is marked with a scale at a position corresponding to each of the first locking recesses, while the second support member is marked with a scale at a position corresponding to each of the second locking recesses. Accordingly, the user may turn the first and second key units while looking the scales and simply and easily adjusts.

The circular arc face of the first support member and the circular arc face of the support plate in the first key unit are equal in curvature radius and the circular arc face of the second support member and the circular arc face of the second support plate in the second key unit are equal in curvature radius. Thus, the circular arc face of the first support member and the circular arc face of the first support plate in the first key unit coincide with each other and the circular arc face of the second support member and the circular arc face of the second support plate in the second key unit coincide with each other. This can prevent displacement between the circular arc faces and configure the first and second key units with a good appearance.

To hold the first key unit in the desired turning position, the first damping member provided in the first base plate is held in contact with the circular arc face of the first support member. To hold the second key unit in the desired turning position, the second damping member provided in the second base plate is held in contact with the circular arc face of the second support member. The contact position between the first damping member and the circular arc face of the first support member and the contact position between the second damping member and the circular arc face of the second support member can respectively be moved without steps. Accordingly, when the first and second key units are held independently from each other in their respective desired turning positions, the turning positions can freely be selected. Thus, the keyboard can be fixed in the most suitable operating state for each user. Each holding mechanism in the first and second key units is simply constructed of the damping member and the circular arc face of the support member, so that the holding mechanisms in the first and second key units can be achieved at lower cost.

Furthermore, the first support plate is turned horizontally about the first turning shaft provided on the first base plate, while the second support plate is turned horizontally about the second turning shaft provided on the second base plate. Accordingly, the first turning shaft will be positioned within the first key unit and the second turning shaft will be positioned within the second key unit. It is therefore possible to surely prevent foreign substances from colliding with and entering the first and second turning shafts as compared with the case where the first and second turning shafts are provided outside the key units. This makes it possible to stably support the first and second key units to be turnable on the first and second base plates respectively. Further, the first and second turning shafts are placed within the associated key units without protruding outside the key units, thereby miniaturizing each keyboard unit.

### BRIEF DESCRIPTION OF DRAWINGS

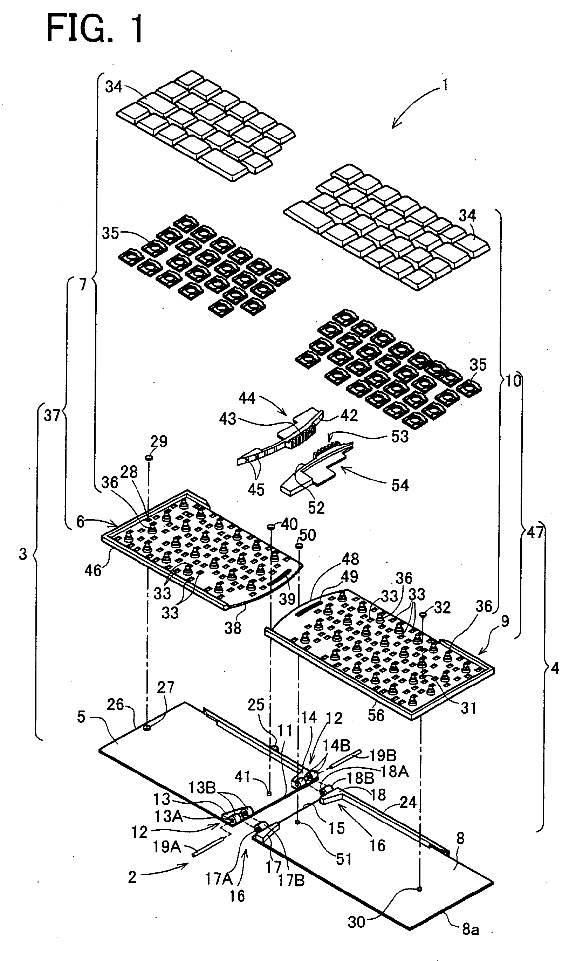

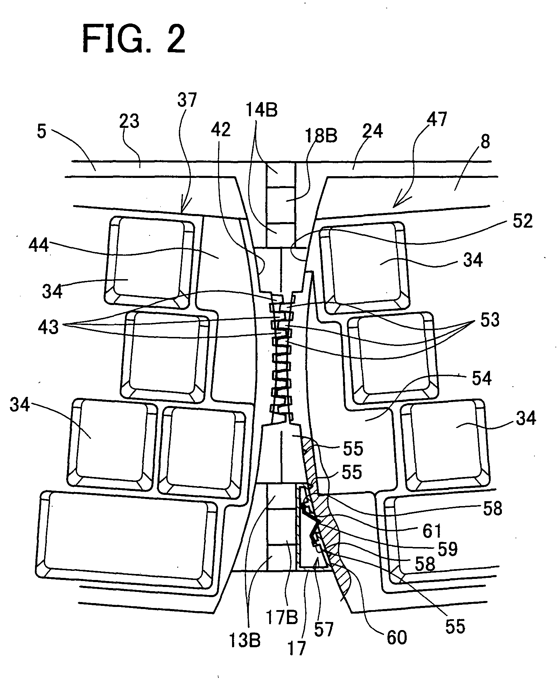

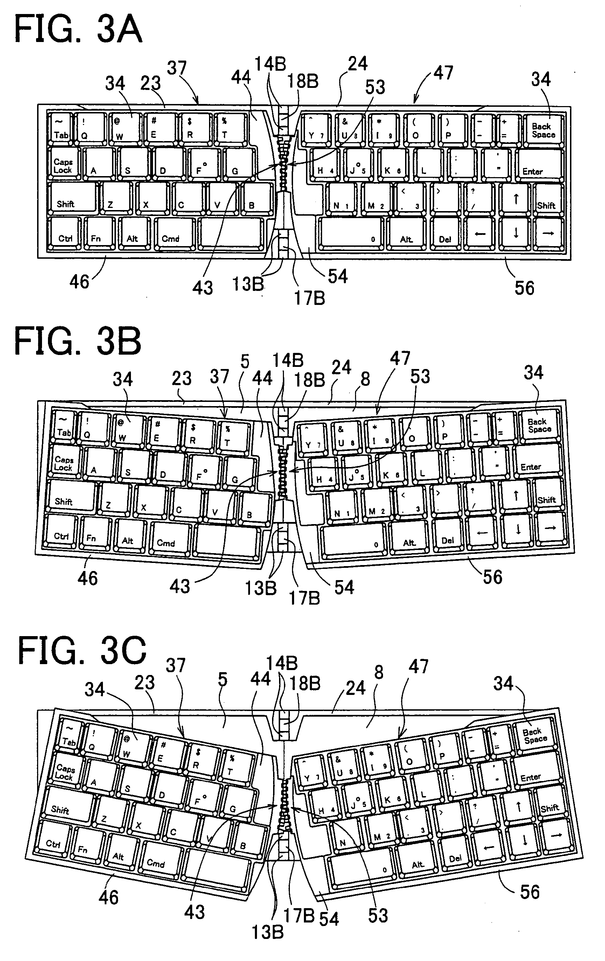

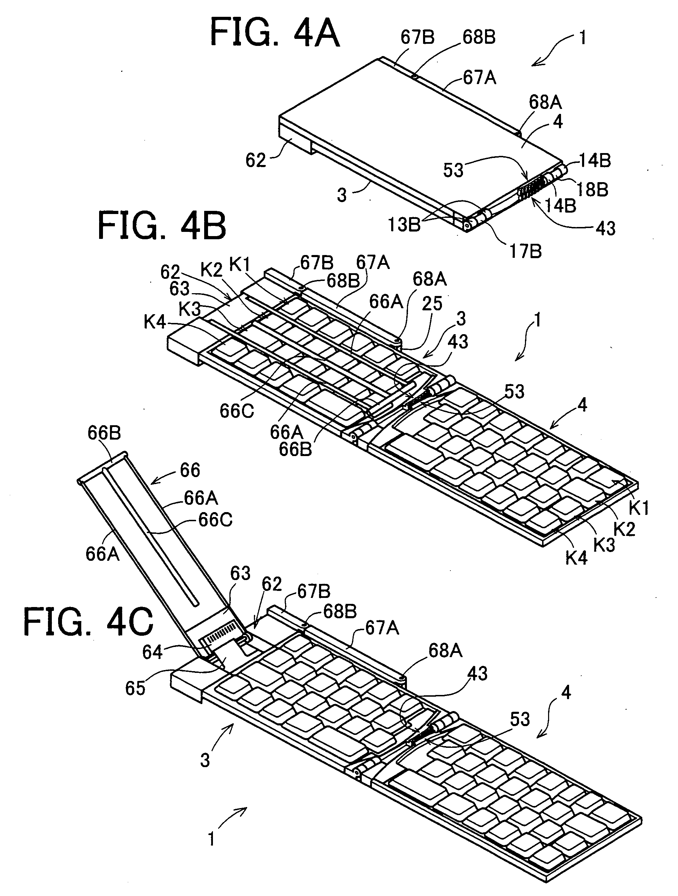

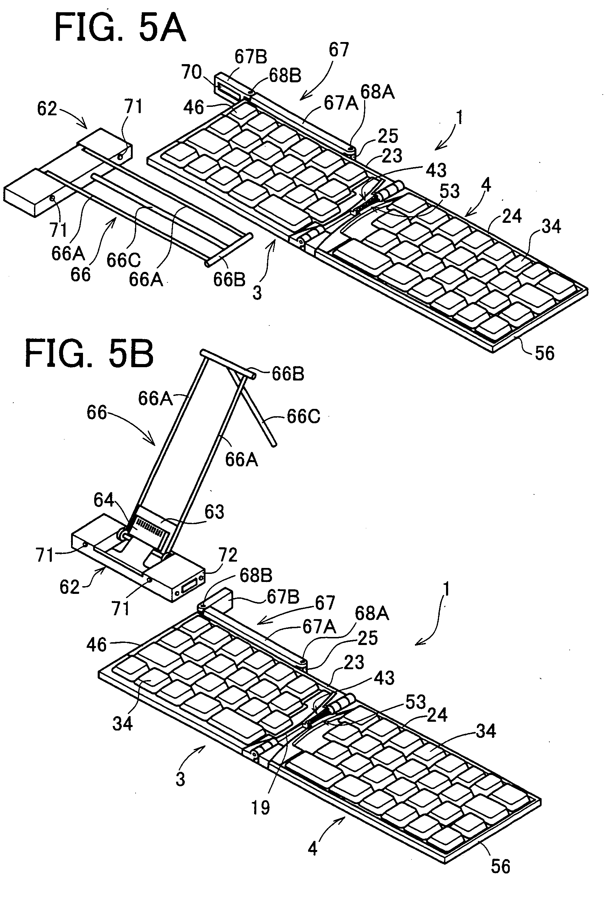

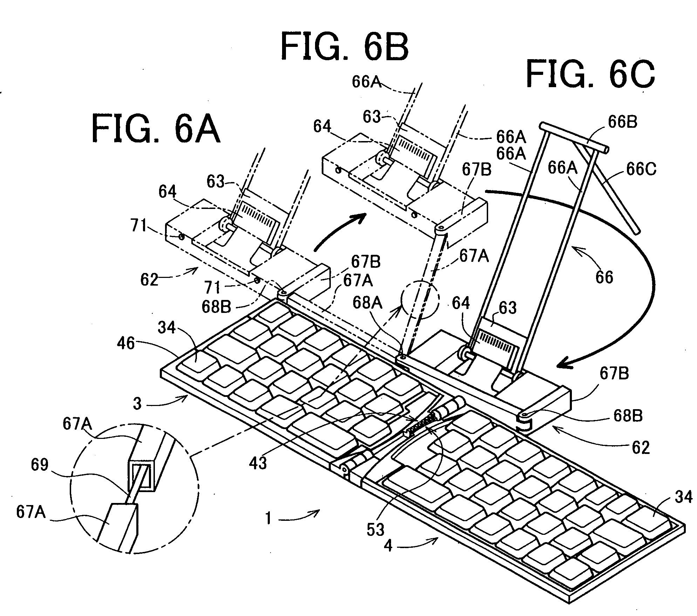

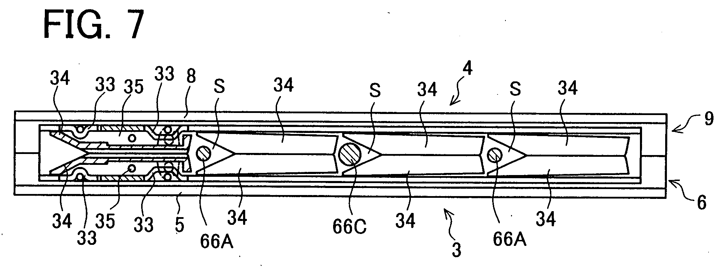

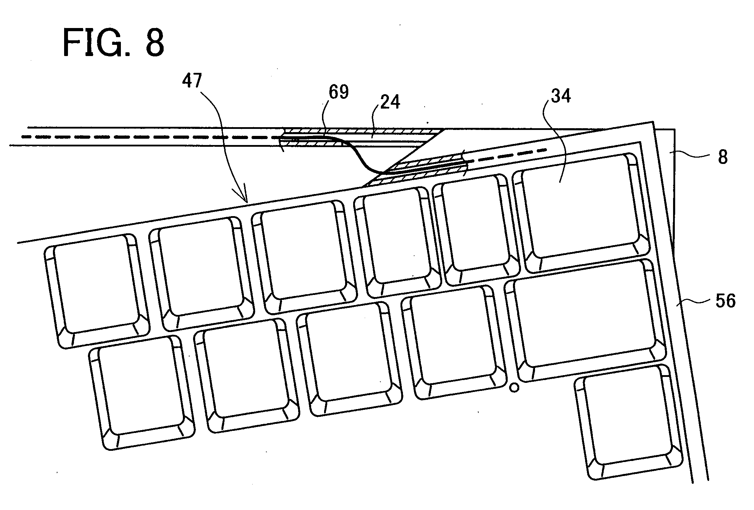

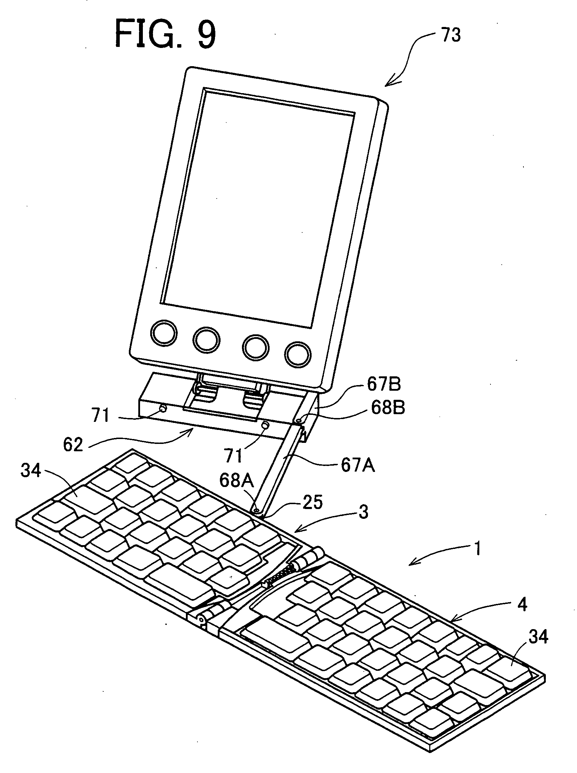

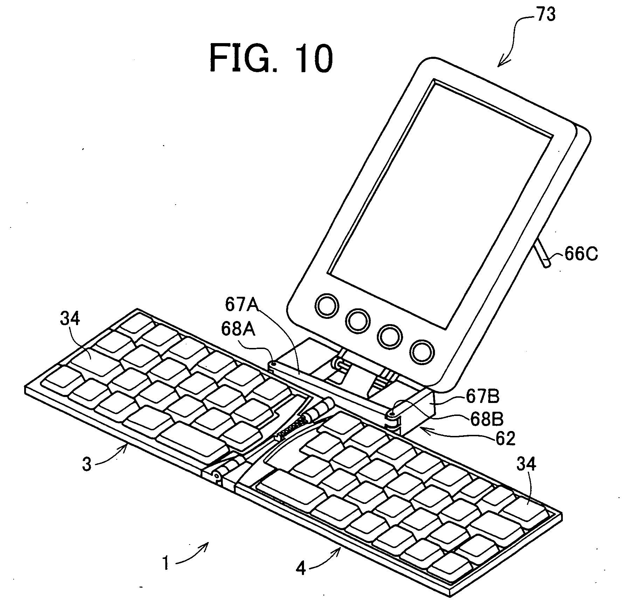

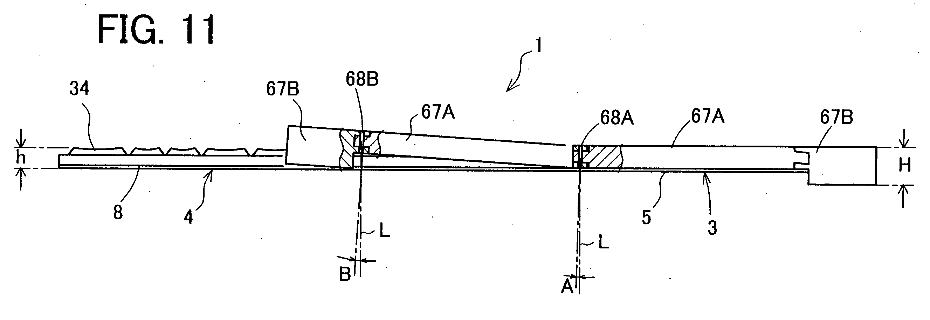

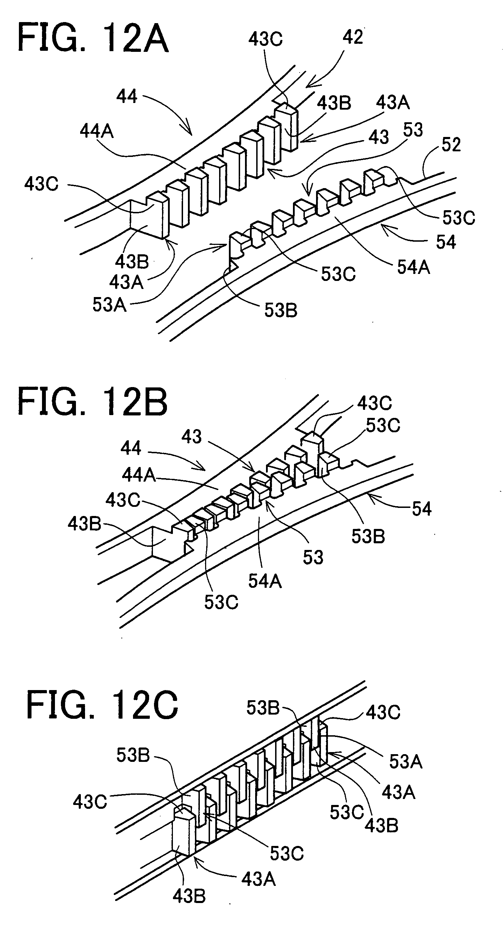

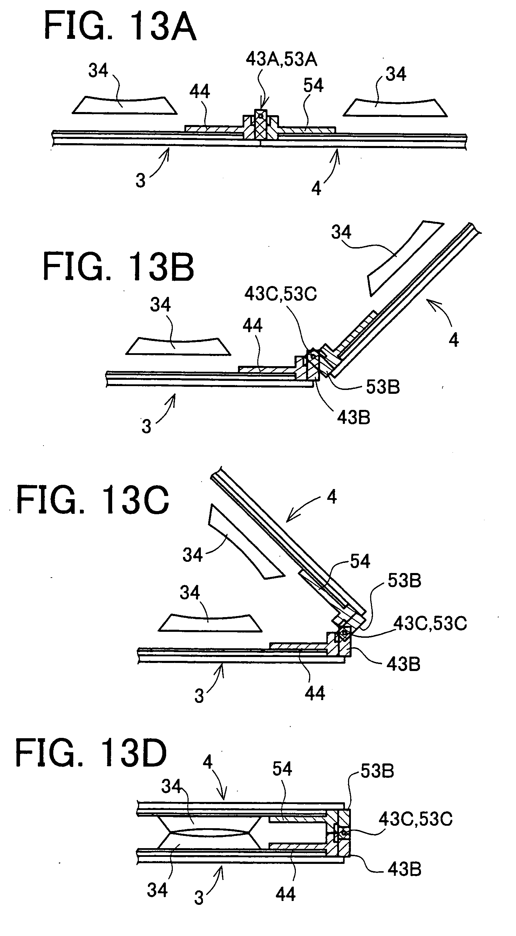

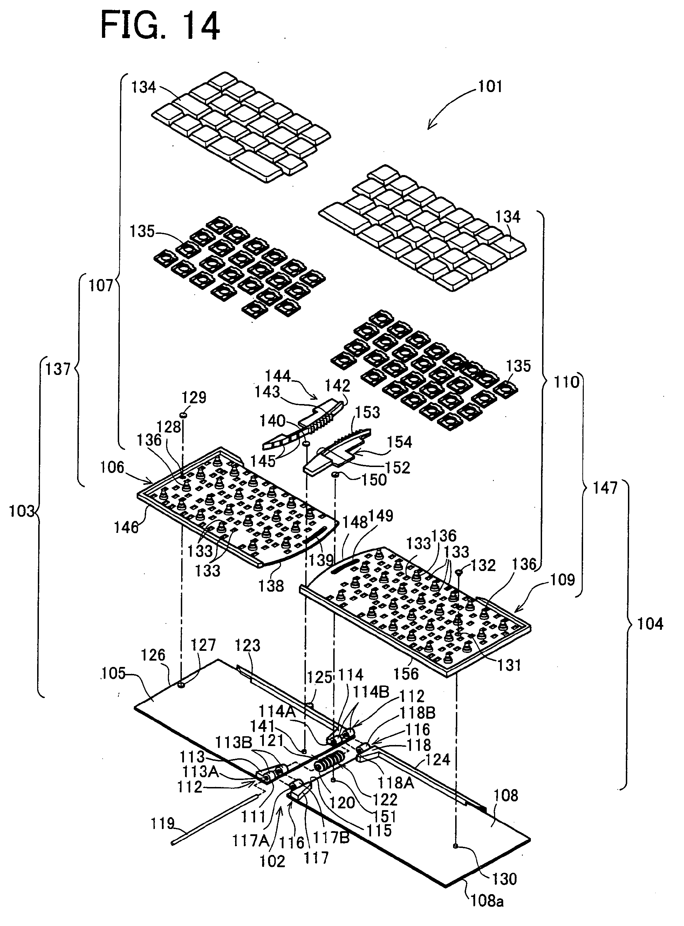

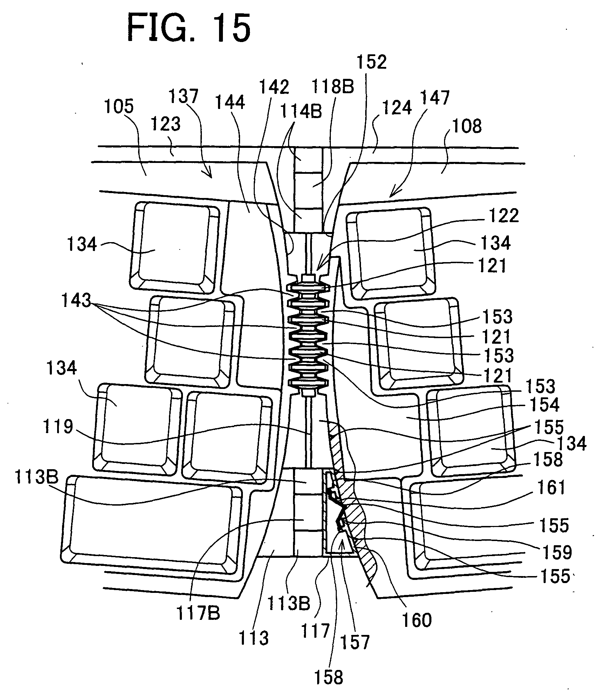

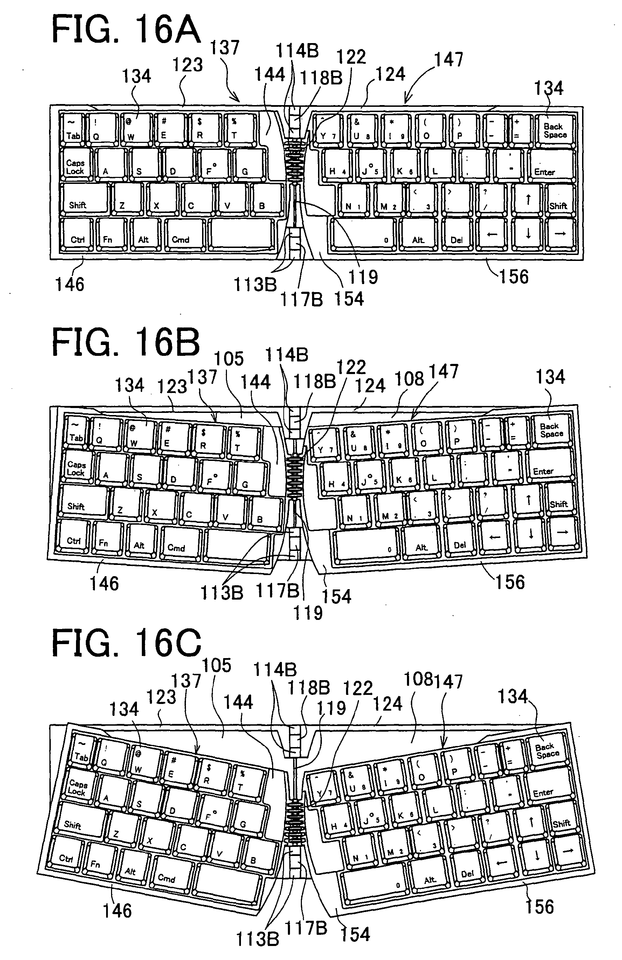

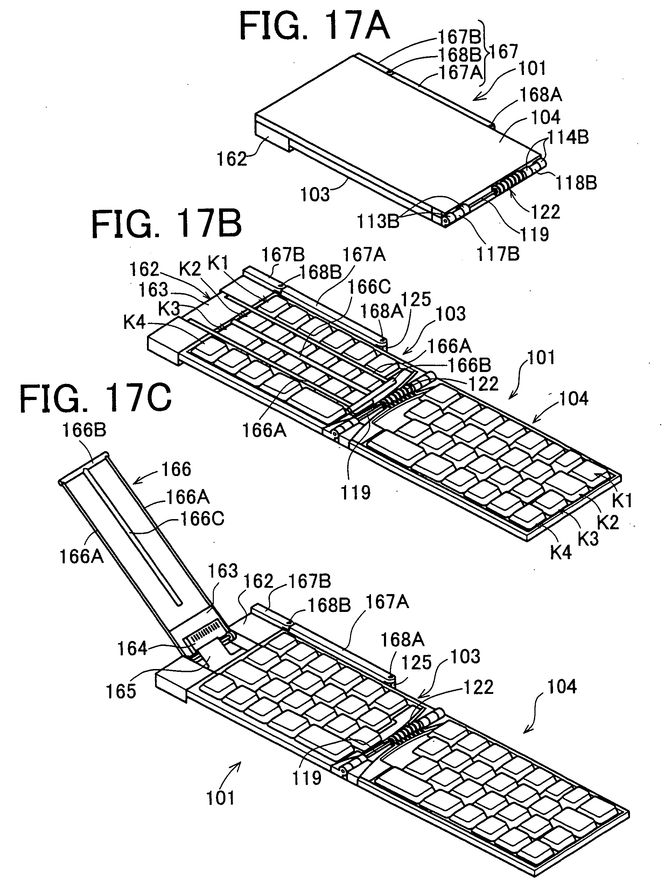

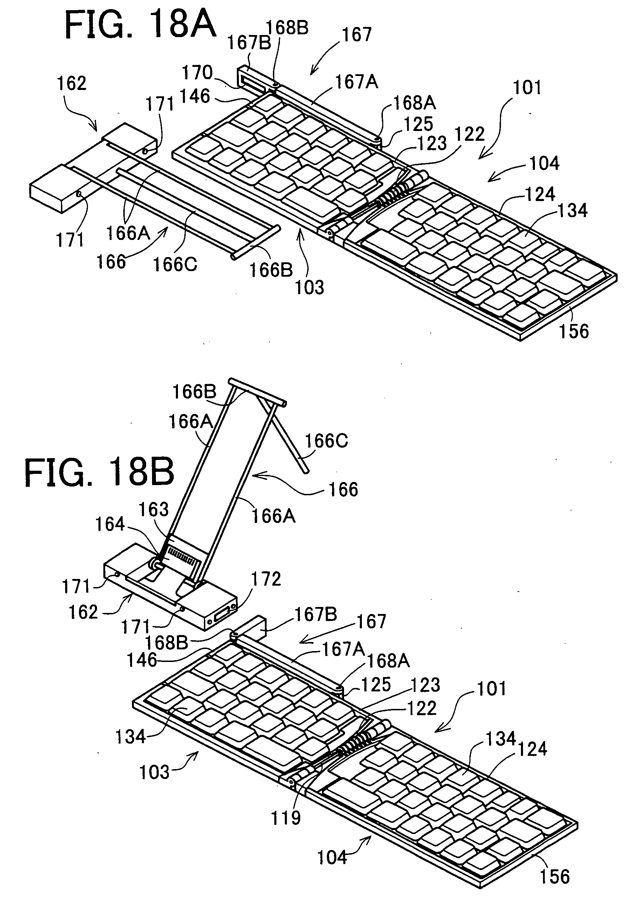

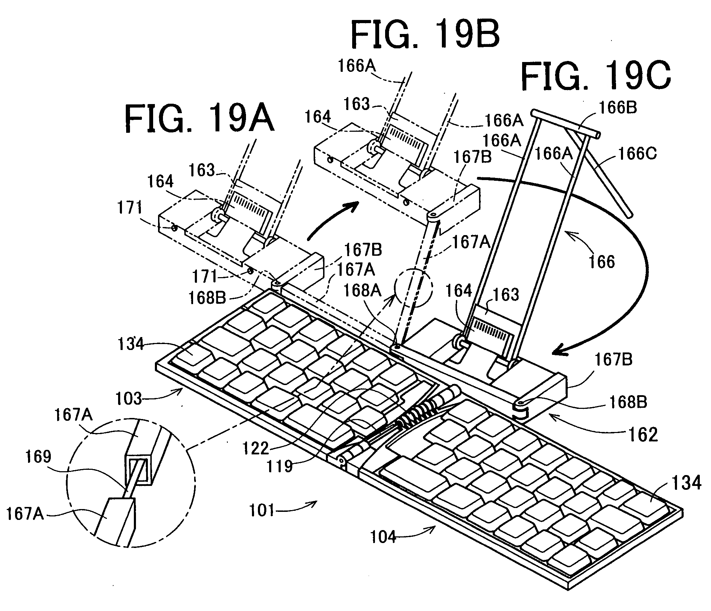

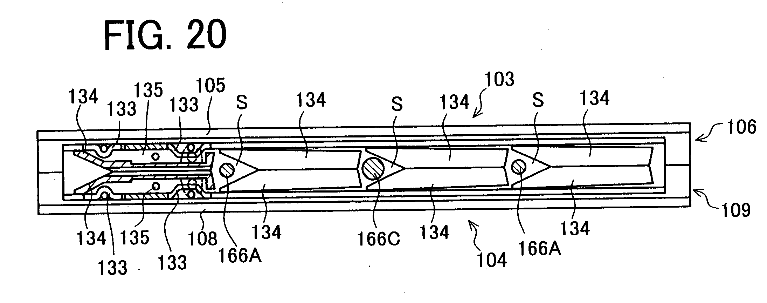

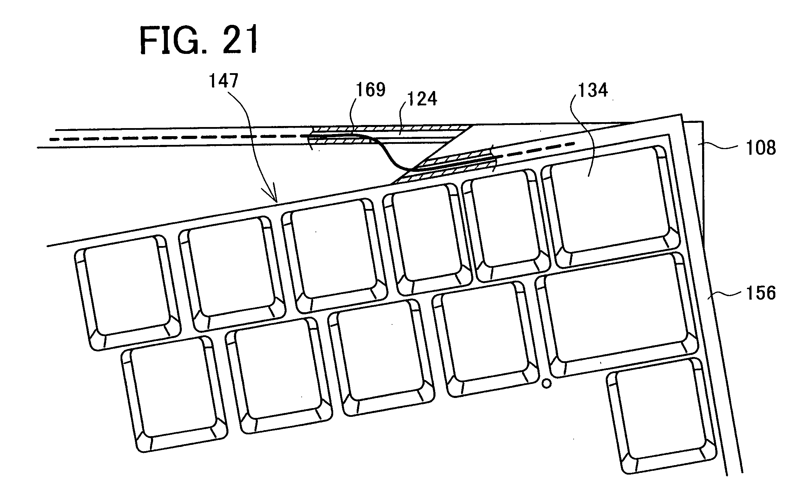

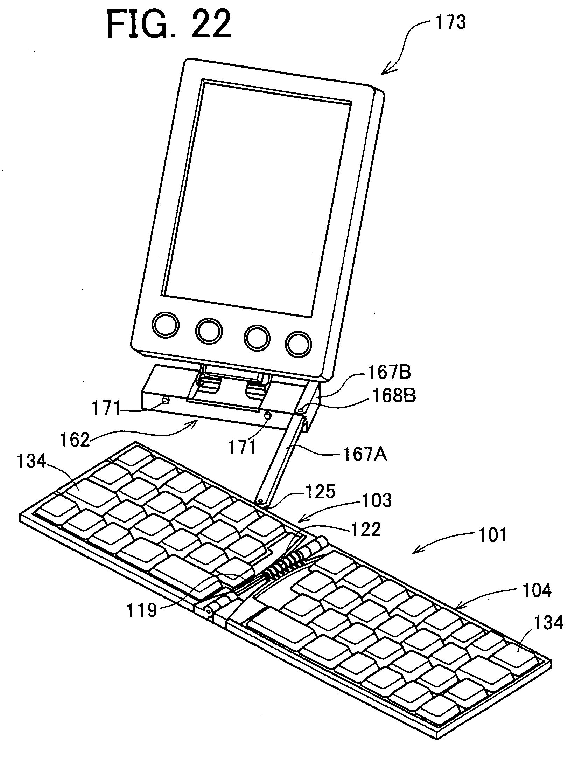

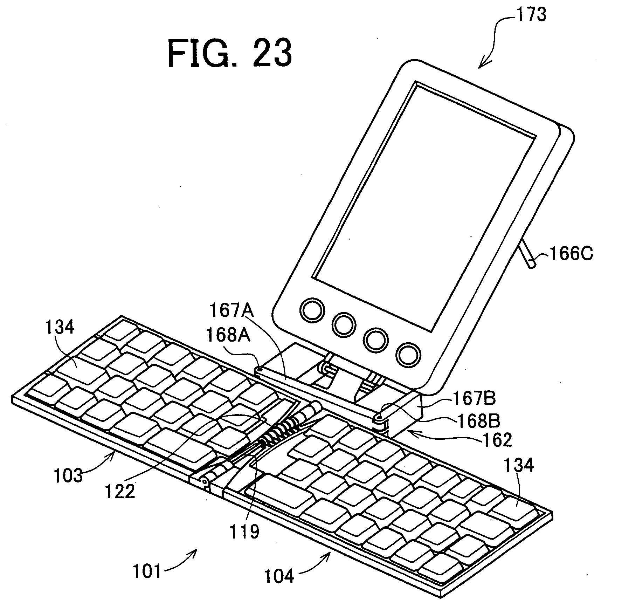

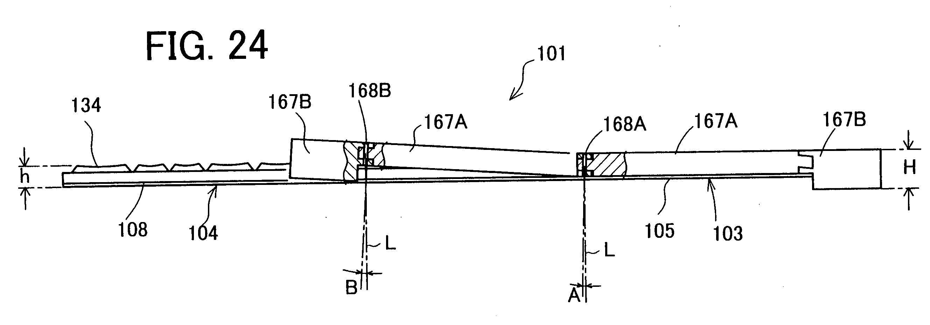

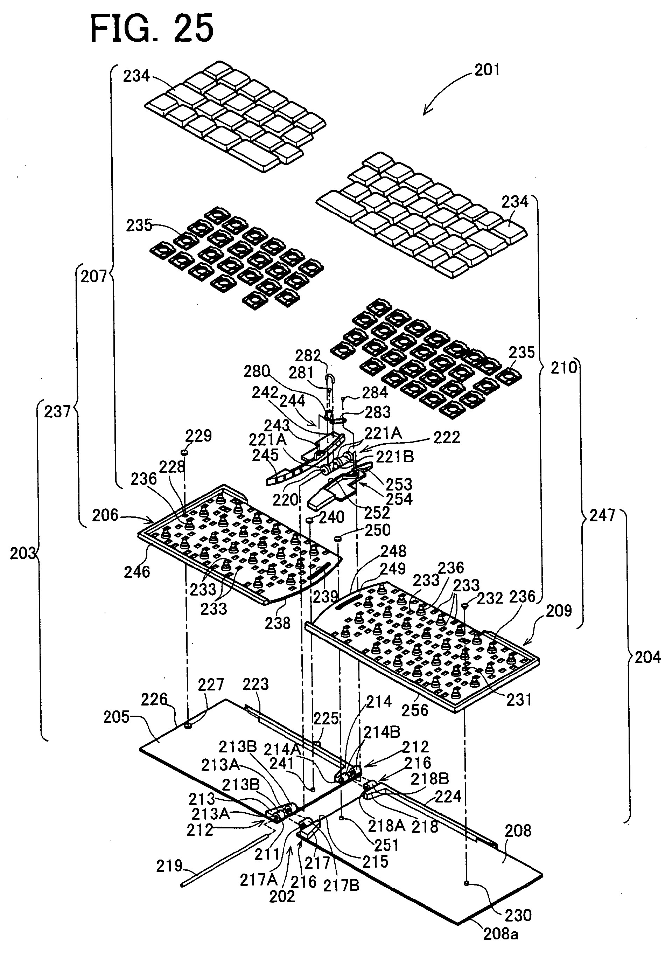

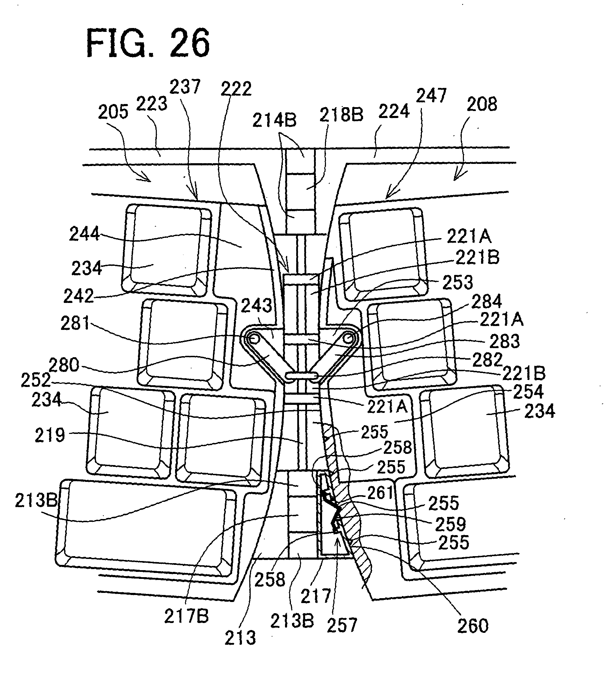

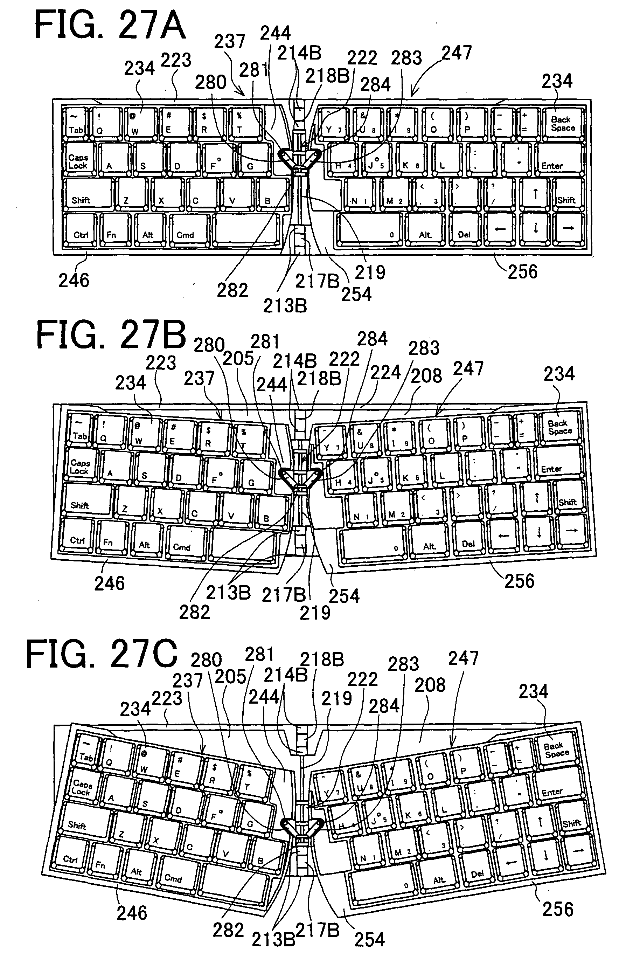

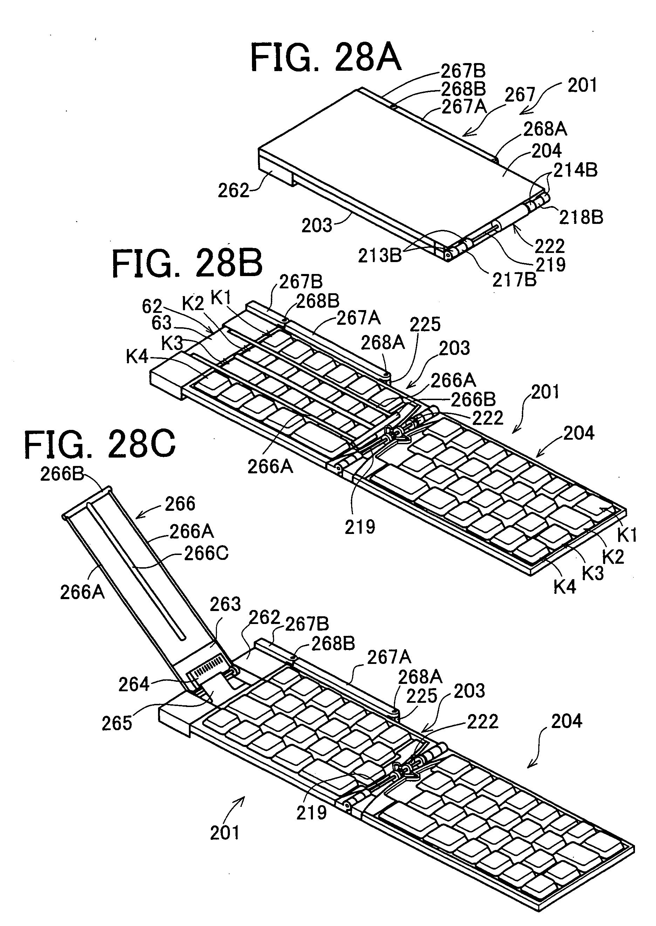

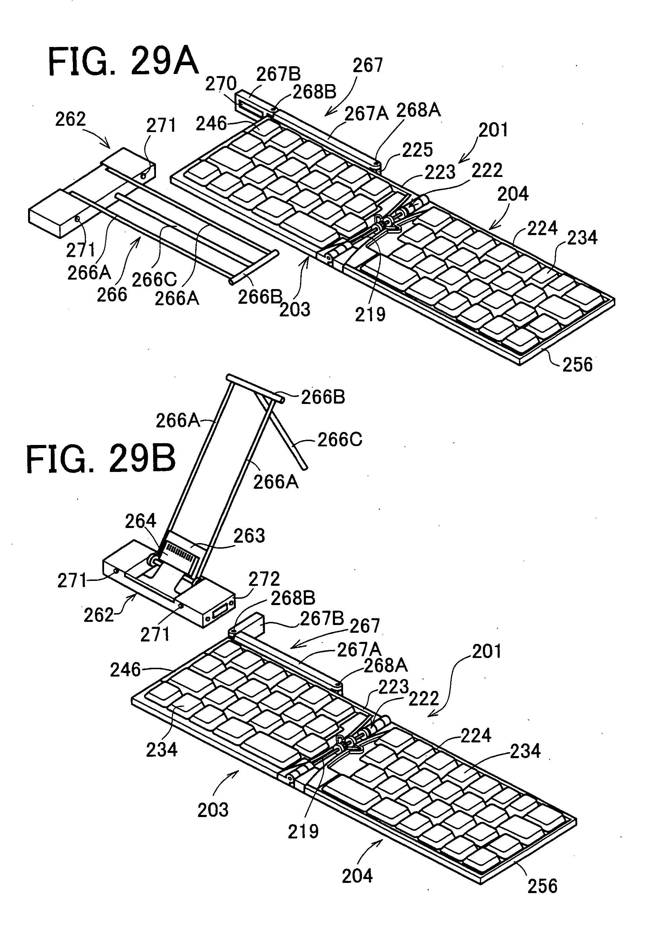

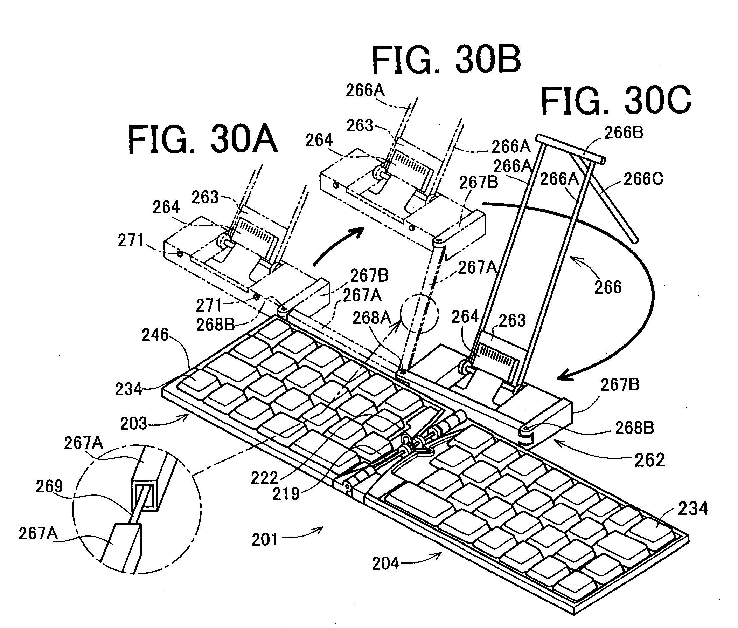

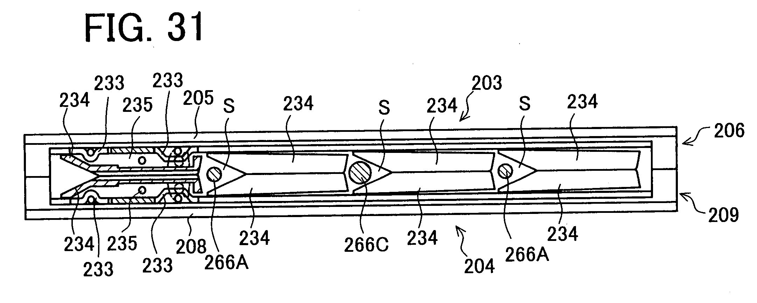

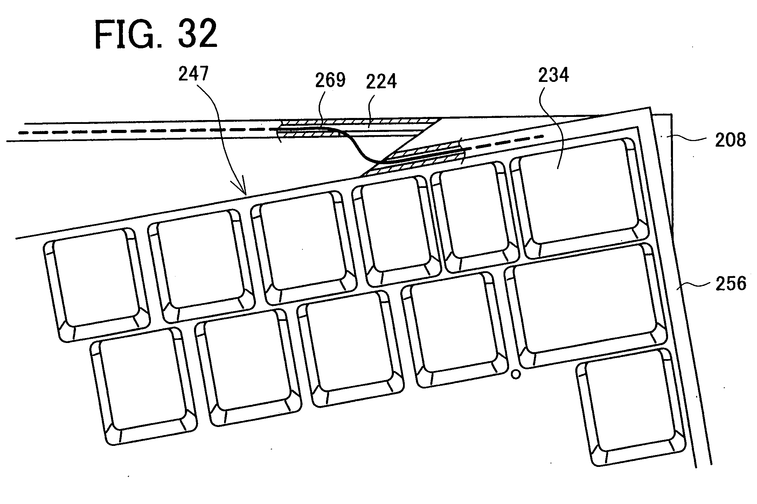

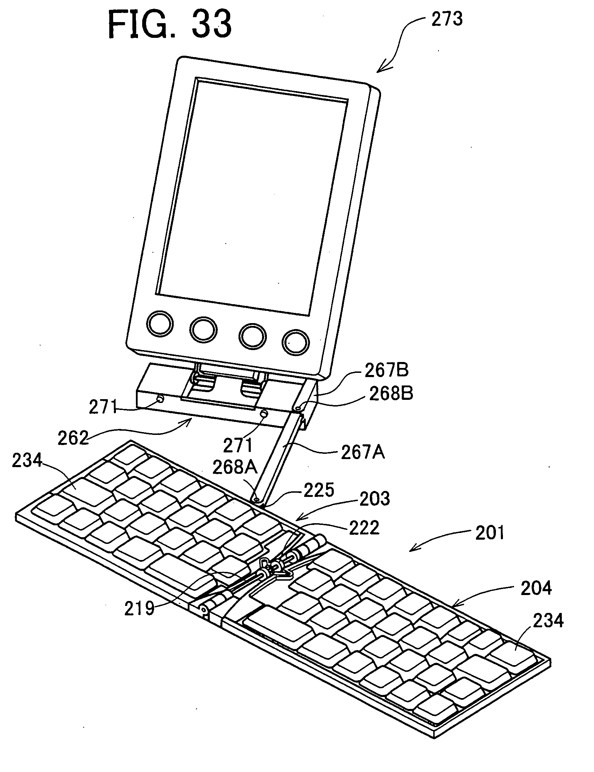

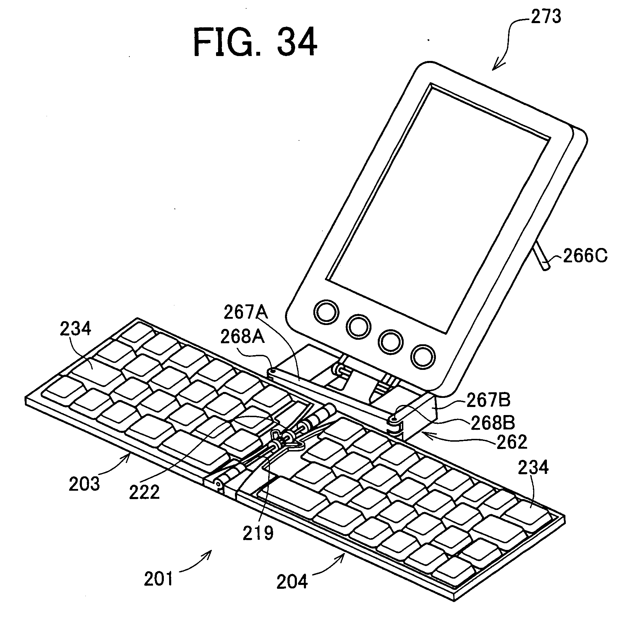

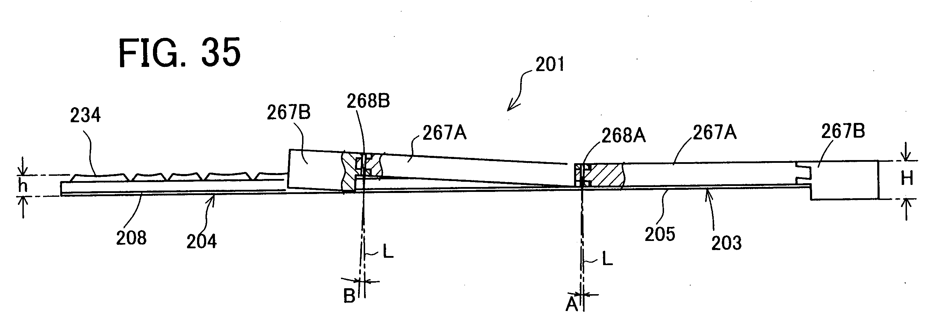

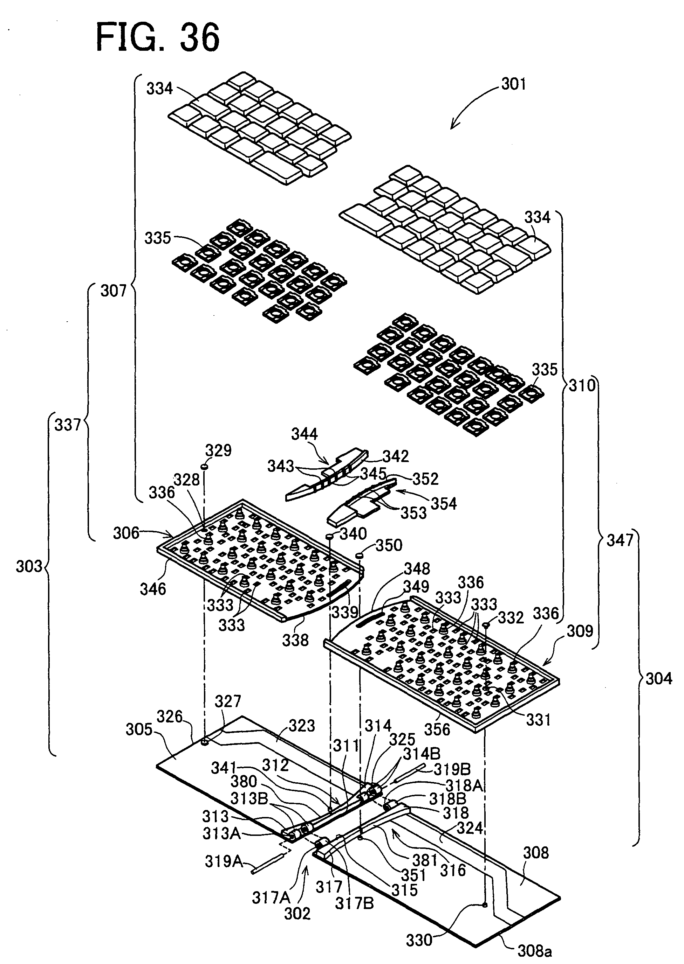

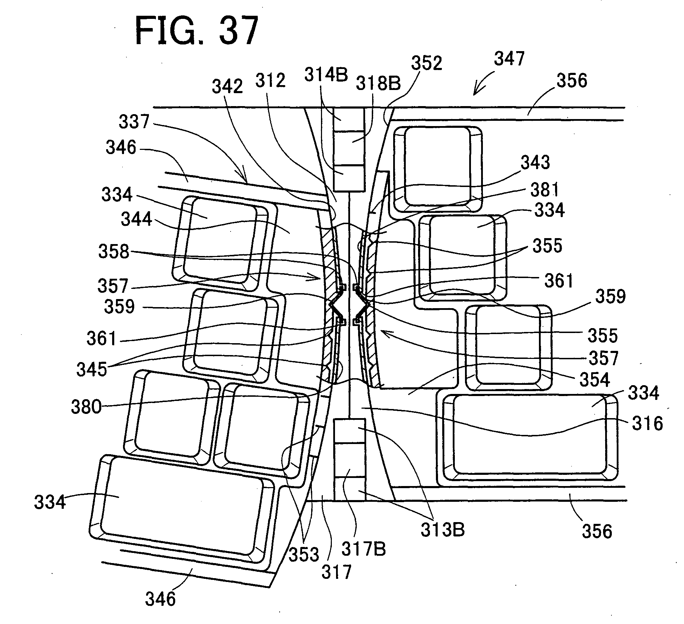

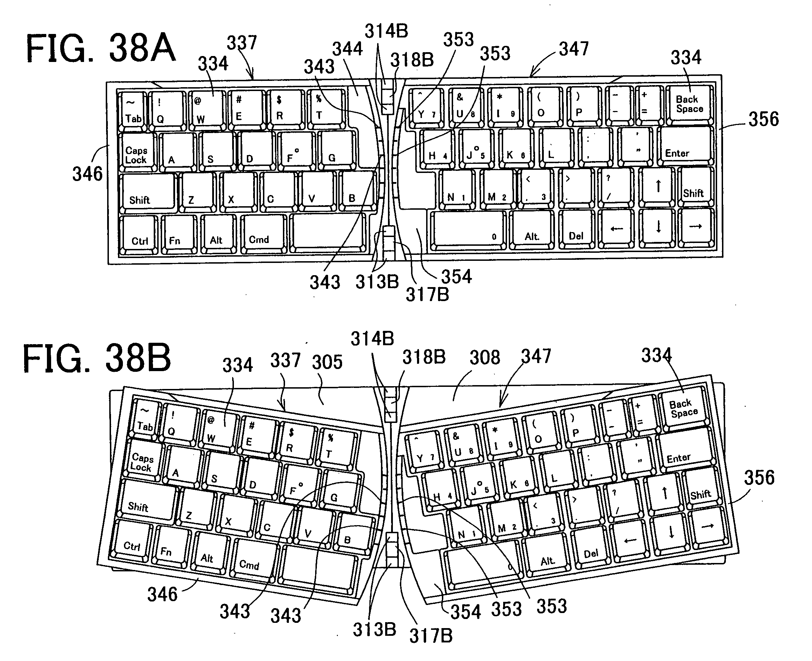

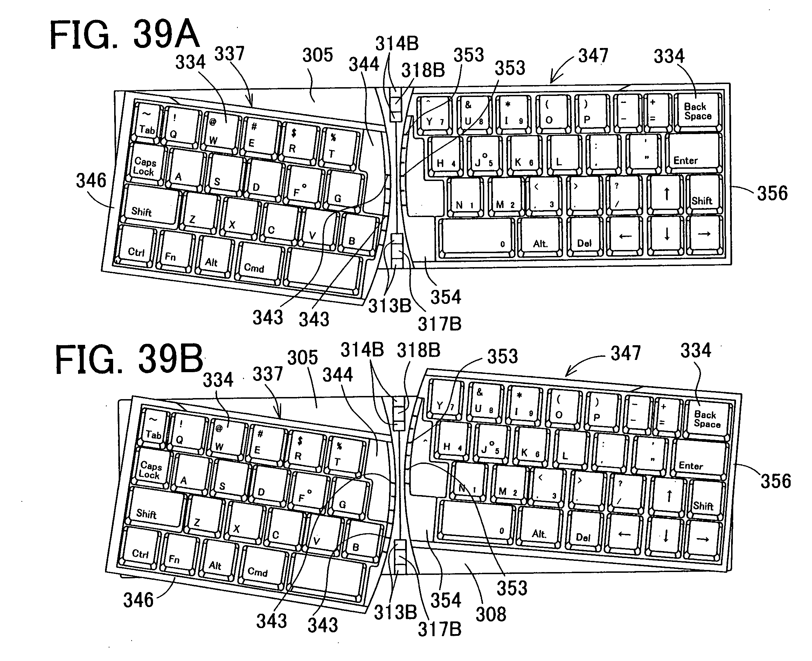

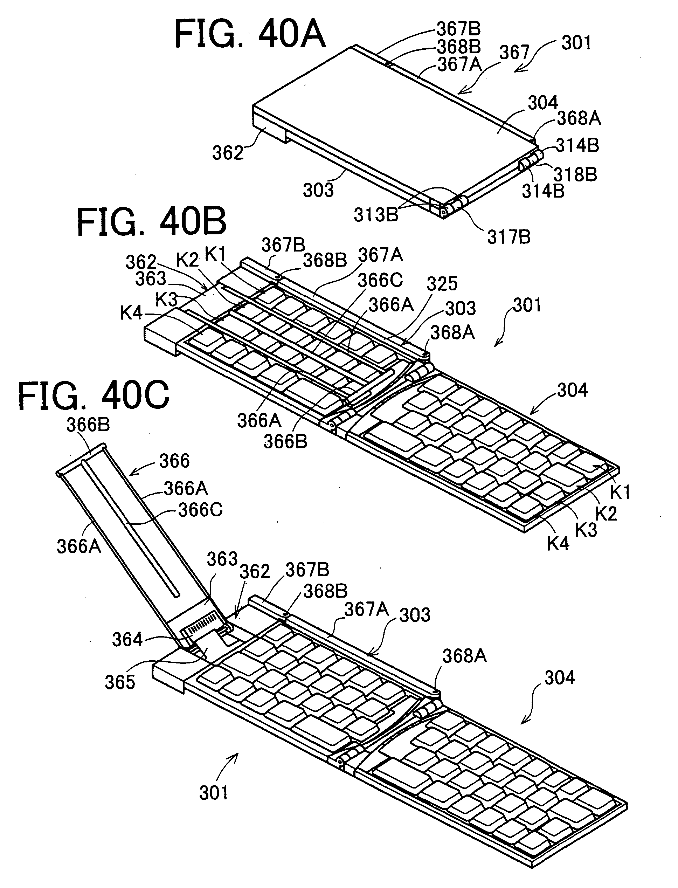

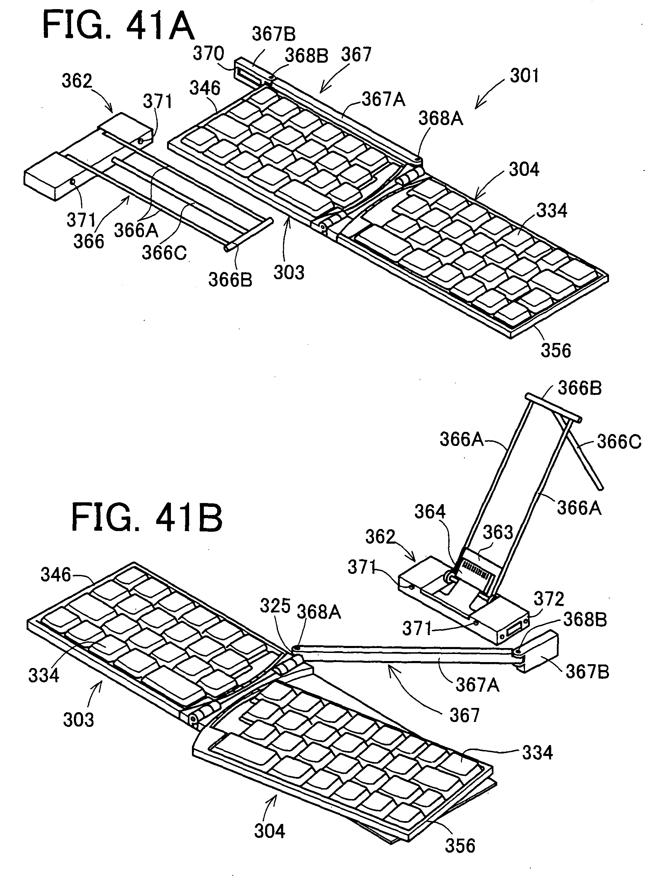

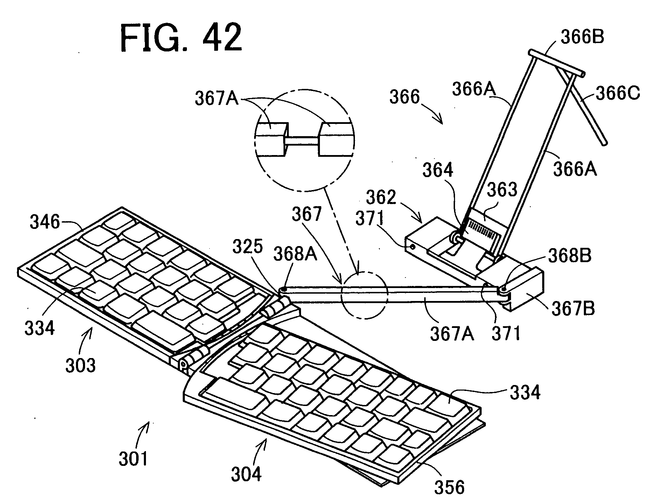

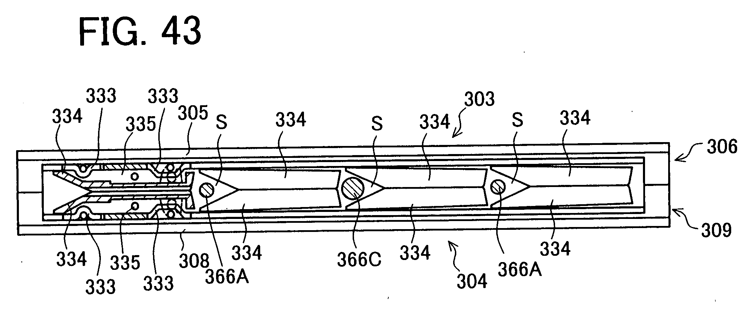

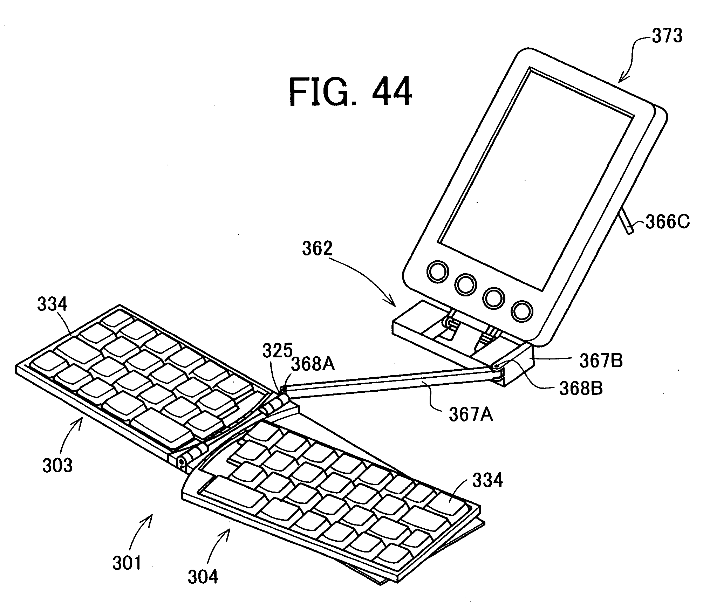

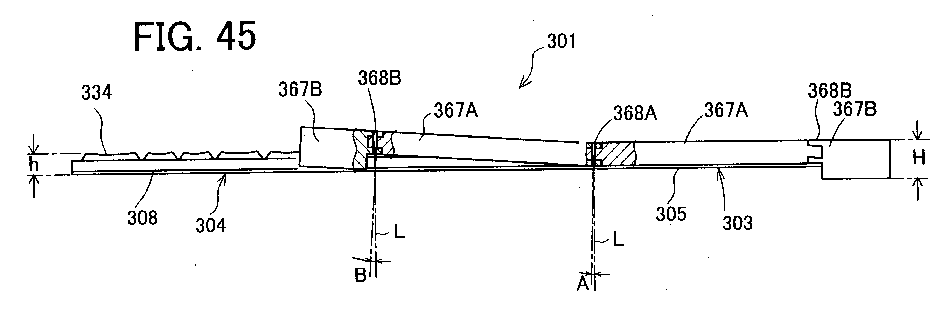

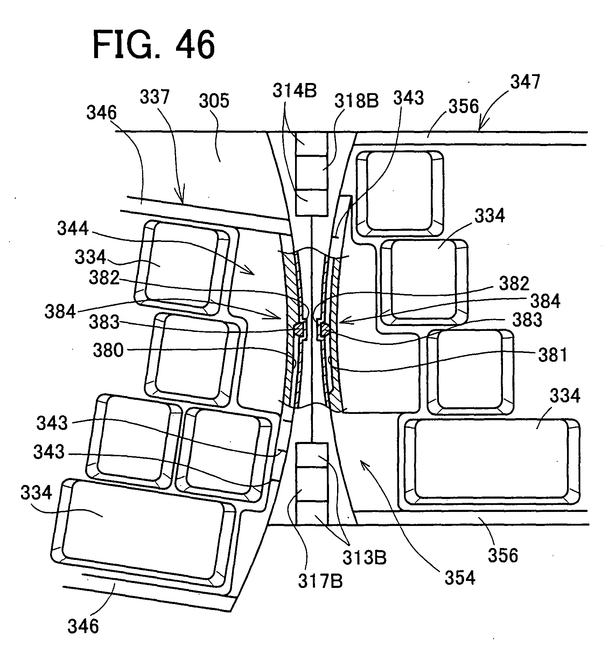

Figs. 1 to 13 are views to explain a foldable keyboard in a first embodiment; Fig. 1 is an exploded perspective view schematically showing the foldable keyboard in the first embodiment; Fig. 2 is an enlarged explanatory view showing a synchronizing system for causing synchronous turning of the first and second support plates; Figs. 3 are explanatory views of the first and second support plates showing in sequence from a state where they are not turned to a state where they have been turned to the maximum turning position, Fig. 3(A) shows a non-turned state, Fig. 3(B) shows a halfway turned state, and Fig. 3(C) shows a fully turned state to the maximum turning position; Figs. 4 are explanatory view showing operations of the keyboard to be used, Fig. 4(A) is a perspective view of a first and second keyboard units in a folded state, Fig. 4(B) is a perspective view of the first and second keyboard units in an opened state, Fig. 4(C) is a perspective view of the first and second keyboard units with a backrest member being raised from a state shown in Fig. 4(B); Figs. 5 are explanatory views showing a relationship between a control part and the keyboard, Fig. 5(A) is an explanatory view showing a state where the control part is detached from the fist keyboard unit, Fig. 5(B) is an explanatory view showing a state where the control part and a jointed-arm are connected to each other; Fig. 6 is an explanatory view of various using state of the jointed-arm; Fig. 7 is an enlarged sectional view of the first and second keyboard units in the folded state shown in Fig. 4(A), showing their sections along a direction (a short side direction) perpendicular to the longitudinal direction of the first and second keyboard units; Fig. 8 is an explanatory view schematically showing a wiring state of signal wires connected to each key switch in the second keyboard unit; Fig. 9 is an explanatory view showing a state where a contact terminal of a PDA is connected to a connector member of the control part, the PDA being held in a slanting position by the backrest member and used in a state of configuration shown in Fig. 6(B); Fig. 10 is an explanatory view showing a state where a contact terminal of a PDA is connected to a connector member of the control part, the PDA being held in a slanting position by the backrest member and used in a state of configuration shown in Fig. 6(C); Fig. 11 is an explanatory view schematically showing the keyboard seen from back in the state shown in Fig. 4(B) and in the state shown in Fig. 6(C); Figs. 12 are enlarged explanatory views of a gear teeth part of a first gear member and a gear teeth part of a second gear member, Fig. 12(A) is an explanatory view showing both gear teeth parts in separate relation for convenience of explanation, Fig. 12(B) is an explanatory view showing the gear teeth parts in engagement relation; Fig. 12(C) is an explanatory view showing the gear teeth parts in the engagement relation in the folded first and second keyboard units; Figs. 13 show sequential states of the first and second keyboard units that are gradually folded from a horizontal using state, Fig. 13(A) is an explanatory view schematically showing the engagement relation between the gear teeth while each keyboard unit is held in a horizontal state, Fig. 13(B) is an explanatory view schematically showing the engagement relation between the gear teeth when the second keyboard unit has been rotated slightly toward the folded state, Fig. 13(C) is an explanatory view schematically showing the engagement relation between the gear teeth established just before completion of the folding of the second keyboard unit which has further been rotated from the state of Fig. 13(B), Fig. 13(D) is an explanatory view schematically showing the engagement relation of the gear teeth in the keyboard units that have been folded completely.
Further, Figs. 14 to 24 are views to explain a foldable keyboard in a second embodiment; Fig. 14 is an exploded perspective view schematically showing the foldable keyboard in the second embodiment; Fig. 15 is an enlarged explanatory view showing a synchronizing system for causing synchronous turning of the first and second support plates; Figs. 16 are explanatory views showing states of the first and second support plates in sequence from a state where they are not turned to a state where they have been turned to the maximum turning position, Fig. 16(A) shows a non-turned state, Fig. 16(B) shows a halfway turned state, and Fig. 16(C) shows a fully turned state to the maximum turning position; Figs. 17 are explanatory views showing operations of the keyboard to be used, Fig. 17(A) is a perspective view of a first and second keyboard units in a folded state, Fig. 17(B) is a perspective view of the first and second keyboard units in an opened state, Fig. 17(C) is a perspective view of the first and second keyboard units with a backrest member being raised from a state shown in Fig. 17(B); Figs. 18 are explanatory views showing a relationship between a control part and the keyboard, Fig. 18(A) is an explanatory view showing a state where the control part is detached from the fist keyboard unit, Fig. 18(B) is an explanatory view showing a state where the control part and a jointed-arm are connected to each other; Fig. 19 is an explanatory view of various using state of the jointed-arm; Fig. 20 is an enlarged sectional view of the first and second keyboard units in the folded state shown in Fig. 17(A), showing their sections along a direction (a short side direction) perpendicular to the longitudinal direction of the first and second keyboard units; Fig. 21 is an explanatory view schematically showing a wiring state of signal wires connected to each key switch in the second keyboard unit; Fig. 22 is an explanatory view showing a state where a contact terminal of a PDA is connected to a connector member of the control part, the PDA being held in a slanting position by the backrest member and used in a state of configuration shown in Fig. 19(B); Fig. 23 is an explanatory view showing a state where a contact terminal of a PDA is connected to a connector member of the control part, the PDA being held in a slanting position by the backrest member and used in a state of configuration shown in Fig. 19(C); Fig. 24 is an explanatory view schematically showing the keyboard seen from back in the state shown in Fig. 17(B) and in the state shown in Fig. 19(C).
Furthermore, Figs. 25 to 35 are views to explain a foldable keyboard in a third embodiment; Fig. 25 is an exploded perspective view schematically showing the foldable keyboard in the third embodiment; Fig. 26 is an enlarged explanatory view showing a synchronizing system for causing synchronous turning of the first and second support plates; Figs. 27 explanatory views showing states of the first and second support plates in sequence from a state where they are not turned to a state where they have been turned to the maximum turning position, Fig. 27(A) shows a non-turned state, Fig. 27(B) shows a halfway turned state, and Fig. 27(C) shows a fully turned state to the maximum turning position; Figs. 28 are explanatory views showing operations of the keyboard to be used, Fig. 28(A) is a perspective view of a first and second keyboard units in a folded state, Fig. 28(B) is a perspective view of the first and second keyboard units in an opened state, Fig. 28(C) is a perspective view of the first and second keyboard units with a backrest member being raised from a state shown in Fig. 28(B); Figs. 29 are explanatory views showing a relationship between a control part and the keyboard, Fig. 29(A) is an explanatory view showing a state where the control part is detached from the fist keyboard unit, Fig. 29(B) is an explanatory view showing a state where the control part and a jointed-arm are connected to each other; Fig. 30 is an explanatory view of various using state of the jointed-arm; Fig. 31 is an enlarged sectional view of the first and second keyboard units in the folded state shown in Fig. 28(A), showing their sections along a direction (a short side direction) perpendicular to the longitudinal direction of the first and second keyboard units; Fig. 32 is an explanatory view schematically showing a wiring state of signal wires connected to each key switch in the second keyboard unit; Fig. 33 is an explanatory view showing a state where a contact terminal of a PDA is connected to a connector member of the control part, the PDA being held in a slanting position by the backrest member and used in a state of configuration shown in Fig. 30(B); Fig. 34 is an explanatory view showing a state where a contact terminal of a PDA is connected to a connector member of the control part, the PDA being held in a slanting position by the backrest member and used in a state of configuration shown in Fig. 30(C); Fig. 35 is an explanatory view schematically showing the keyboard seen from back in the state shown in Fig. 28(B) and in the state shown in Fig. 30(C).
Moreover, Figs. 36 to 46 are views to explain a foldable keyboard in a fourth embodiment; Fig. 36 is an exploded perspective view schematically showing the foldable keyboard in the fourth embodiment; Fig. 37 is an enlarged explanatory view of a locking mechanism for locking the first and second support plates in respective turning positions to which they have been turned independently; Fig. 38 is an explanatory view showing a first and a second key units which have been turned from a non-turned state to a desired turning position, Fig. 38(A) shows a non-turned state of the first and second key units, Fig. 38(B) is an explanatory view showing a state where the first key unit has been turned clockwise while the second key unit has been turned counterclockwise; Figs. 39 show states where the first and second key units have been turned to the desired turning positions, Fig. 39(A) shows a state where only the first key unit 37 has been turned from the state of Fig. 38(A), Fig. 39(B) is an explanatory view showing the state where the second key unit 4 has been turned clockwise from the state of Fig. 39(A); Figs. 40 are explanatory views showing operations of the keyboard to be used, Fig. 40(A) is a perspective view of a first and second keyboard units in a folded state, Fig. 40(B) is a perspective view of the first and second keyboard units in an opened state, Fig. 40(C) is a perspective view of the first and second keyboard units with a backrest member being raised from a state shown in Fig. 40(B); Figs. 41 are explanatory views showing a relationship between a control part and the keyboard, Fig. 41(A) is an explanatory view showing a state where the control part is detached from the fist keyboard unit, Fig. 41(B) is an explanatory view showing a state where the control part and a jointed-arm are connected to each other; Fig. 42 is an explanatory view of various using state of the jointed-arm; Fig. 43 is an enlarged sectional view of the first and second keyboard units in the folded state shown in Fig. 40(A), showing their sections along a direction (a short side direction) perpendicular to the longitudinal direction of the first and second keyboard units; Fig. 44 is an explanatory view showing a state where a contact terminal of a PDA is connected to a connector member of the control part, the PDA being held in a slanting position by the backrest member and used; Fig. 45 is an explanatory view schematically showing the keyboard 1 seen from back in the state shown in Fig. 40(B); Fig. 46 is an enlarged explanatory view showing a holding mechanism for holding the first and second key units in respective turning positions.

### BEST MODE FOR CARRYING OUT THE INVENTION

### (1) First embodiment

A first embodiment of a foldable keyboard embodying the present invention will be explained below with reference to attached drawings. At first, a schematic structure of the keyboard in the first embodiment is described referring to Fig. 1. Fig. 1 is an exploded perspective view schematically showing the foldable keyboard.

In Fig. 1, the keyboard 1 is basically structured of a first keyboard unit 3 and a second keyboard unit 4 which are rotatably connected with each other by a rotational connecting part 2. The first keyboard unit 3 includes a first base plate 5, a first support plate 6 mounted to be rotatable in a horizontal direction on the first base plate 5, and a plurality of key switches 7 arranged on the first support plate 6. The second keyboard unit 4 includes a second base plate 8, a second support plate 9 mounted to be rotatable in a horizontal direction on the second base plate 8, and a plurality of key switches 10 arranged on the second support plate 9.

At first, the structure of the rotational connecting part 2 is explained below. The first base plate 5 is made of a thin metal plate, e.g., aluminum plate. This first base plate 5 is provided, at two corners 12 in a side edge 11 (a right side edge in Fig. 1), with resinous bearing members 13 and 14 each constituting part of the rotational connecting part 2. The bearing member 13 is provided with two bearings 13B spaced apart, each being formed with a bearing hole 13A. The bearing member 14 is similarly provided with two bearings 14B spaced apart, each being formed with a bearing hole 14A.

As with the first base plate 5, the second base plate 8 is made of a thin metal plate, e.g., aluminum plate. This second base plate 8 is provided, at two corners 16 in a side edge 15 (a left side edge in Fig. 1), with resinous bearing members 17 and 18. The bearing member 17 is provided with a single bearing 17B formed with a bearing hole 17A. The bearing member 18 is similarly provided with a single bearing 18B formed with a bearing hole 18A. The bearing 17B is fitted between the bearings 13B so that the bearing hole 17A of the bearing 17B is aligned with the bearing holes 13A of the bearings 13B. Further, the bearing 18B is fitted between the bearings 14B so that the bearing hole 18A of the bearing 18B is aligned with the bearing holes 14A of the bearings 14B. In the bearing holes 13A and 17A arranged in line as above, a support shaft 19A is inserted. In the bearing holes 14A and 18A, a support shaft 19B is inserted. Thus, the first base plate 5 and the second base plate 8 are held to be mutually rotatable by the two support shafts 19A and 19B.

It is to be noted that the bearing member 14 is integrally formed with a hollow peripheral wall member 23 and the bearing member 18 is integrally formed with a hollow peripheral wall member 24. A signal wire 69 (mentioned later) for connecting each key switch 10 provided in the second keyboard unit 4 to a control part 62 (mentioned later) is laid in the inside of the peripheral wall member 24. This signal wire 69 extends through the hollow bearing member 18 and the bearing 18B to the outside and is wound around the support shaft 19B, and extends through the hollow bearing member 14 to the peripheral wall member 23. A signal wire (not shown) for connecting each key switch 7 provided in the first keyboard unit 3 to the control part 62 is laid in the inside of the peripheral wall member 23. This signal wire and the signal wire 69 extending from the second keyboard unit 4 through the peripheral wall member 24 are collected up to be laid in a jointed-arm 67 (mentioned later). An arm supporting part 25 is formed to be hollow on the back of the peripheral wall member 23 and pivotally supports the jointed-arm 67. Through the arm supporting part 25, the signal wires laid as above are set in the jointed-arm 67.

In the first base plate 5, a screw seat 27 is formed near a side edge 26 opposite the side edge 11 and in substantially the center. A screw 29, passing with play through a screw hole 28 in the first support plate 6, is screwed in the screw seat 27. Thus, on the first base plate 5, the first support plate 6 is mounted to be horizontally turnable about the screw 29 and the screw seat 27 serving as a turning axis. In the second base plate 8, similarly, a screw seat 30 is formed slightly inwardly (corresponding to the width of the control part 62 mentioned later) from a side edge 8a opposite the side edge 15 and in substantially the center. A screw 32, passing with play through a screw hole 31 in the second support plate 9, is screwed in the screw seat 30. Accordingly, on the second base plate 8, the second support plate 9 is mounted to be horizontally turnable about the screw 32 and the screw seat 30 serving as a turning axis.

The first support plate 6 in the first keyboard unit 3 is made of a thin metal plate, e.g., aluminum plate, on which there are arranged a predetermined number of key switches 7 which are operated by the user's left hand. It is to be noted that the number of key switches 7 is determined based on the ISO International Standards (ISO 2126 and ISO 2530).

The first support plate 6 is integrally formed with four supporting parts 33 per one key switch 7 by press working or other techniques. On the first support plate 6, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 33 is formed protruding upward through each hole formed in the membrane switch.

Each key switch 7 is mainly constructed of a key top 34, a pair of link members 35 for vertically guiding the key top 34, and a rubber spring 36 which is disposed on the membrane switch in a position corresponding to a switching part comprised of the movable electrode and the fixed electrode of the membrane switch and urges the key top 34 upward. Each upper end of the pair of link members 35 is movably connected with the key top 34 on its lower surface and each lower end of the link members 35 is movably engaged in each supporting part 33. During non-depression, the key top 34 is urged upward by the urging force of the rubber spring 36 and held in a non-depression position. When the key top 34 is pressed down against the urging force of the rubber spring 36, the rubber spring 36 pushes the movable electrode of the membrane switch to bring the movable electrode into contact with the fixed electrode in the switching hole, thereby performing a switching operation. The above mentioned key switches 7 and the first support plate 6 constitute a first key unit 37. The structure of each key switch 7 is well known in the art and the detailed explanation thereof is omitted herein.

The first support plate 6 is formed, in one side (the right side in Fig. 1), with a circular arc face 38 coincident with the turning radius of the first support plate 6 which turns about the turning axis (i.e., the screw 29 passing through the screw hole 28 with play and the screw seat 27). The first support plate 6 is also formed with an arcuate slot 39 inwardly from the circular arc face 38. A screw 40 passes with play through this arcuate slot 39 and is screwed in a screw seat 41 formed in the first base plate 5. The slot 39 and the screw 40 serve to guide the first support plate 6 so that it is stably turned in a horizontal direction on the first base plate 5.

On the side of the first support plate 6 where the circular arc face 38 is formed, there is placed a first gear member 44 with a circular arc face 42 which is equal in curvature radius to the circular arc face 38 and is formed with a gear teeth part 43 engaging with a gear teeth part 53 of a second gear member 54 mentioned later. Further, the circular arc face 42 of the first gear member 44 is formed with a plurality of locking recesses 45 which constitute part of a locking mechanism 57 which will be mentioned later.

As described above, the circular arc face 38 of the first support plate 6 and the circular arc face 42 of the first gear member 44 are configured to have an equal curvature radius. Accordingly, the circular arc faces 38 and 42 coincide with each other. This makes it possible to prevent displacement between the circular arc faces 38 and 42 and improve the appearance of the first key unit 37. The first gear member 44 is set in the first support plate 6 in such a manner as covering the screw 40 and the slot 39 from above, thereby hiding the screw 40 and the slot 39 from view to further improve the appearance of the first key unit 37.

A peripheral wall member 46 is formed in the first support plate 6 except for a part thereof. When the first support plate 6 is mounted on the first base plate 5, the peripheral wall member 46 is joined to the peripheral wall member 23 provided in the first base plate 5 to constitute a peripheral wall member surrounding the periphery of the first support plate 6 except for the circular arc face 38.

The second support plate 9 in the second keyboard unit 4 is made of a thin metal plate, e.g., aluminum plate as with the first support plate 6. On this second support plate 9, there are arranged a predetermined number of key switches 10 which are operated by the user's right hand. It is to be noted that the number of key switches 10 is determined based on the ISO International Standards (ISO 2126 and ISO 2530) and to be larger than the number of key switches 7 arranged on the first support plate 6 which are operated by the user's left hand. Each key switch 10 has an identical structure to each key switch 7 and will accordingly be explained with the same reference numerals.

The second support plate 9 is integrally formed with four supporting parts 33 per one key switch 10 by press working or other techniques. On the second support plate 9, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 33 is formed protruding upward through each hole formed in the membrane switch.

Each key switch 10 is mainly constructed of a key top 34, a pair of link members 35 for vertically guiding the key top 34, and a rubber spring 36 which is disposed on the membrane switch in a position corresponding to a switching part comprised of the movable electrode and the fixed electrode of the membrane switch and urges the key top 34 upward. Each upper end of the pair of link members 35 is movably connected with the key top 34 on its lower surface and each lower end of the link members 35 is movably engaged in each supporting part 33. During non-depression, the key top 34 is urged upward by the urging force of the rubber spring 36 and held in a non-depression position. When the key top 34 is pressed down against the urging force of the rubber spring 36, the rubber spring 36 pushes the movable electrode of the membrane switch to bring the movable electrode into contact with the fixed electrode in the switching hole, thereby performing a switching operation. The above mentioned key switches 10 and the second support plate 9 constitute a second key unit 47.

The second support plate 9 is formed, in one side (the left side in Fig. 1), with a circular arc face 48 coincident with the turning radius of the second support plate 9 which turns about the turning axis (i.e., the screw 31 passing through the screw hole 31 with play and the screw seat 30). The second support plate 9 is also formed with an arcuate slot 49 inwardly from the circular arc face 48. A screw 50 passes with play through this arcuate slot 49 and is screwed in a screw seat 51 formed in the second base plate 8. The slot 49 and the screw 50 serve to guide the second support plate 9 so that it is stably turned in a horizontal direction on the second base plate 8.

On the side of the second support plate 9 where the circular arc face 48 is formed, there is placed a second gear member 54 with a circular arc face 52 which is equal in curvature radius to the circular arc face 48 and is formed with a gear teeth part 53 engaging with the gear teeth part 48 of the first gear member 43. Further, the circular arc face 52 of the second gear member 54 is formed with a plurality of locking recesses 55 (see Fig. 2) which constitute part of a locking mechanism 57 which will be mentioned later.

As described above, the circular arc face 48 of the second support plate 9 and the circular arc face 52 of the second gear member 54 are configured to have an equal curvature radius. Accordingly, the circular arc faces 48 and 52 coincide with each other. This makes it possible to prevent displacement between the circular arc faces 48 and 52 and improve the appearance of the second key unit 47. The second gear member 54 is set in the second support plate 9 in such a manner as covering the screw 50 and the slot 49 from above, thereby hiding the screw 50 and the slot 49 from view to further improve the appearance of the second key unit 47.

A hollow peripheral wall member 56 is formed in the second support plate 9 except for a part thereof. When the second support plate 9 is mounted on the second base plate 8, the peripheral wall member 56 is joined to the peripheral wall member 24 provided in the second base plate 8 to constitute a peripheral wall member surrounding the periphery of the second support plate 9 except for the circular arc face 48.

Next, an explanation is made, referring to Figs. 2 and 3, on a synchronizing mechanism for causing synchronous turning of the first support plate 6 and the second support plate 9 when they are turned horizontally on the first base plate 5 and the second base plate 8 respectively and a locking mechanism for locking the first support plate 6 and the second support plate 9 in respective positions after they are turned by the synchronizing mechanism. Fig. 2 is an enlarged explanatory view showing the synchronizing mechanism for causing the synchronous turning of the first and second support plates 6 and 9. Figs. 3 are explanatory views showing states of the first and second support plates 6 and 9 in sequence from a state where they are not turned to a state where they have been turned to the maximum turning position; Fig. 3(A) shows a non-turned state, Fig. 3(B) shows a halfway turned state, and Fig. 3(C) shows a fully turned state to the maximum turning position.

In Fig. 2, the gear teeth part 43 formed in the circular arc face 42 of the first gear member 44 and the gear teeth part 53 formed in the circular arc face 52 of the second gear member 54 are engaged with each other.

A detailed structure of the gear teeth part 43 of the gear teeth member 44 and the gear teeth part 53 of the second gear member 54 is explained below with reference to Figs. 12. Figs. 12 are enlarged explanatory views of the gear teeth part 43 of the first gear member 44 and the gear teeth part 53 of the second gear member 54; Fig. 12(A) is an explanatory view showing the gear teeth part 43 and the gear teeth part 53 in separate relation for convenience of explanation, Fig. 12(B) is an explanatory view showing the gear teeth part 43 and the gear teeth part 53 in engagement relation; Fig. 12(C) is an explanatory view showing the gear teeth part 43 and the gear teeth part 53 in the engagement relation in the folded first and second keyboard units 3 and 4.

In Fig. 12(A), the gear teeth part 43 of the first gear member 44 includes a plurality of gear teeth 43A formed along the circular arc face 42. Each gear tooth 43A includes a gear portion 43B existing below an upper surface 44A of the gear member 44 and a gear portion 43C formed continuously with the gear portion 43B and protruding upward from the upper surface 44A. The gear teeth part 53 of the second gear member 54 includes a plurality of gear teeth 53A formed along the circular arc face 52. Each gear tooth 53A includes a gear portion 53B existing below an upper surface 54A of the gear member 54 and a gear portion 53C formed continuously with the gear portion 53B and protruding upward from the upper surface 54A.

In the state where the gear teeth part 43 and the gear teeth part 53 are engaged with each other, as shown in Fig. 12(B), the gear portions 43C of the gear teeth 43A and the gear portions 53C of the gear teeth 53A are in engagement relation even above the upper surface 44A of the first gear member 44 and the upper surface 54A of the second gear member 54.

With such engagement relation, the engagement between each gear tooth 43A of the gear teeth part 43 in the first gear member 44 and each gear tooth 53A of the gear teeth part 53 in the second gear member 54 will not be released even in any states changing from the folded state of the first and second keyboard units 3 and 4 to the using state.

A point that the engagement relation between each gear tooth 43A of the gear teeth part 43 and each gear tooth 53A of the gear teeth part 53 is constantly held is explained with reference to Figs. 13. Figs. 13 show sequential states of the first and second keyboard units 3 and 4 that are gradually folded from a horizontal using state; Fig. 13(A) is an explanatory view schematically showing the engagement relation between the gear teeth 43A and 53A while the keyboard units 3 and 4 are held in a horizontal state, Fig. 13(B) is an explanatory view schematically showing the engagement relation between the gear teeth 43A and 53A when the second keyboard unit 4 has been rotated slightly toward the folded state, Fig. 13(C) is an explanatory view schematically showing the engagement relation between the gear teeth 43A and 53A established just before completion of the folding of the second keyboard unit 4 which has further been rotated from the state of Fig. 13(B), Fig. 13(D) is an explanatory view schematically showing the engagement relation of the gear teeth 43A and 53A in the keyboard units 3 and 4 that have been folded completely.

In the using state where each keyboard unit 3, 4 is held horizontally, each gear tooth 43A of the gear teeth part 43 in the first gear member 44 and each gear tooth 53A of the gear teeth part 53 in the second gear member 54 are engaged with each other through the entire gear portions 43B, 43C and the gear portions 53B, 53C as shown in Fig. 12(B). This state is shown in Fig. 13(A).

As shown in Fig. 13(B), as the second keyboard unit 4 is gradually rotated, the engagement between the gear portions 43B of the gear teeth 43A and the gear portions 53B of the gear teeth 53A is released step by step. However, the gear portions 43C and the gear portions 53C are retained in engagement relation.

As shown in Fig. 13(C), as the second keyboard unit 4 is further rotated, the engagement between the gear portions 43B of the gear teeth 43A and the gear portions 53B of the gear teeth 53A is completely released. Even in this case, the gear portions 43C and the gear portions 53C are retained in engagement relation.

When the first and second keyboard units 3 and 4 are fully folded, the gear teeth 43A and the gear teeth 53A are engaged at only the gear portions 43C and the gear portions 53C as shown in Fig. 12(C). This state is shown in Fig. 13(D).

As explained above, each gear tooth 43A of the gear teeth part 43 in the first gear member 44 is constructed of the gear portion 43B existing below the upper surface 44A of the gear member 44 and the gear portion 43C formed continuously with the gear portion 43B to protrude upward above the upper surface 44A. Each gear tooth 53A of the gear teeth part 53 in the second gear member 54 is constructed of the gear portion 53B existing below the upper surface 54A of the gear member 54 and the gear portion 53C formed continuously with the gear portion 53B to protrude upward from the upper surface 54A. Each gear tooth 43A and each gear tooth 53A are engaged with each other. Accordingly, the engagement state between each gear tooth 43A of the gear teeth part 43 and each gear tooth 53A of the gear teeth part 53 can be retained without released even in any states changing from the folded state of the first and second keyboard units 3 and 4 to the using state of the keyboard 1 held horizontally.

The gear teeth part 43 and the gear teeth part 53 are formed in the circular arc faces 42 and 52 respectively, so that the outermost edges of the gear teeth part 43 and the gear teeth part 53 are positioned along a circular arcuate line. Thus, the gear teeth parts 43 and 53 are engaged deeply in part and shallowly in another part, not equally in all parts, as shown in Figs. 2 and 3. Such engagement relation remains unchanged even where the first support plate 6 and the second support plate 9 are turned. However, the engagement relation between the gear teeth parts 43 and 53 will not be released even during the turning of the first and second support plates 6 and 9 because the gear teeth part 43 of the first gear member 44 and the gear teeth part 53 of the second gear member 54 are constantly engaged deeply in part.

In the state where the first and second support plates 6 and 9 are not turned, as shown in Fig. 3(A), each key switch 7 arranged on the support plate 6 and each key switch 10 arranged on the support plate 9 have the same key placement relation as that in a standard keyboard. The gear teeth part 43 of the first gear member 44 and the gear teeth part 53 of the second gear member 54 are engaged shallowly in the upper area in Fig. 3(A) and deeply in the lower area. If the use of the keyboard 1 having the above key placement is desired, needless to say, the keyboard may be operated in this state.

When the first key unit 37 or the second key unit 47 is turned clockwise or counterclockwise in Fig. 3(A) from the state shown in Fig. 3(A), the first support plate 6 and the second support plate 9 are synchronously turned clockwise about the screw 29 and the screw seat 27 serving as the turning axis and counterclockwise about the screw 32 and the screw seat 30 serving as the turning axis, respectively, based on the mutual engagement relation between gear teeth part 43 of the first gear member 44 and the gear teeth part 53 of the second gear member 54. Fig. 3(B) shows the first and second support plates 6 and 9 that have been turned slightly in the above way. If the operation of the keyboard 1 having the above key placement is desired, the keyboard may be operated in this state.

Consequently, when the user turns one of the first key unit 37 and the second key unit 47 prior to the use of the keyboard 1, the other key unit will be turned in synchronization with the turning of the former key unit. In this way, each key unit 37, 47 is adjusted to a desirable operating state by a very simple operation so that each user can operate the keyboard in individual suitable operating state.

Next, referring to Fig. 2, an explanation is made on the locking mechanism for locking the first key unit 37 and the second key unit 47 to the first base plate 5 and the second base plate 8 respectively after the units 37 and 47 are turned synchronously as above to respective desired turning positions.

The locking mechanisms 57 are provided between the first base plate 5 and the first key unit 37 and between the second base plate 8 and the second key unit 47, respectively. Each locking mechanism 57 has an identical structure and therefore the following explanation is made on only the locking mechanism 57 provided between the second base plate 8 and the second key unit 47. It is to be noted that the locking mechanism 57 provided between the first base plate 5 and the first key unit 37 is constructed of locking recesses 45 formed in the circular arc face 42 of the first gear member 44 placed on the first support plate 6 in the first key unit 37 and a resilient locking piece (not shown) formed in the bearing member 13 provided at the corner 12 of the first base plate 5.

As an alternative to providing the locking mechanism 57 in both of the first and second key units 37 and 47 as above, the locking mechanism 57 could be provided in either of them.

In the locking mechanism 57 shown in Fig. 2, the bearing member 17 provided at the corner 16 of the second base plate 8 is formed to be hollow in which a pair of holding portions 58 is provided. Between the pair of holding portions 58, a resilient locking piece 59 made of a resilient thin metal plate bent in the shape of a Japanese letter "〈 " is placed with both ends held in the holding portions 58. A concave curved surface 60 of the bearing member 17 which is in contact with the circular arc face 52 of the second gear member 54 is formed with an opening 61 through which a peaked end of the resilient locking piece 59 protrudes. The peaked end of the resilient locking piece 59 protruding through the opening 61 in this way is engaged in one of a plurality of locking recesses 55 formed in the circular arc face 52 of the second gear member 54.

With the aforementioned locking mechanism 57, the first and second key units 37 and 47 can be locked when they are turned synchronously to the desired turning positions and thereat the peaked end of the resilient locking piece 59 is engaged in the locking recess 55 of the second gear member. Thus, the keyboard can be operated stably in the fixed state most suitable for each user.

The locking mechanism 57 is simply constructed of the locking recesses 55 formed in the circular arc face 52 of the second gear member 54 and the resilient locking piece 59 placed in the bearing member 17 of the second base plate 8. Thus the locking mechanism 57 of each of the first and second key units 37 and 47 can be achieved at lower cost. Because the locking recesses 55 are formed in the circular arc face 52 of the second gear member 54, the locking recesses 55 can be made at the same time of the formation of the gear teeth part 53, thereby achieving a further reduction in cost.

Each structure provided in the keyboard 1 is explained below with reference to Figs. 4 to 11.

In the keyboard 1, as mentioned above, the predetermined number of key switches 7 which are operated by the left hand are arranged according to the ISO International Standards (ISO 2126 and ISO 2530) on the first support plate 6 in the first keyboard unit 3 and the predetermined number of key switches 10 which are operated by the right hand are arranged according to the ISO international Standards on the second support plate 9 in the second keyboard unit 4. The number of key switches 7 which are operated by the left hand is determined to be smaller than the number of key switches 10 which are operated by the right hand. Based on this, as shown in Fig. 3, the longitudinal length of the first keyboard unit 3 is determined to be shorter than the longitudinal length of the second keyboard unit 4.

When the first and second keyboard units 3 and 4 having the different lengths as above are folded, their lengths are unbalanced, deteriorating the portability of the keyboard 1. In the keyboard 1 in the present embodiment, therefore, a control part 62 for controlling the keyboard 1 is placed alongside one side edge of the first keyboard unit 3 (which is an opposite edge to the side rotatably connected with the second keyboard unit 4; a left side edge in Fig. 4) as shown in Figs. 4(A) to 4(C) so that the total longitudinal length of the first keyboard unit 3 with the addition of the control part 62 be equal to the longitudinal length of the second keyboard unit 4.

With the above structure, it is possible to effectively utilize the space generated in the first keyboard unit 3 due to the difference in length between the first and second keyboard units 3 and 4. As compared with the case where the control part 62 is placed under the keyboard 1 or at the side of the keyboard 1, a reduction in the thickness and size of the keyboard 1 can be improved.

Fig. 4(A) shows the keyboard 1 in the folded state during nonuse, in which the keyboard units 3 and 4 are superposed after rotation in a direction to come close to each other about the support shafts 19A and 19B inserted in the bearing hole 13A of each bearing 13B of the bearing member 13 and the bearing hole 17A of the bearing 17B of the bearing member 17 and in the bearing hole 14A of each bearing 14B of the bearing member 14 and the bearing hole 18A of the bearing 18B of the bearing member 18. It is shown that the total longitudinal length of the first keyboard unit 3 with the addition of the control part 62 is, equal to the length of the second keyboard unit 4, achieving a compact structure.

Fig. 4(B) shows the keyboard 1 in which the keyboard units 3 and 4 are held in the horizontal state during use after rotation in a direction to come apart from each other about the support shafts 19A and 19B. It is shown that the total longitudinal length of the first keyboard unit 3 with the addition of the control part 62 is equal to the length of the second keyboard unit 4, so that the right and left lengths of the keyboard 1 centering on the support shafts 19A and 19B is well balanced.

To the control part 62 at substantially the center thereof, as shown in Fig. 4(C), a cover member 63 is attached to be opened and closed. On the underside of this cover member 63 is provided a connector member 64 which is connected to various kinds of portable electronic devices such as a PDA. The connector member 64 is connected to a flexible substrate 65 which is connected to a control unit (not shown) built in the control part 62 to control the keyboard 1. A pair of wire members 66A is fixed to both sides of the cover member 63 near the connector member 64. A wire member 66B rotatably spans outer ends of the wire members 66A. Furthermore, a support wire 66C is fixed to the center of the wire member 66B. Each wire member 66A is rotated together with the cover member 63 to the state shown in Fig. 4(C). The support wire 66C is then turned backward to hold the portable electronic device such as a PDA in a slanting position. Those wire members 66A, 66B, and 66C constitute a backrest member 66 for holding the portable electronic device such as a PDA in the slanting position.

As above, the connector member 64 is placed on the cover member 63 rotatably attached to the control part 62 and the backrest member 66 is provided in the cover member 63 near the connector member 64. Accordingly, the portable electronic device such as a PDA can be held in the slanting position while it is connected directly to the connector member 64 without needing cables or the like.

An explanation is made herein, referring to Fig. 4(B) and Fig. 7, on the structure to put the backrest member 66 constructed as above in the keyboard units 3 and 4 when these units 3 and 4 are folded as shown in Fig. 4(A). Fig. 7 is an enlarged sectional view of the keyboard units 3 and 4 in the folded state, showing their sections along a direction (the short side direction) perpendicular to the longitudinal direction of each keyboard unit 3, 4.

As shown in Fig. 4(B), in the first keyboard unit 3, there exist from above even clearances between a first key switch row K1 and a second key switch row K2, between the second key switch row K2 and a third key switch row K3, and between the third key switch row K3 and a fourth key switch row K4, respectively. This relation is similarly established in the second keyboard unit 4; specifically, between a first key switch row K1 and a second key switch row K2, between the second key switch row K2 and a third key switch row K3, and between the third key switch row K3 and a fourth key switch row K4, respectively. Accordingly, in the folded state shown in Fig. 4(A), in cooperation with the shape of each key top 34 in each key switch row, a clearance S is generated between the adjacent key switch rows in the first and second keyboard units 3 and 4 facing each other as shown in Fig. 7.

In the keyboard 1 in the present embodiment, one of the wire members 66A of the backrest member 66 is put in the clearance S generated between the first and second key switch rows K1 and K2, the support wire 66C is put in the clearance S generated between the second and third key switch rows K2 and K3, and similarly the other wire member 66A is put in the clearance S generated between the third and fourth key switch rows K3 and K4. The wire member 66B can be put well in the clearance generated between the first and second keyboard units 3 and 4 because a height difference existing between the top surface of each key top 34 and the flat surface of the first gear member 44 will be doubled when the first and second keyboard 3 and 4 are folded.

As mentioned above, it is constructed such that each wire member 66A and the support wire 66C constituting the backrest member 66 are put in the clearances S between the key switch rows facing each other in the folded keyboard units 3 and 4, while the wire member 66B is put in the clearance between the keyboard units 3 and 4. Consequently, the total thickness of the first and second keyboard units 3 and 4 in the folded state can be made smaller. Because the backrest member 66 need not be attached outside the keyboard 1, a reduction in the size of the whole keyboard 1 can be achieved.

Further, there is no need to provide a special structure for storing the backrest member 66 in the keyboard 1, so that the cost for the whole keyboard 1 can be reduced.

Next, a structure for electrically connecting each key switch 7 in the first keyboard unit 3 and each key switch 10 in the second keyboard unit 4 to the control part 62 will be explained with reference to Figs. 4, 5, and 8. Figs. 5 are explanatory views showing a relation between the control part 62 and the keyboard 1; Fig. 5(A) is an explanatory view showing a state where the control part 62 is detached from the first keyboard unit 3, and Fig. 5(B) is an explanatory view showing a state where the control part 62 is to be connected to the jointed-arm.

The jointed-arm 67 is pivotally connected to the arm supporting part 25 formed on the back of the peripheral wall member 23 of the first base plate 5 in the first keyboard unit 3. The jointed-arm 67 is constructed of a first arm member 67A which is hollow and pivotally connected at one end to the arm supporting part 25 with a first connecting pin 68A and a second arm member 67B which is hollow and pivotally connected to the other end of the first arm member 67A with a second connecting pin 68B.

The signal wire 69 connected to the membrane switch corresponding to each of the key switches 10 arranged on the second support plate 9 in the second key unit 47 is laid to extend from the hollow peripheral wall member 56 formed in the second support plate 9 to the hollow peripheral wall member 24 formed in the second base plate 8, and extend through the bearing member 18, the bearing 18B, the bearing member 14, and the peripheral wall member 23 of the base plate 5 to the arm supporting part 25. The signal wire (not shown) connected to the membrane switch corresponding to each of the key switches 7 arranged on the first support plate 6 in the first key unit 37 is laid extending from the hollow peripheral wall member 23 directly to the arm supporting part 25.

The signal wire extending from the second key unit 47 and the signal wire extending from the first key unit 37 are collected up in the arm supporting part 25 and set in the first arm member 67A and the second arm member 67B. The thus laid signal wires are connected to the connector member 70 (see Fig. 5(A)) provided on one side of the second arm member 67B.

In the control part 62, two projections 71 are formed on the side face which faces the side edge of the first keyboard unit 3. Each projection 71 is detachably fitted in a positioning hole (not shown) formed in the peripheral wall member 46 of the first support plate 6 in the first keyboard unit 3. The control part 62 is thus detachably placed at the side of the first keyboard unit 3. The control part 62 is also provided, on the end face, with the connector member 72 which is connected to the connector member 70 of the second arm member 67B.

As mentioned above, each projection 71 of the control part 62 is detachably fitted in the positioning hole in the peripheral wall member 46 in the first keyboard unit 3 and the connector member 72 of the control part 60 is allowed to connect with and disconnect from the connector member 70 of the second arm member 67B. Thus, the control part 62 is constructed to be detachable/attachable with respect to the first keyboard unit 3. If a plurality of control parts 62 are prepared in correspondence with various portable electronic devices such as a PDA, it is possible to use the same keyboard 1 by replacement of only the control part 62 to input data to the associated portable electronic device, thereby avoiding waste in buying a new keyboard 1 corresponding to a portable electronic device to be used, thus reducing an expense burden on the user. A manufacturer of the keyboard 1 does not have to manufacture individual keyboards 1 corresponding to various types of portable electronic devices individually. It is therefore possible to reduce investment costs and management expenses needed for manufacturing of many kinds of keyboards.

The action of the arm member 67 constructed as above is explained with reference to Figs. 5 and 6. Fig. 6 is an explanatory view showing various using states of the jointed-arm.

As shown in Figs. 5, of the jointed-arm 67, the first arm part 67A is pivotally connected at one end to the arm supporting part 25 formed on the back (opposite the operator) of the peripheral wall member 23 with the first connecting pin 68A. The second arm member 67B is pivotally connected to the other end of the first arm member 67A with the second connecting pin 68B. The control part 62 is constructed to be detachable/attachable with respect to the first keyboard unit 3 as mentioned above, so that the control part 62 can be positioned in various using states through the use of a free turning property of the jointed-arm 67.

For instance, as shown in Fig. 6, after each projection 71 of the control part 62 is removed from the positioning hole in the peripheral wall member 46, the control part 62 may be placed in parallel with the keyboard 1 in the longitudinal direction thereof. The control part 62 in this case can be used in the configuration (A) in Fig. 6. When the first arm member 67A is turned clockwise about the first connecting pin 68A from the configuration (A), the control part 62 can be used in the configuration (B) where the control part 62 is placed apart from the keyboard 1. Further, when the first arm member 67A is further turned clockwise about the connecting pin 68A from the configuration (B), the control part 62 can be used in the configuration (C) close to the back side edge (opposite the operating side) of the keyboard 1 at substantially the center in the longitudinal direction.

Fig. 9 shows the case where a PDA 73 is held in the slanting position by the backrest member 66 while a contact terminal of the PDA 73 is connected to the connector member 64 of the control part 62 in the configuration (B) in Fig. 6. Similarly, Fig. 10 shows the case where the PDA 73 is held in the slanting position by the backrest member 66 while the contact terminal of the PDA 73 is connected to the connector member 64 of the control part 62 in the configuration (C) in Fig. 6.

As described above, the control part 62 is constructed to be detachable/attachable with respect to the first keyboard unit 3 and be connected to the first keyboard unit 3 through the jointed-arm 67. The placement relation between the control part 62 and the keyboard 1 can be freely changed within a range allowed by the jointed-arm 67. Accordingly, the placing position of the PDA 73 with respect to the keyboard 1 can be freely changed to a desired position for the keyboard user to enhance the operationality.

In relation to the jointed-arm 67 constructed as above, explanations will be given referring to Fig. 11 about a connecting structure of the first connecting pin 68A which connects the first arm member 67A and the arm supporting part 25 and a connecting structure of the second connecting pin 68B which connects the first arm member 67A and the second arm member 67B. Fig. 11 is an explanatory view schematically showing the keyboard 1 seen from back in the state shown in Fig. 4(B) and in the configuration (C) in Fig. 6.

In Fig. 11, the thickness H of the second arm member 67B is determined to be larger than the thickness h of the keyboard 1 (the thickness between the bottom surface of each of the first and second base plates 5 and 8 and the top surface of each key top 34) in consideration of the necessity of providing the connector member 70 to be connected to the connector member 72 of the control part 62. Accordingly, in the placement shown in Fig. 4(B) and (C) where the keyboard 1 is not used, a plane provided by the top surfaces of the key switches 7, 10 is slightly tilted, not parallel, relative to the plane of a location where the keyboard 1 is placed.

In the keyboard 1 in the present embodiment, considering such circumstances, the first connecting pin 68A and the second connecting pin 68B are provided for connection at an angle so that the bottom surface of the keyboard 1 (i.e., the bottom surfaces of the first and second base plates 5 and 8) be flush with the bottom surface of the second arm member 67B during actual use of the keyboard 1.

To be more specific, in Fig. 11, the first connecting pin 68A which pivotally connects the arm supporting part 25 and the first arm member 67A is provided at a slant angle A with respect to a perpendicular line L. On the other hand, the second connecting pin 68B which pivotally connects the first arm member 67A and the second arm member 67B is provided at a slant angle B with respect to the perpendicular line L. The angle B is determined to be larger than the angle A.

As above, the first connecting pin 68A is provided at the slant angle A with respect to the perpendicular line L while the second connecting pin 68B is provided at the slant angle B with respect to the perpendicular line L. When the control part 62 is placed in the configuration (C) in Fig. 6, accordingly, the second arm member 67B is positioned upward by a height corresponding to the thickness difference (H-h) based on the total slant angle (A+B). Thus, the bottom surface of the control part 62 (which is placed to be flush with the lower end surface of the second arm member 67B) becomes flush with the bottom surface of the keyboard 1.

Even where the thickness H of the second arm member 67B and the thickness of the control part 62 are not equal to the thickness h of the keyboard 1, the bottom surface of the second arm member 67B or the control part 62 can become flush with the bottom surface of the keyboard 1 during use with the first connecting pin 68A and the second connecting pin 68B provided at their respective slant angles, thus bringing the plane provided by the top surfaces of the key switches 7, 10 into parallel relation with the plane of a location where the keyboard 1 is placed. This makes it possible to prevent a deterioration of key operationality.

In the above example, both the first connecting pin 68A and the second connecting pin 68B are provided in the slanting positions. In an alternative, only either of the connecting pins may be provided in the slanting position.

### (2) Second embodiment

A second embodiment of a foldable keyboard embodying the present invention will be explained below with reference to attached drawings. At first, a schematic structure of the keyboard in the second embodiment is explained with reference to Fig. 14. Fig. 14 is an exploded perspective view schematically showing the foldable keyboard.

In Fig. 14, the keyboard 101 is basically structured of a first keyboard unit 103 and a second keyboard unit 104 which are rotatably connected with each other by a rotational connecting part 102. The first keyboard unit 103 includes a first base plate 105, a first support plate 106 mounted to be rotatable in a horizontal direction on the first base plate 105, and a plurality of key switches 107 arranged on the first support plate 106. The second keyboard unit 4 includes a second base plate 108, a second support plate 109 mounted to be rotatable in a horizontal direction on the second base plate 108, and a plurality of key switches 110 arranged on the second support plate 109.

At first, the structure of the rotational connecting part 102 is explained below. The first base plate 105 is made of a thin metal plate, e.g., aluminum plate. This first base plate 105 is provided, at two corners 112 in a side edge 111 (a right side edge in Fig. 14), with resinous bearing members 113 and 114 each constituting part of the rotational connecting part 102. The bearing member 113 is provided with two bearings 113B spaced apart, each being formed with a bearing hole 113A. The bearing member 114 is similarly provided with two bearings 114B spaced apart, each being formed with a bearing hole 114A.

As with the first base plate 105, the second base plate 108 is made of a thin metal plate, e.g., aluminum plate. This second base plate 108 is provided, at two corners 116 in a side edge 115 (a left side edge in Fig. 14), with resinous bearing members 117 and 118. The bearing member 117 is provided with a single bearing 117B formed with a bearing hole 117A. The bearing member 118 is similarly provided with a single bearing 118B formed with a bearing hole 118A. The bearing 117B is fitted between the bearings 113B so that the bearing hole 117A of the bearing 117B is aligned with the bearing holes 113A of the bearings 113B. Further, the bearing 118B is fitted between the bearings 114B so that the bearing hole 118A of the bearing 118B is aligned with the bearing holes 114A of the bearings 114B. In those bearing holes 113A and 117A, 114A and 118A thus arranged in line, a support shaft 119 is inserted. Thus, the first base plate105 and the second base plate 108 are held to be mutually rotatable by the support shaft 119. A sliding member 122, which is of a cylindrical shape and centrally formed with a sliding hole 120 and concentrically formed with gear teeth 121 on the periphery, is slidably fitted on this support shaft 119 through the sliding hole 120. This sliding member 122 is a member for causing synchronous turning of the first and second keyboard units 3 and 4. The action thereof will be mentioned later.

It is to be noted that the bearing member 114 is integrally formed with a hollow peripheral wall member 123 and the bearing member 118 is integrally formed with a hollow peripheral wall member 124. A signal wire 169 (mentioned later) for connecting each key switch 110 provided in the second keyboard unit 104 to a control part 162 (mentioned later) is laid in the inside of the peripheral wall member 124. This signal wire 169 extends through the hollow bearing member 118 and the bearing 118B to the outside and is wound around the support shaft 119, and extends through the hollow bearing member 114 to the peripheral wall member 123. A signal wire (not shown) for connecting each key switch 107 provided in the first keyboard unit 103 to the control part 162 is laid in the inside of the peripheral wall member 123. This signal wire and the signal wire 169 extending from the second keyboard unit 104 through the peripheral wall member 124 are collected up to be laid in a jointed-arm 167 (mentioned later). An arm supporting part 125 is formed to be hollow on the back of the peripheral wall member 123 and pivotally supports the jointed-arm 167. Through the arm supporting part 125, the signal wires laid as above are set in the jointed-arm 167.

In the first base plate 105, a screw seat 127 is formed near a side edge 126 opposite the side edge 111 and in substantially the center. A screw 129, passing with play through a screw hole 128 in the first support plate 106, is screwed in the screw seat 127. Thus, on the first base plate 105, the first support plate 106 is mounted to be horizontally turnable about the screw 129 and the screw seat 127 serving as a turning axis. In the second base plate 108, similarly, a screw seat 130 is formed slightly inwardly (corresponding to the width of the control part 162 mentioned later) from a side edge 108a opposite the side edge 115 and in substantially the center. A screw 132, passing with play through a screw hole 131 in the second support plate 109, is screwed in the screw seat 130. Accordingly, on the second base plate 108, the second support plate 109 is mounted to be horizontally turnable about the screw 132 and the screw seat 130 serving as a turning axis.

The first support plate 106 in the first keyboard unit 103 is made of a thin metal plate, e.g., aluminum plate, on which there are arranged a predetermined number of key switches 107 which are operated by the user's left hand. It is to be noted that the number of key switches 107 is determined based on the ISO International Standards (ISO 2126 and ISO 2530).

The first support plate 106 is integrally formed with four supporting parts 133 per one key switch 107 by press working or other techniques. On the first support plate 106, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 133 is formed protruding upward through each hole formed in the membrane switch.

Each key switch 107 is mainly constructed of a key top 134, a pair of link members 135 for vertically guiding the key top 134, and a rubber spring 136 which is disposed on the membrane switch in a position corresponding to a switching part comprised of the movable electrode and the fixed electrode of the membrane switch and urges the key top 134 upward. Each upper end of the pair of link members 135 is movably connected with the key top 134 on its lower surface and each lower end of the link members 135 is movably engaged in each supporting part 133. During non-depression, the key top 134 is urged upward by the urging force of the rubber spring 136 and held in a non-depression position. When the key top 134 is pressed down against the urging force of the rubber spring 136, the rubber spring 136 pushes the movable electrode of the membrane switch to bring the movable electrode into contact with the fixed electrode in the switching hole, thereby performing a switching operation. The above mentioned key switches 107 and the first support plate 106 constitute a first key unit 137. The structure of each key switch 107 is well known in the art and the detailed explanation thereof is omitted herein.

The first support plate 106 is formed, in one side (the right side in Fig. 14), with a circular arc face 138 coincident with the turning radius of the first support plate 106 which turns about the turning axis (i.e., the screw 129 passing through the screw hole 128 with play and the screw seat 127). The first support plate 106 is also formed with an arcuate slot 139 inwardly from the circular arc face 138. A screw 140 passes with play through this arcuate slot 139 and is screwed in a screw seat 141 formed in the first base plate 105. The slot 139 and the screw 140 serve to guide the first support plate 106 so that it is stably turned in a horizontal direction on the first base plate 105.

On the side of the first support plate 106 where the circular arc face 138 is formed, there is placed a first gear member 144 with a circular arc face 142 which is equal in curvature radius to the circular arc face 138 and is formed with gear teeth 143 engaging with gear teeth 121 of the sliding member 122. Further, the circular arc face 142 of the first gear member 144 is formed with a plurality of locking recesses 145 which constitute part of a locking mechanism 157 which will be mentioned later.

As described above, the circular arc face 138 of the first support plate 106 and the circular arc face 142 of the first gear member 144 are configured to have an equal curvature radius. Accordingly, the circular arc faces 138 and 142 coincide with each other. This makes it possible to prevent displacement between the circular arc faces 138 and 142 and improve the appearance of the first key unit 137. The first gear member 144 is set in the first support plate 106 in such a manner as covering the screw 140 and the slot 139 from above, thereby hiding the screw 140 and the slot 139 from view to further improve the appearance of the first key unit 137.

A peripheral wall member 146 is formed in the first support plate 106 except for a part thereof. When the first support plate 106 is mounted on the first base plate 105, the peripheral wall member 146 is joined to the peripheral wall member 123 provided in the first base plate 105 to constitute a peripheral wall member surrounding the periphery of the first support plate 106 except for the circular arc face 138.

The second support plate 109 in the second keyboard unit 104 is made of a thin metal plate, e.g., aluminum plate, as with the first support plate 106. On this second support plate 109, there are arranged a predetermined number of key switches 110 which are operated by the user's right hand. It is to be noted that the number of key switches 110 is determined based on the ISO International Standards (ISO 2126 and ISO 2530) and to be larger than the number of key switches 107 arranged on the first support plate 106 which are operated by the user's left hand. Each key switch 110 has an identical structure to each key switch 107 and will accordingly be explained with the same reference numerals.

The second support plate 109 is integrally formed with four supporting parts 133 per one key switch 110 by press working or other techniques. On the second support plate 109, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 133 is formed protruding upward through each hole formed in the membrane switch.

Each key switch 110 is mainly constructed of a key top 134, a pair of link members 135 for vertically guiding the key top 134, and a rubber spring 136 which is disposed on the membrane switch in a position corresponding to a switching part comprised of the movable electrode and the fixed electrode of the membrane switch and urges the key top 134 upward. Each upper end of the pair of link members 135 is movably connected with the key top 134 on its lower surface and each lower end of the link members 135 is movably engaged in each supporting part 133. During non-depression, the key top 134 is urged upward by the urging force of the rubber spring 136 and held in a non-depression position. When the key top 134 is pressed down against the urging force of the rubber spring 136, the rubber spring 136 pushes the movable electrode of the membrane switch to bring the movable electrode into contact with the fixed electrode in the switching hole, thereby performing a switching operation. The above mentioned key switches 110 and the second support plate 109 constitute a second key unit 147.

The second support plate 109 is formed, in one side (the left side in Fig. 14), with a circular arc face 148 coincident with the turning radius of the second support plate 109 which turns about the turning axis (i.e., the screw 131 passing through the screw hole 131 with play and the screw seat 130). The second support plate 109 is also formed with an arcuate slot 149 inwardly from the circular arc face 148. A screw 150 passes with play through this arcuate slot 149 and is screwed in a screw seat 151 formed in the second base plate 108. The slot 149 and the screw 150 serve to guide the second support plate 109 so that it is stably turned in a horizontal direction on the second base plate 108.

On the side of the second support plate 109 where the circular arc face 148 is formed, there is placed a second gear member 154 with a circular arc face 152 which is equal in curvature radius to the circular arc face 148 and is formed with gear teeth 153 engaging with the gear teeth 121 of the sliding member 122. Further, the circular arc face 152 of the second gear member 154 is formed with a plurality of locking recesses 155 (see Fig. 15) which constitute part of a locking mechanism 157 which will be mentioned later.

As described above, the circular arc face 148 of the second support plate 109 and the circular arc face 152 of the second gear member 154 are configured to have an equal curvature radius. Accordingly, the circular arc faces 148 and 152 coincide with each other. This makes it possible to prevent displacement between the circular arc faces 148 and 152 and improve the appearance of the second key unit 147. The second gear member 154 is set in the second support plate 109 in such a manner as covering the screw 150 and the slot 149 from above, thereby hiding the screw 150 and the slot 149 from view to further improve the appearance of the second key unit 147.

A hollow peripheral wall member 156 is formed in the second support plate 109 except for a part thereof. When the second support plate 109 is mounted on the second base plate 108, the peripheral wall member 156 is joined to the peripheral wall member 124 provided in the second base plate 108 to constitute a peripheral wall member surrounding the periphery of the second support plate 109 except for the circular arc face 148.

Next, an explanation is made, referring to Figs. 15 and 16, on a synchronizing mechanism for causing synchronous turning of the first support plate 106 and the second support plate 109 when they are turned horizontally on the first base plate 105 and the second base plate 108 respectively and a locking mechanism for locking the first support plate 106 and the second support plate 109 in respective positions after they are turned by the synchronizing mechanism. Fig. 15 is an enlarged explanatory view showing the synchronizing mechanism for causing the synchronous turning of the first and second support plates 106 and 109. Figs. 16 are explanatory views showing the first and second support plates 106 and 109 in sequence from a state where they are not turned to a state where they have been turned to the maximum turning position; Fig. 16(A) shows a non-turned state, Fig. 16(B) shows a halfway turned state, and Fig. 16(C) shows a fully turned state to the maximum turning position.

In Fig. 15, the gear teeth part 143 formed in the circular arc face 142 of the first gear member 144 and the gear teeth part 153 formed in the circular arc face 152 of the second gear member 154 are respectively engaged with the gear teeth 121 of the sliding member 122 slidably fitted on the support shaft 119.

The gear teeth 121 of the sliding member 122 is concentrically formed, so that the distance from the center of the sliding member 122 to the peripheral edge of the gear teeth 121 is equal. Further, the gear teeth 143 and the gear teeth 153 are formed in the circular arc faces 142 and 152 respectively and therefore the peripheral edges of the gear teeth 143 and the gear teeth 153 are also positioned along a circular arcuate line. Accordingly, the gear teeth 121 and each of the gear teeth 143 and 153 are engaged deeply in part and shallowly in another part, not equally in all parts, as shown in Figs. 15 and 16. Such engagement relation remains unchanged even where the first support plate 106 and the second support plate 109 are turned. However, the gear teeth 121 of the sliding member 122 and each of the gear teeth 143, 153 of the first and second gear members 144, 154 are constantly engaged deeply in part, so that the engagement between the gear teeth 121 and each of the gear teeth 143 and 153 will not be released wherever the sliding member 122 is positioned on the support shaft 119.

In the state where the first and second support plates 106 and 109 are not turned, as shown in Fig. 16(A), each key switch 107 arranged on the support plate 106 and each key switch 110 arranged on the support plate 109 have the same key placement relation as that in a standard keyboard. The engagement between the gear teeth 121 of the sliding member 122 and the gear teeth 143 of the first gear member 144 and the engagement between the gear teeth 121 and the gear teeth 153 of the second gear member 154 are both shallow in the upper area in Fig. 16(A) and deep in the lower area. If the use of the keyboard 101 having the above key placement is desired, needless to say, the keyboard may be operated in this state.

It is constructed such that the distance from the engaging position of the gear teeth 143 of the first support plate 106 with the gear teeth 121 of the sliding member 122 to the screw 129 (the turning axis) is equal to the distance from the engaging position of the gear teeth 153 of the second support plate 109 with the gear teeth 121 of the sliding member 122 to the screw 132 (the turning axis). Accordingly, the support plates 106 and 109 can be smoothly turned by the action of the sliding member 122.

When the first key unit 137 or the second key unit 147 is turned clockwise or counterclockwise in Fig. 16(A) from the state shown in Fig. 16(A), the sliding member 122 is caused to slide along the support shaft 119 downward in Fig. 16(A) because of the engagement of the gear teeth 143 of the first gear member 144 and the gear teeth 153 of the second gear member 154 with the gear teeth 121 of the sliding member 122. Then, the first support plate 106 and the second support plate 109 are synchronously turned clockwise about the screw 129 and the screw seat 127 serving as the turning axis and counterclockwise about the screw 132 and the screw seat 130 serving as the turning axis, respectively. Fig. 16(B) shows the first and second support plates 106 and 109 that have been turned slightly in the above way. If the operation of the keyboard 101 having the above key placement is desired, the keyboard may be operated in this state.

When the first support plate 106 or the second support plate 109 is further turned from the state shown in Fig. 16(B), the sliding member 122 is caused to slide on the support shaft 119 more downward from the position shown in Fig. 16(B), causing synchronous turning of the first support plate 106 and the second support plate 109 in a clockwise direction and a counterclockwise direction respectively. Fig. 16(C) shows the first support plate 106 and the second support plate 109 turned to the maximum turning positions. If the operation of the keyboard 101 having the above key placement is desired, the keyboard may be operated in this state.

Consequently, when the user turns the first key unit 137 or the second key unit 147 prior to the use of the keyboard 101, the other key unit will be turned in synchronization with the turning of the former key unit. In this way, each key unit 137, 147 is adjusted to a desirable operating state by a very simple operation so that each user can operate the keyboard in individual suitable operating state.

Next, referring to Fig. 15, an explanation is given to the locking mechanism for locking the first key unit 137 and the second key unit 147 to the first base plate 105 and the second base plate 108 respectively after the units 137 and 147 are turned synchronously as above to respective desired turning positions.

The locking mechanisms 157 are provided between the first base plate 105 and the first key unit 137 and between the second base plate 108 and the second key unit 147, respectively. Each locking mechanism 157 has an identical structure and therefore the following explanation is made on only the locking mechanism 157 provided between the second base plate 108 and the second key unit 147. It is to be noted that the locking mechanism 157 provided between the first base plate 105 and the first key unit 137 is constructed of locking recesses 145 formed in the circular arc face 142 of the first gear member 144 placed on the first support plate 106 in the first key unit 137 and a resilient locking piece (not shown) formed in the bearing member 113 provided at the corner 112 of the first base plate 105.

As an alternative to providing the locking mechanism 157 in both of the first and second key units 137 and 147 as above, the locking mechanism 157 could be provided in either of them.

In the locking mechanism 157 shown in Fig.15, the bearing member 117 provided at the corner 116 of the second base plate 108 is formed to be hollow in which a pair of holding portions 158 is provided. Between the pair of holding portions 158, a resilient locking piece 159 made of a resilient thin metal plate bent in the shape of a Japanese letter "〈 " is placed with both ends held in the holding portions 158. A concave curved surface 160 of the bearing member 117 which is in contact with the circular arc face 154 of the second gear member 154 is formed with an opening 161 through which a peaked end of the resilient locking piece 159 protrudes. The peaked end of the resilient locking piece 159 protruding through the opening 161 in this way is engaged in one of a plurality of locking recesses 155 formed in the circular arc face 152 of the second gear member 154.

With the aforementioned locking mechanism 157, the first and second key units 137 and 147 can be locked when they are turned synchronously to the desired turning positions and thereat the peaked end of the resilient locking piece 159 is engaged in the locking recess 155 of the second gear member 154. Thus, the keyboard can be operated stably in the fixed state most suitable for each user.

The locking mechanism 157 is simply constructed of the locking recesses 155 formed in the circular arc face 152 of the second gear member 154 and the resilient locking piece 159 placed in the bearing member 117 of the second base plate 108. The locking mechanism 157 of each of the first and second key units 137 and 147 can be achieved at lower cost. Because the locking recesses 155 are formed in the circular arc face 152 of the second gear member 154, the locking recesses 155 can be made at the same time of the formation of the gear teeth part 153, thereby achieving a further reduction in cost.

Each structure provided in the keyboard 101 is explained below with reference to Figs. 17 to 24.

In the keyboard 101, as mentioned above, the predetermined number of key switches 107 which are operated by the left hand are arranged according to the ISO International Standards (ISO 2126 and ISO 2530) on the first support plate 106 in the first keyboard unit 103 and the predetermined number of key switches 110 which are operated by the right hand are arranged according to the ISO international Standards on the second support plate 109 in the second keyboard unit 104. The number of key switches 107 which are operated by the left hand is determined to be smaller than the number of key switches 110 which are operated by the right hand. Based on this, as shown in Fig. 16, the longitudinal length of the first keyboard unit 103 is determined to be shorter than the longitudinal length of the second keyboard unit 104.

When the first and second keyboard units 103 and 104 having the different lengths as above are folded, their lengths are unbalanced, deteriorating the portability of the keyboard 101. In the keyboard 101 in the present embodiment, therefore, a control part 162 for controlling the keyboard 101 is placed alongside one side edge of the first keyboard unit 103 (which is an opposite edge to the side rotatably connected with the second keyboard unit 104; a left side edge in Figs. 17) as shown in Figs. 17(A) to 17(C) so that the total longitudinal length of the first keyboard unit 103 and the control part 162 be equal to the longitudinal length of the second keyboard unit 104.

With the above structure, it is possible to effectively utilize the space generated in the first keyboard unit 103 due to the difference in length between the first and second keyboard units 103 and 104. As compared with the case where the control part 162 is placed under the keyboard 101 or at the side of the keyboard 101, a reduction in the thickness and size of the keyboard 101 can be improved.

Fig. 17(A) shows the keyboard 101 in the folded state during nonuse, in which the keyboard units 103 and 104 are superposed after rotation in a direction to come close to each other about the support shaft 119 inserted in the bearing hole 113A of each bearing 113B of the bearing member 113 and the bearing hole 117A of the bearing 117B of the bearing member 117 and in the bearing hole 114A of each bearing 114B of the bearing member 114 and the bearing hole 118A of the bearing 118B of the bearing member 118. It is shown that the total longitudinal length of the first keyboard unit 103 with the addition of the control part 162 is equal to the length of the second keyboard unit 104, achieving a compact structure.

Fig. 17(B) shows the keyboard 101 in which the keyboard units 103 and 104 are held in the horizontal state during use after rotation in a direction to come apart from each other about the support shaft 119. It is shown that the total longitudinal length of the first keyboard unit 103 with the addition of the control part 162 is equal to the length of the second keyboard unit 104, so that the right and left lengths of the keyboard 101 centering on the support shaft 119 is well balanced.

To the control part 162 in substantially its center, as shown in Fig. 17(C), a cover member 163 is attached to be opened and closed. On the underside of this cover member 163 is provided a connector member 164 which is connected to various kinds of portable electronic devices such as a PDA. The connector member 164 is also connected to a flexible substrate 165 which is connected to a control unit (not shown) built in the control part 162 to control the keyboard 101. A pair of wire members 166A is fixed to both sides of the cover member 163 near the connector member 164. A wire member 166B spans outer ends of the wire members 166A. Furthermore, a support wire 166C is fixed to the center of the wire member 166B. Each wire member 166A is rotated together with the cover member 163 to the state shown in Fig. 17(C). The support wire 166C is then turned backward to hold the portable electronic device such as a PDA in a slanting position. Those wire members 166A, 166B, and 166C constitute a backrest member 166 for holding the portable electronic device such as a PDA in the slanting position.

As above, the connector member 164 is placed on the cover member 163 rotatably attached to the control part 162 and the backrest member 166 is provided in the cover member 163 near the connector member 164. The portable electronic device such as a PDA can be held in the slanting position while it is connected directly to the connector member 164 without needing cables or the like.

An explanation is made herein, referring to Fig. 17(B) and Fig. 20, on the structure to put the backrest member 166 constructed as above in the keyboard units 103 and 104 when these units 103 and 104 are folded as shown in Fig. 17(A). Fig. 20 is an enlarged sectional view of the keyboard units 103 and 104 in the folded state, showing their sections along a direction (the short side direction) perpendicular to the longitudinal direction of each keyboard unit 103, 104.

As shown in Fig. 17(B), in the first keyboard unit 103, there exist from above even clearances between a first key switch row K1 and a second key switch row K2, between the second key switch row K2 and a third key switch row K3, and between the third key switch row K3 and a fourth key switch row K4, respectively. This relation is similarly established in the second keyboard unit 104; specifically, between a first key switch row K1 and a second key switch row K2, between the second key switch row K2 and a third key switch row K3, and between the third key switch row K3 and a fourth key switch row K4, respectively. Accordingly, in the folded state shown in Fig. 17(A), in cooperation with the shape of each key top 134 in each key switch row, a clearance S is generated between the adjacent key switch rows in the first and second keyboard units 103 and 104 facing each other as shown in Fig. 20.

In the keyboard 101 in the present embodiment, one of the wire members 166A of the backrest member 166 is put in the clearance S generated between the first and second key switch rows K1 and K2, the support wire 166C is put in the clearance S generated between the second and third key switch rows K2 and K3, and similarly the other wire member 166A is put in the clearance S generated between the third and fourth key switch rows K3 and K4. The wire member 166B can be put well in the clearance generated between the first and second keyboard units 103 and 104 because a height difference existing between the top surface of each key top 134 and the flat surface of the first gear member 144 will be doubled when the first and second keyboard 103 and 104 are folded.

As mentioned above, it is constructed such that each wire member 166A and the support wire 166C constituting the backrest member 166 are put in the clearances S between the key switch rows facing each other in the folded keyboard units 103 and 104, while the wire member 166B is put in the clearance between the keyboard units 103 and 104. Consequently, the total thickness of the first and second keyboard units 103 and 104 in the folded state can be made smaller. Because the backrest member 166 need not be attached outside the keyboard 101, a reduction in the size of the whole keyboard 101 can be achieved.

Further, there is no need to provide a special structure for storing the backrest member 166 in the keyboard 101, so that the cost for the whole keyboard 101 can be reduced.

Next, a structure for electrically connecting each key switch 107 in the first keyboard unit 103 and each key switch 110 in the second keyboard unit 104 to the control part 162 will be explained with reference to Figs. 17, 18, and 21. Figs. 18 are explanatory views showing a relation between the control part 162 and the keyboard 101; Fig. 18(A) is an explanatory view showing a state where the control part 162 is detached from the first keyboard unit 103, and Fig. 18(B) is an explanatory view showing a state where the control part 162 is to be connected to the jointed-arm.

The jointed-arm 167 is pivotally connected to the arm supporting part 125 formed on the back of the peripheral wall member 123 of the first base plate 105 in the first keyboard unit 103. The jointed-arm 167 is constructed of a first arm member 167A which is hollow and pivotally connected at one end to the arm supporting part 125 with a first connecting pin 168A and a second arm member 167B which is hollow and pivotally connected to the other end of the first arm member 167A with a second connecting pin 168B.

The signal wire 169 connected to the membrane switch corresponding to each of the key switches 110 arranged on the second support plate 109 in the second key unit 147 is laid to extend, as shown in Fig. 21, from the hollow peripheral wall member 156 formed in the second support plate 109 to the hollow peripheral wall member 124 formed in the second base plate 108, and extend through the bearing member 118, the bearing 118B, the bearing member 114, and the peripheral wall member 123 of the base plate 105 to the arm supporting part 125. The signal wire (not shown) connected to the membrane switch corresponding to each of the key switches 107 arranged on the first support plate 106 in the first key unit 137 is laid extending from the hollow peripheral wall member 123 directly to the arm supporting part 125.

The signal wire extending from the second key unit 147 and the signal wire extending from the first key unit 137 are collected up in the arm supporting part 125 and set in the first arm member 167A and the second arm member 167B. The thus set signal wires are connected to the connector member 170 (see Fig. 18(A)) provided on one side of the second arm member 167B.

In the control part 162, two projections 171 are formed on the side face which faces the side edge of the first keyboard unit 103. Each projection 171 is detachably fitted in a positioning hole (not shown) formed in the peripheral wall member 146 of the first support plate 106 in the first keyboard unit 103. The control part 162 is detachably placed at the side of the first keyboard unit 103. The control part 162 is also provided, on the end face, with the connector member 172 which is connected to the connector member 170 of the second arm member 167B.

As mentioned above, each projection 171 of the control part 162 is detachably fitted in the positioning hole in the peripheral wall member 146 in the first keyboard unit 103 and the connector member 172 of the control part 160 is allowed to connect with and disconnect from the connector member 170 of the second arm member 167B. Thus, the control part 162 is constructed to be detachable/attachable with respect to the first keyboard unit 103. If a plurality of control parts 162 are prepared in correspondence with various portable electronic devices such as a PDA, it is possible to use the same keyboard 101 by replacement of only the control part 162 in order to input data to the associated portable electronic device, thereby avoiding waste in buying a new keyboard 101 corresponding to a portable electronic device to be used, thus reducing an expense burden on the user. A manufacturer of the keyboard 101 does not have to manufacture individual keyboards 101 corresponding to various types of portable electronic devices individually. It is therefore possible to reduce investment costs and management expenses needed for manufacturing of many kinds of keyboards.

The action of the arm member 167 constructed as above is explained with reference to Figs. 18 and 19. Figs. 19 are explanatory views showing various using states of the jointed-arm.

As shown in Figs. 18, of the jointed-arm 167, the first arm part 167A is pivotally connected at one end to the arm supporting part 125 formed on the back (opposite the operator) of the peripheral wall member 123 with the first connecting pin 168A. The second arm member 167B is pivotally connected to the other end of the first arm member 167A with the second connecting pin 168B. The control part 162 is constructed to be detachable/attachable with respect to the first keyboard unit 103 as mentioned above, so that the control part 162 can be positioned in various using states through the use of a free turning property of the jointed-arm 167.

For instance, as shown in Figs. 19, after each projection 171 of the control part 162 is removed from the positioning hole in the peripheral wall member 146, the control part 162 may be placed in parallel with the keyboard 101 in the longitudinal direction thereof. The control part 162 in this case can be used in the configuration (A) in Fig. 19. When the first arm member 167A is turned clockwise about the first connecting pin 168A from the configuration (A), the control part 162 can be used in the configuration (B) where the control part 162 is placed apart from the keyboard 101. Further, when the first arm member 167A is further turned clockwise about the connecting pin 168A from the configuration (B), the control part 162 can be used in the configuration (C) close to the back side edge (opposite the operating side) of the keyboard 101 at substantially the center in the longitudinal direction.

Fig. 22 shows the case where a PDA 173 is held in the slanting position by the backrest member 166 while a contact terminal of the PDA 173 is connected to the connector member 164 of the control part 162 in the configuration (B) in Fig. 19. Similarly, Fig. 23 shows the case where the PDA 173 is held in the slanting position by the backrest member 166 while the contact terminal of the PDA 173 is connected to the connector member 164 of the control part 162 in the configuration (C) in Fig. 19.

As described above, the control part 162 is constructed to be detachable/attachable with respect to the first keyboard unit 103 and be connected to the first keyboard unit 103 through the jointed-arm 167. The placement relation between the control part 162 and the keyboard 101 can be freely changed within a range allowed by the jointed-arm 167. Accordingly, the placing position of the PDA 173 with respect to the keyboard 101 can be freely changed to a desired position for the keyboard user to enhance the operationality.

In relation to the jointed-arm 167 constructed as above, an explanation will be given referring to Fig. 24 about a connecting structure of the first connecting pin 168A which connects the first arm member 167A and the arm supporting part 125 and a connecting structure of the second connecting pin 168B which connects the first arm member 167A and the second arm member 167B. Fig. 24 is an explanatory view schematically showing the keyboard 101 seen from back in the state shown in Fig. 17(B) and in the configuration (C) in Fig. 19.

In Fig. 24, the thickness H of the second arm member 167B is determined to be larger than the thickness h of the keyboard 101 (the thickness between the bottom surface of each of the first and second base plates 105 and 108 and the top surface of each key top 134) in consideration of the necessity of providing the connector member 170 to be connected to the connector member 172 of the control part 162. Accordingly, in the states shown in Figs. 17(B) and (C), where the keyboard 101 is not used, a plane provided by the top surfaces of the key switches 107, 110 is slightly tilted, not parallel, relative to the plane of a location where the keyboard 101 is placed.

In the keyboard 101 in the present embodiment, considering such circumstances, the first connecting pin 168A and the second connecting pin 168B are provided for connection at an angle so that the bottom surface of the keyboard 101 (i.e., the bottom surfaces of the first and second base plates 105 and 108) be flush with the bottom surface of the second arm member 167B during actual use of the keyboard 101.

To be more specific, in Fig. 24, the first connecting pin 168A which pivotally connects the arm supporting part 125 and the first arm member 167A is provided at a slant angle A with respect to a perpendicular line L. On the other hand, the second connecting pin 168B which pivotally connects the first arm member 167A and the second arm member 167B is provided at a slant angle B with respect to the perpendicular line L. The angle B is determined to be larger than the angle A.

As above, the first connecting pin 168A is provided at the slant angle A with respect to the perpendicular line L while the second connecting pin 168B is provided at the slant angle B with respect to the perpendicular line L. When the control part 162 is moved to the configuration (C) in Fig. 19, accordingly, the second arm member 167B is positioned upward by a height corresponding to the thickness difference (H-h) based on the total slant angle (A+B). Thus, the bottom surface of the control part 162 (which is placed to be flush with the lower end surface of the second arm member 167B) becomes flush with the bottom surface of the keyboard 101.

Even where the thickness H of the second arm member 167B and the thickness of the control part 162 are not equal to the thickness h of the keyboard 101, the bottom surface of the second arm member 167B or the control part 162 can become flush with the bottom surface of the keyboard 101 during use with the first connecting pin 168A and the second connecting pin 168B provided at their respective slant angles, thus bringing the plane provided by the top surfaces of the key switches 107, 110 into parallel relation with the setting plane of the keyboard 101. This makes it possible to prevent a deterioration of key operationality.

In the above example, both the first connecting pin 168A and the second connecting pin 168B are provided in the slanting positions. In an alternative, only either of the connecting pins may be provided in the slanting position.

### (3) Third embodiment

A third embodiment of a foldable keyboard embodying the present invention will be explained below with reference to attached drawings. At first, a schematic structure of the keyboard in the second embodiment is explained with reference to Fig. 25. Fig. 25 is an exploded perspective view schematically showing the foldable keyboard.

In Fig. 25, the keyboard 201 is basically structured of a first keyboard unit 203 and a second keyboard unit 204 which are rotatably connected with each other by a rotational connecting part 202. The first keyboard unit 203 includes a first base plate 205, a first support plate 206 mounted to be rotatable in a horizontal direction on the first base plate 205, and a plurality of key switches 207 arranged on the first support plate 206. The second keyboard unit 204 includes a second base plate 208, a second support plate 209 mounted to be rotatable in a horizontal direction on the second base plate 208, and a plurality of key switches 210 arranged on the second support plate 209.

At first, the structure of the rotational connecting part 202 is explained below. The first base plate 205 is made of a thin metal plate, e.g., aluminum plate. This first base plate 205 is provided, at two corners 212 in a side edge 211 (a right side edge in Fig. 25), with resinous bearing members 213 and 214 each constituting part of the rotational connecting part 202. The bearing member 213 is provided with two bearings 213B spaced apart, each being formed with a bearing hole 213A. The bearing member 214 is similarly provided with two bearings 214B spaced apart, each being formed with a bearing hole 214A.

As with the first base plate 205, the second base plate 208 is made of a thin metal plate, e.g., aluminum plate. This second base plate 208 is provided, at two corners 216 in a side edge 215 (a left side edge in Fig. 25), with resinous bearing members 217 and 218. The bearing member 217 is provided with a single bearing 217B formed with a bearing hole 217A. The bearing member 218 is similarly provided with a single bearing 218B formed with a bearing hole 218A. The bearing 217B is fitted between the bearings 213B so that the bearing hole 217A of the bearing 217B is aligned with the bearing holes 213A of the bearings 213B. Further, the bearing 218B is fitted between the bearings 214B so that the bearing hole 218A of the bearing 218B is aligned with the bearing holes 214A of the bearings 214B. In those bearing holes 213A and 217A, 214A and 218A thus arranged in line, a support shaft 219 is inserted. Thus, the first base plate 205 and the second base plate 208 are mutually rotatably held by the support shaft 219. A sliding member 222, which is formed of three circular plates 221A and semi-cylindrical connecting portions 221B each of which connects two of the circular plates 221A and is centrally formed with a sliding hole 220, is slidably fitted on the support shaft 219 through the sliding hole 220. This sliding member 222 is a member for causing synchronous turning of the first and second keyboard units 203 and 204. The action thereof will be mentioned later.

It is to be noted that the bearing member 214 is integrally formed with a hollow peripheral wall member 223 and the bearing member 218 is integrally formed with a hollow peripheral wall member 224. A signal wire 269 (mentioned later) for connecting each key switch 210 provided in the second keyboard unit 204 to a control part 262 (mentioned later) is laid in the inside of the peripheral wall member 224. This signal wire 269 extends through the hollow bearing member 218 and the bearing 218B to the outside and is wound around the support shaft 219, and extends through the hollow bearing member 214 to the peripheral wall member 223. A signal wire (not shown) for connecting each key switch 207 provided in the first keyboard unit 203 to the control part 262 is laid in the inside of the peripheral wall member 223. This signal wire and the signal wire 269 extending from the second keyboard unit 204 through the peripheral wall member 224 are collected up and set in a jointed-arm 267 (mentioned later). An arm supporting part 225 is formed to be hollow on the back of the peripheral wall member 223 and pivotally supports the jointed-arm 267. Through the arm supporting part 225, the signal wires laid as above are set in the jointed-arm 267.

In the first base plate 205, a screw seat 227 is formed near a side edge 226 opposite the side edge 211 and in substantially the center. A screw 229, passing with play through a screw hole 228 in the first support plate 206, is screwed in the screw seat 227. Thus, on the first base plate 205, the first support plate 206 is mounted to be horizontally turnable about the screw 229 and the screw seat 227 serving as a turning axis. In the second base plate 208, similarly, a screw seat 230 is formed slightly inwardly (corresponding to the width of the control part 262 mentioned later) from a side edge 208a opposite the side edge 215 and in substantially the center. A screw 232, passing with play through a screw hole 231 in the second support plate 20, is screwed in the screw seat 230. Accordingly, on the second base plate 208, the second support plate 209 is mounted to be horizontally turnable about the screw 232 and the screw seat 230 serving as a turning axis.

The first support plate 206 in the first keyboard unit 203 is made of a thin metal plate, e.g., aluminum plate, on which there are arranged a predetermined number of key switches 207 which are operated by the user's left hand. It is to be noted that the number of key switches 207 is determined based on the ISO International Standards (ISO 2126 and ISO 2530).

The first support plate 206 is integrally formed with four supporting parts 233 per one key switch 207 by press working or other techniques. On the first support plate 206, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 233 is formed protruding upward through each hole formed in the membrane switch.

Each key switch 207 is mainly constructed of a key top 234, a pair of link members 235 for vertically guiding the key top 234, and a rubber spring 236 which is disposed on the membrane switch in a position corresponding to a switching part comprised of the movable electrode and the fixed electrode of the membrane switch and urges the key top 234 upward. Each upper end of the pair of link members 235 is movably connected with the key top 234 on its lower surface and each lower end of the link members 235 is movably engaged in each supporting part 233. During non-depression, the key top 234 is urged upward by the urging force of the rubber spring 236 and held in a non-depression position. When the key top 234 is pressed down against the urging force of the rubber spring 236, the rubber spring 236 pushes the movable electrode of the membrane switch to bring the movable electrode into contact with the fixed electrode in the switching hole, thereby performing a switching operation. The above mentioned key switches 207 and the first support plate 206 constitute a first key unit 237. The structure of each key switch 207 is well known in the art and the detailed explanation thereof is omitted herein.

The first support plate 206 is formed, in one side (the right side in Fig. 25), with a circular arc face 238 coincident with the turning radius of the first support plate 206 which turns about the turning axis (i.e., the screw 229 passing through the screw hole 228 with play and the screw seat 227). The first support plate 206 is also formed with an arcuate slot 239 inwardly from the circular arc face 238. A screw 240 passes with play through this arcuate slot 239 and is screwed in a screw seat 241 formed in the first base plate 205. The slot 239 and the screw 240 serve to guide the first support plate 206 so that it is stably turned in a horizontal direction on the first plate 205.

On the side of the first support plate 206 where the circular arc face 238 is formed, there is placed a first support member 244 with a circular arc face 242 which is equal in curvature radius to the circular arc face 238 and is formed with a link placing portion 243. Further, the circular arc face 242 of the first support member 244 is formed with a plurality of locking recesses 245 which constitute part of a locking mechanism 257 which will be mentioned later.

As described above, the circular arc face 238 of the first support plate 206 and the circular arc face 242 of the first support member 244 are configured to have an equal curvature radius. Accordingly, the circular arc faces 238 and 242 coincide with each other. This makes it possible to prevent displacement between the circular arc faces 238 and 242 and improve the appearance of the first key unit 237. The first support member 244 is set in the first support plate 206 in such a manner as covering the screw 240 and the slot 239 from above, thereby hiding the screw 240 and the slot 239 from view to further improve the appearance of the first key unit 237.

A peripheral wall member 246 is formed in the first support plate 206 except for a part thereof. When the first support plate 206 is mounted on the first base plate 205, the peripheral wall member 246 is joined to the peripheral wall member 223 provided in the first base plate 205 to constitute a peripheral wall member surrounding the periphery of the first support plate 206 except for the circular arc face 238.

The second support plate 209 in the second keyboard unit 204 is made of a thin metal plate, e.g., aluminum plate, as with the first support plate 206. On this second support plate 209, there are arranged a predetermined number of key switches 210 which are operated by the user's right hand. It is to be noted that the number of key switches 210 is determined based on the ISO International Standards (ISO 2126 and ISO 2530) and to be larger than the number of key switches 207 arranged on the first support plate 206 which are operated by the user's left hand. Each key switch 210 has an identical structure to each key switch 207 and will accordingly be explained with the same reference numerals.

The second support plate 209 is integrally formed with four supporting parts 233 per one key switch 210 by press working or other techniques. On the second support plate 209, there is placed a membrane switch of a three-layer structure (including an upper sheet having a movable electrode, a lower sheet having a fixed electrode, and a spacer sheet placed between the upper and lower sheets and formed with a switching hole to separate the movable electrode and the fixed electrode). Each supporting part 233 is formed protruding upward through each hole formed in the membrane switch.

Each key switch 210 is mainly constructed of a key top 234, a pair of link members 235 for vertically guiding the key top 234, and a rubber spring 236 which is disposed on the membrane switch in a position corresponding to a switching part comprised of the movable electrode and the fixed electrode of the membrane switch and urges the key top 234 upward. Each upper end of the pair of link members 235 is movably connected with the key top 234 on its lower surface and each lower end of the link members 235 is movably engaged in each supporting part 233. During non-depression, the key top 234 is urged upward by the urging force of the rubber spring 236 and held in a non-depression position. When the key top 234 is pressed down against the urging force of the rubber spring 236, the rubber spring 236 pushes the movable electrode of the membrane switch to bring the movable electrode into contact with the fixed electrode in the switching hole, thereby performing a switching operation. The above mentioned key switches 210 and the second support plate 209 constitute a second key unit 247.

The second support plate 209 is formed, in one side (the left side in Fig. 25), with a circular arc face 248 coincident with the turning radius of the second support plate 209 which turns about the turning axis (i.e., the screw 231 passing through the screw hole 231 with play and the screw seat 230). The second support plate 209 is also formed with an arcuate slot 249 inwardly from the circular arc face 248. A screw 250 passes with play through this arcuate slot 249 and is screwed in a screw seat 251 formed in the second base plate 208. The slot 249 and the screw 250 serve to guide the second support plate 209 so that it is stably turned in a horizontal direction on the second base plate 208.

On the side of the second support plate 209 where the circular arc face 248 is formed, there is placed a second support member 254 with a circular arc face 252 which is equal in curvature radius to the circular arc face 248 and is formed with a link placing portion 253 inwardly from the circular arc face 252. Further, the circular arc face 252 of the second support member 254 is formed with a plurality of locking recesses 255 (see Fig. 26) which constitute part of a locking mechanism 257 which will be mentioned later.

As described above, the circular arc face 248 of the second support plate 209 and the circular arc face 252 of the second support member 254 are configured to have an equal curvature radius. Accordingly, the circular arc faces 248 and 252 coincide with each other. This makes it possible to prevent displacement between the circular arc faces 248 and 252 and improve the appearance of the second key unit 247. The second support member 254 is set in the second support plate 209 in such a manner as covering the screw 250 and the slot 249 from above, thereby hiding the screw 250 and the slot 249 from view to further improve the appearance of the second key unit 247.

A hollow peripheral wall member 256 is formed in the second support plate 209 except for a part thereof. When the second support plate 209 is mounted on the second base plate 208, the peripheral wall member 256 is joined to the peripheral wall member 224 provided in the second base plate 208 to constitute a peripheral wall member surrounding the periphery of the second support plate 209 except for the circular arc face 248.

Next, referring to Figs. 26 and 27, an explanation is given to a synchronizing mechanism for causing synchronous turning of the first support plate 206 and the second support plate 209 when they are turned horizontally on the first base plate 205 and the second base plate 208 respectively and a locking mechanism for locking the first support plate 206 and the second support plate 209 in respective positions after they are turned by the synchronizing mechanism. Fig. 26 is an enlarged explanatory view showing the synchronizing mechanism for causing the synchronous turning of the first and second support plates 206 and 209. Figs. 27 are explanatory views showing the first and second support plates 206 and 209 in sequence from a state where they are not turned to a state where they have been turned to the maximum turning position; Fig. 27(A) shows a non-turned state, Fig. 27(B) shows a halfway turned state, and Fig. 27(C) shows a fully turned state to the maximum turning position.

In Fig. 26, a first link member 280 is placed between the link placing portion 243 formed in the first support member 244 and the connecting portions 221B (a lower connecting portion 221B in Fig. 26) each existing between two of the circular plates 221A of the sliding member 222. The first link member 280 is pivoted to the link placing portion 243 by a screw 281 while it is secured to the connecting portion 221B by one end of an U-shaped link stopper member 282. Between a link placing portion 253 formed in the second support member 254 and the connecting portion 221B, a second link member 283 is placed. This second link member 283 is pivoted to the link placing portion 253 by a screw 284 while it is secured to the connecting portion 221B by the other end of the U-shaped link stopper member 282.

As mentioned above, in the synchronizing mechanism using two link members, namely, the first link member 280 and the second link member 283, the sliding member 222 and the first support member 244 are linked through the first link member 289, while the sliding member 222 and the second support member 254 are linked through the second link member 283. Accordingly, when one of the first key unit 237 and the second key unit 247 is turned on the first base plate 205 or the second base plate 208, the turning force is transmitted from the first link member 280 or the second link member 283 to the other key unit through the sliding member 222 caused to slide on the support shaft 210.

In the state where the first and second support plates 206 and 209 are not turned, as shown in Fig. 27(A), each key switch 207 arranged on the support plate 206 and each key switch 210 arranged on the support plate 209 have the same key placement relation as that in a standard keyboard. The sliding member 222 is in an uppermost position as shown in Fig. 27(A). If the use of the keyboard 201 having the above key placement is desired, needless to say, the keyboard may be operated in this state.

When the first key unit 237 or the second key unit 247 is turned clockwise or counterclockwise in Fig. 27(A) from the state shown in Fig. 27(A), the sliding member 222 is caused to slide along the support shaft 219 downward in Fig. 27(A) because of the linkage between the link placing portion 243 of the first support member 244 and the sliding member 222. Then, the first support plate 206 and the second support plate 209 are synchronously turned clockwise about the screw 229 and the screw seat 227 serving as the turning axis and counterclockwise about the screw 232 and the screw seat 230 serving as the turning axis respectively. Fig. 27(B) shows the first and second support plates 206 and 209 that have been turned slightly in the above way. If the operation of the keyboard 201 having the above key placement relation is desired, the keyboard may be operated in this state.

When the first support plate 206 or the second support plate 209 is further turned from the state shown in Fig. 27(B), the sliding member 222 is caused to slide on the support shaft 219 more downward from the position shown in Fig. 27(B), causing synchronous turning of the first support plate 206 and the second support plate 209 in a clockwise direction and a counterclockwise direction respectively. Fig. 27(C) shows the first support plate 206 and the second support plate 209 turned to the maximum turning positions. If the operation of the keyboard 201 having the above key placement is desired, the keyboard may be operated in this state.

Consequently, when the user turns the first key unit 237 or the second key unit 247 prior to the use of the keyboard 201, the other key unit will turned in synchronization with the turning of the former key unit. In this way, each key unit 237, 247 is adjusted to a desirable operating state by a very simple operation so that each user can operate the keyboard in individual suitable operating state.

Next, referring to Fig. 26, an explanation is made on the locking mechanism for locking the first key unit 237 and the second key unit 247 to the first base plate 205 and the second base plate 208 respectively after the key units 237 and 247 are turned synchronously as above to respective desired turning positions.

The locking mechanisms 257 are provided between the first base plate 205 and the first key unit 237 and between the second base plate 208 and the second key unit 247, respectively. Each locking mechanism 257 has an identical structure and therefore the following explanation is made on only the locking mechanism 257 provided between the second base plate 208 and the second key unit 247. It is to be noted that the locking mechanism 257 provided between the first base plate 205 and the first key unit 237 is constructed of locking recesses 245 formed in the circular arc face 242 of the first support member 244 placed on the first support plate 206 in the first key unit 237 and a resilient locking piece (not shown) formed in the bearing member 213 provided at the corner 212 of the first base plate 205.

As an alternative to providing the locking mechanism 257 in both of the first and second key units 237 and 247 as above, the locking mechanism 257 could be provided in either of them.

In the locking mechanism 257 shown in Fig. 26, the bearing member 217 provided at the corner 216 of the second base plate 208 is formed to be hollow in which a pair of holding portions 258 is provided. Between the pair of holding portions 258, a resilient locking piece 259 made of a resilient thin metal plate bent in the shape of a Japanese letter "〈 " is placed with both ends held in the holding portions 258. A concave curved surface 260 of the bearing member 217 which is in contact with the circular arc face 252 of the second gear member 254 is formed with an opening 261 through which a peaked end of the resilient locking piece 259 protrudes. The peaked end of the resilient locking piece 259 protruding through the opening 261 in this way is engaged in one of a plurality of locking recesses 255 formed in the circular arc face 252 of the second gear member 254.

With the aforementioned locking mechanism 257, the first and second key units 237 and 247 can be locked when they are turned synchronously to the desired turning positions and thereat the peaked end of the resilient locking piece 259 is engaged in the locking recess 255 of the second gear member 254. Thus, the keyboard can be operated stably in the fixed state most suitable for each user.

The locking mechanism 257 is simply constructed of the locking recesses 255 formed in the circular arc face 252 of the second gear member 254 and the resilient locking piece 259 placed in the bearing member 217 of the second base plate 208. The locking mechanism 257 of each of the first and second key units 237 and 247 can be achieved at lower cost. Because the locking recesses 255 are formed in the circular arc face 252 of the second gear member 254, the locking recesses 255 can be made at the same time of the formation of the circular arc face 252, thereby achieving a further reduction in cost.

Each structure provided in the keyboard 201 is explained below with reference to Figs. 28 to 35.

In the keyboard 201, as mentioned above, the predetermined number of key switches 207 which are operated by the left hand are arranged according to the ISO International Standards (ISO 2126 and ISO 2530) on the first support plate 206 in the first keyboard unit 203 and the predetermined number of key switches 210 which are operated by the right hand are arranged according to the ISO international Standards on the second support plate 209 in the second keyboard unit 204. The number of key switches 207 which are operated by the left hand is determined to be smaller than the number of key switches 210 which are operated by the right hand. Based on this, as shown in Fig. 27, the longitudinal length of the first keyboard unit 203 is determined to be shorter than the longitudinal length of the second keyboard unit 204.

When the first and second keyboard units 203 and 204 having the different lengths as above are folded, their lengths are unbalanced, deteriorating the portability of the keyboard 201. In the keyboard 201 in the present embodiment, therefore, a control part 262 for controlling the keyboard 201 is placed alongside one side edge of the first keyboard unit 203 (which is an opposite edge to the side rotatably connected with the second keyboard unit 204; a left side edge in Fig. 28) as shown in Figs. 28(A) to 28(C) so that the total longitudinal length of the first keyboard unit 203 with the addition of the control part 262 be equal to the longitudinal length of the second keyboard unit 204.

With the above structure, it is possible to effectively utilize the space generated in the first keyboard unit 203 due to the difference in length between the first and second keyboard units 203 and 204. As compared with the case where the control part 262 is placed under the keyboard 201 or at the side of the keyboard 201, a reduction in the thickness and size of the keyboard 201 can be improved.

Fig. 28(A) shows the keyboard 201 in the folded state during nonuse, in which the keyboard units 203 and 204 are superposed after rotation in a direction to come close to each other about the support shaft 219 inserted in the bearing hole 213A of each bearing 213B of the bearing member 213 and the bearing hole 217A of the bearing 217B of the bearing member 217 and in the bearing hole 214A of each bearing 214B of the bearing member 214 and the bearing hole 218A of the bearing 218B of the bearing member 218. It is shown that the total longitudinal length of the first keyboard unit 203 with the addition of the control part 262 is equal to the longitudinal length of the second keyboard unit 204, achieving a compact structure.

Fig. 28(B) shows the keyboard 201 in which the keyboard units 203 and 204 are held in the horizontal state during use after rotation in a direction to come apart from each other about the support shaft 219. It is shown that the total longitudinal length of the first keyboard unit 203 with the addition of the control part 262 is equal to the length of the second keyboard unit 204, so that the right and left lengths of the keyboard 201 centering on the support shaft 219 is well balanced.

To the control part 262 in substantially its center, as shown in Fig. 28(C), a cover member 263 is attached to be opened and closed. On the underside of this cover member 263 is provided a connector member 264 which is connected to various kinds of portable electronic devices such as a PDA. The connector member 264 is connected to a flexible substrate 265 which is connected to a control unit (not shown) built in the control part 262 to control the keyboard 201. A pair of wire members 266A is fixed to both sides of the cover member 263 near the connector member 264. A wire member 266B rotatably spans outer ends of the wire members 266A. Furthermore, a support wire 266C is fixed to the center of the wire member 266B. Each wire member 266A is rotated together with the cover member 263 to the state shown in Fig. 28(C). The support wire 266C is then turned backward to hold the portable electronic device such as a PDA in a slanting position. Those wire members 266A, 266B, and 266C constitute a backrest member 266 for holding the portable electronic device such as a PDA in the slanting position.

As above, the connector member 264 is placed on the cover member 263 rotatably attached to the control part 262 and the backrest member 266 is provided in the cover member 263 near the connector member 264. The portable electronic device such as a PDA can be held in the slanting position while it is connected directly to the connector member 264 without needing cables or the like.

An explanation is made herein, referring to Fig. 28(B) and Fig. 31, on the structure to put the backrest member 266 constructed as above in the keyboard units 203 and 204 when these units 203 and 204 are folded as shown in Fig. 28(A). Fig. 31 is an enlarged sectional view of the keyboard units 203 and 204 in the folded state, showing their sections along a direction (the short side direction) perpendicular to the longitudinal direction of each keyboard unit 203, 204.

As shown in Fig. 28(B), in the first keyboard unit 203, there exist from above even clearances between a first key switch row K1 and a second key switch row K2, between the second key switch row K2 and a third key switch row K3, and between the third key switch row K3 and a fourth key switch row K4, respectively. This relation is similarly established in the second keyboard unit 204; specifically, between a first key switch row K1 and a second key switch row K2, between the second key switch row K2 and a third key switch row K3, and between the third key switch row K3 and a fourth key switch row K4, respectively. Accordingly, in the folded state shown in Fig. 28(A), in cooperation with the shape of each key top 234 in each key switch row, a clearance S is generated between the adjacent key switch rows in the first and second keyboard units 203 and 204 facing each other as shown in Fig. 31.

In the keyboard 201 in the present embodiment, one of the wire members 266A of the backrest member 266 is put in the clearance S generated between the first and second key switch rows K1 and K2, the support wire 266C is put in the clearance S generated between the second and third key switch rows K2 and K3, and similarly the other wire member 266A is put in the clearance S generated between the third and fourth key switch rows K3 and K4. The wire member 266B can be put well in the clearance generated between the first and second keyboard units 203 and 204 because a height difference existing between the top surface of each key top 234 and the flat surface of the first gear member 244 will be doubled when the first and second keyboard 203 and 204 are folded.

As mentioned above, it is constructed such that each wire member 266A and the support wire 266C constituting the backrest member 266 are put in the clearances S between the key switch rows facing each other in the folded keyboard units 203 and 204, while the wire member 266B is put in the clearance between the keyboard units 203 and 204. Consequently, the total thickness of the first and second keyboard units 203 and 204 in the folded state can be made smaller. Because the backrest member 266 need not be attached outside the keyboard 201, a reduction in the size of the whole keyboard 201 can be achieved.

Further, there is no need to provide a special structure for storing the backrest member 266 in the keyboard 201, so that the cost for the whole keyboard 201 can be reduced.

Next, a structure for electrically connecting each key switch 207 in the first keyboard unit 203 and each key switch 210 in the second keyboard unit 204 to the control part 262 will be explained with reference to Figs. 28, 29, and 32. Figs. 29 explanatory views showing a relation between the control part 262 and the keyboard 201; Fig. 29(A) is an explanatory view showing a state where the control part 262 is detached from the first keyboard unit 203, and Fig. 29(B) is an explanatory view showing a state where the control part 262 is to be connected to the jointed-arm.

The jointed-arm 267 is pivotally connected to the arm supporting part 225 formed on the back of the peripheral wall member 223 of the first base plate 205 in the first keyboard unit 203. The jointed-arm 267 is constructed of a first arm member 267A which is hollow and pivotally connected at one end to the arm supporting part 225 with a first connecting pin 268A and a second arm member 267B which is hollow and pivotally connected to the other end of the first arm member 267A with a second connecting pin 268B.

The signal wire 269 connected to the membrane switch corresponding to each of the key switches 210 arranged on the second support plate 209 in the second key unit 247 is laid to extend from the hollow peripheral wall member 256 formed in the second support plate 209 to the hollow peripheral wall member 224 formed in the second base plate 208, and extend through the bearing member 218, the bearing 218B, the bearing member 214, and the peripheral wall member 223 of the base plate 205 to the arm supporting part 225. The signal wire (not shown) connected to the membrane switch corresponding to each of the key switches 207 arranged on the first support plate 206 in the first key unit 237 is laid extending from the hollow peripheral wall member 223 directly to the arm supporting part 225.

The signal wire extending from the second key unit 247 and the signal wire extending from the first key unit 237 are collected up in the arm supporting part 225 and set in the first arm member 267A and the second arm member 267B. The thus set signal wires are connected to the connector member 270 (see Fig. 29(A)) provided on one side of the second arm member 267B.

In the control part 262, two projections 271 are formed on the side face which faces the side edge of the first keyboard unit 203. Each projection 271 is detachably fitted in a positioning hole (not shown) formed in the peripheral wall member 246 of the first support plate 206 in the first keyboard unit 203. The control part 262 is detachably placed at the side of the first keyboard unit 203. The control part 262 is also provided, on the end face, with the connector member 272 which is connected to the connector member 270 of the second arm member 267B.

As mentioned above, each projection 271 of the control part 262 is detachably fitted in the positioning hole in the peripheral wall member 246 in the first keyboard unit 203 and the connector member 272 of the control part 260 is allowed to connect with and disconnect from the connector member 270 of the second arm member 267B. Thus, the control part 262 is constructed to be detachable/attachable with respect the first keyboard unit 203. If a plurality of control parts 262 are prepared in correspondence with various portable electronic devices such as a PDA, it is possible to use the same keyboard 201 by replacement of only the control part 262 to input data to the associated portable electronic device, thereby avoiding waste in buying a new keyboard 201 corresponding to a portable electronic device to be used, thus reducing an expense burden on the user. A manufacturer of the keyboard 201 does not have to manufacture individual keyboards 201 corresponding to various types of portable electronic devices individually. It is therefore possible to reduce investment costs and management expenses needed for manufacturing of many kinds of keyboards.

The action of the arm member 267 constructed as above is explained with reference to Figs. 29 and 30. Fig. 30 is an explanatory view showing various using states of the jointed-arm.

As shown in Figs. 29, of the jointed-arm 267, the first arm part 267A is pivotally connected at one end to the arm supporting part 225 formed on the back (opposite the operator) of the peripheral wall member 223 with the first connecting pin 268A. The second arm member 267B is pivotally connected to the other end of the first arm member 267A with the second connecting pin 268B. The control part 262 is constructed to be detachable/attachable with respect the first keyboard unit 203 as mentioned above, so that the control part 262 can be positioned in various using states through the use of a free turning property of the jointed-arm 267.

For instance, as shown in Figs. 30, after each projection 271 of the control part 262 is removed from the positioning hole in the peripheral wall member 246, the control part 262 may be placed in parallel with the keyboard 201 in the longitudinal direction thereof. The control part 262 in this case can be used in the configuration (A) in Fig. 30. When the first arm member 267A is turned clockwise about the first connecting pin 268A from the configuration (A), the control part 262 can be used in the configuration (B) where the control part 262 is placed apart from the keyboard 201. Further, when the first arm member 267A is further turned clockwise about the connecting pin 268A from the configuration (B), the control part 262 can be used in the configuration (C) close to the back side edge (opposite the operating side) of the keyboard 201 at substantially the center in the longitudinal direction.

Fig. 33 shows the case where a PDA 273 is held in the slanting position by the backrest member 266 while a contact terminal of the PDA 273 is connected to the connector member 264 of the control part 262 in the configuration (B) in Fig. 30. Similarly, Fig. 34 shows the case where the PDA 173 is held in the slanting position by the backrest member 266 while the contact terminal of the PDA 273 is connected to the connector member 264 of the control part 262 in the configuration (C) in Fig. 30.

As described above, the control part 262 is constructed to be detachable/attachable with respect to the first keyboard unit 203 and be connected to the first keyboard unit 203 through the jointed-arm 267. The placement relation between the control part 262 and the keyboard 201 can be freely changed within a range allowed by the jointed-arm 267. Accordingly, the placing position of the PDA 273 with respect to the keyboard 201 can be freely changed to a desired position for the keyboard user to enhance the operationality.

In relation to the jointed-arm 267 constructed as above, explanations will be given referring to Fig. 35 about a connecting structure of the first connecting pin 268A which connects the first arm member 267A and the arm supporting part 225 and a connecting structure of the second connecting pin 268B which connects the first arm member 267A and the second arm member 267B. Fig. 35 is an explanatory view schematically showing the keyboard 201 seen from back in the state shown in Fig. 28(B) and in the configuration (C) in Fig. 30.

In Fig. 35, the thickness H of the second arm member 267B is determined to be larger than the thickness h of the keyboard 201 (the thickness between the bottom surface of each of the first and second base plates 205 and 208 and the top surface of each key top 234) in consideration of the necessity of providing the connector member 270 to be connected to the connector member 272 of the control part 262. Accordingly, in the states shown in Fig. 28(B) and (C) where the keyboard 201 is not used, a plane provided by the top surfaces of the key switches 207, 210 is slightly tilted, not parallel, relative to the setting plane where the keyboard 201.

In the keyboard 201 in the present embodiment, considering such circumstances, the first connecting pin 268A and the second connecting pin 268B are provided for connection at an angle so that the bottom surface of the keyboard 201 (i.e., the bottom surfaces of the first and second base plates 205 and 208) be flush with the bottom surface of the second arm member 267B during actual use of the keyboard 201.

To be more specific, in Fig. 35, the first connecting pin 268A which pivotally connects the arm supporting part 225 and the first arm member 267A is provided at a slant angle A with respect to a perpendicular line L. On the other hand, the second connecting pin 268B which pivotally connects the first arm member 267A and the second arm member 267B is provided at a slant angle B with respect to the perpendicular line L. The angle B is determined to be larger than the angle A.

As above, the first connecting pin 268A is provided at the slant angle A with respect to the perpendicular line L while the second connecting pin 268B is provided at the slant angle B with respect to the perpendicular line L. When the control part 262 is moved to the configuration (C) in Fig. 30, accordingly, the second arm member 267B is positioned upward by a height corresponding to the thickness difference (H-h) based on the total slant angle (A+B). Thus, the bottom surface of the control part 262 (which is placed to be flush with the lower end surface of the second arm member 267B) becomes flush with the bottom surface of the keyboard 201.

Even where the thickness H of the second arm member 267B and the thickness of the control part 262 are not equal to the thickness h of the keyboard 201, the bottom surface of the second arm member 267B or the control part 262 can become flush with the bottom surface of the keyboard 201 during use with the first connecting pin 268A and the second connecting pin 268B provided at their respective slant angles, thus bringing the plane provided by the top surfaces of the key switches 207, 210 into parallel relation with the setting plane of the keyboard 201. This makes it possible to prevent a deterioration of key operationality.

In the above example, both the first connecting pin 268A and the second connecting pin 268B are provided in the slanting positions. In an alternative, only either of the connecting pins may be provided in the slanting position.

### (4) Fourth embodiment

A fourth embodiment of a foldable keyboard embodying the present invention will be explained below with reference to attached drawings. At first, a schematic structure of the keyboard in the second embodiment is explained with reference to Fig. 36. Fig. 36 is an exploded perspective view schematically showing the foldable keyboard.

In Fig. 36, the keyboard 301 is basically structured of a first keyboard unit 303 and a second keyboard unit 304 which are rotatably connected with each other by a rotational connecting part 302. The first keyboard unit 303 includes a first base plate 305, a first support plate 306 mounted to be rotatable in a horizontal direction on the first base plate 305, and a plurality of key switches 307 arranged on the first support plate 306. The second keyboard unit 304 includes a second base plate 308, a second support plate 309 mounted to be rotatable in a horizontal direction on the second base plate 308, and a plurality of key switches 310 arranged on the second support plate 309.

At first, the structure of the rotational connecting part 302 is explained below. The first base plate 305 is made of a thin metal plate, e.g., aluminum plate. This first base plate 305 includes, at a side edge 311 (a right side edge in Fig. 25), a resinous hollow bearing member 312 both ends of which are integrally formed with bearing parts 313, 314 constituting part of the rotational connecting part 302. The bearing member 312 is internally provided with a circular arc face 380 which is equal in curvature radius to a circular arc face 338 of the first support plate 306 which will be mentioned later. The bearing part 313 is provided with two bearings 313B spaced apart, each being formed with a bearing hole 313A. The bearing part 314 is similarly provided with two bearings 314B spaced apart, each being formed with a bearing hole 314A.

As with the first base plate 305, the second base plate 308 is made of a thin metal plate, e.g., aluminum plate. This second base plate 308 includes, at a side edge 315 (a left side edge in Fig. 36), a resinous bearing member 316 both of which are integrally formed with bearing parts 317 and 318. The bearing member 316 is internally provided with a circular arc face 381 which is equal in curvature radius to a circular arc face 348 of the second support plate 309 which will be mentioned later. The bearing part 317 is provided with a single bearing 317B formed with a bearing hole 317A. The bearing part 318 is similarly provided with a single bearing 318B formed with a bearing hole 318A. The bearing 317B is fitted between the bearings 313B so that the bearing hole 317A of the bearing 317B is aligned with the bearing holes 313A of the bearings 313B. Further, the bearing 318B is fitted between the bearings 314B so that the bearing hole 318A of the bearing 318B is aligned with the bearing holes 314A of the bearings 314B. A support shaft 319A is inserted in the bearing holes 313A and 317A arranged in line, while another support shaft 319B is inserted in the bearing holes 314A and 318A. Thus, the first base plate 305 and the second base plate 308 are held to be mutually rotatable by the support shafts 319A and 319B.

The first base plate 305 is formed with a guide groove 323 in which a signal wire (not shown) for connecting each key switch 307 provided in the first keyboard unit 303 to a control part 362 (mentioned later) is set. This signal wire is set in the guide groove 323 to extend to the hollow bearing member 312 and therefrom into a jointed-arm 367 (mentioned later). An arm supporting part 325 is formed to be hollow on the back of the bearing member 312 and pivotally supports the jointed-arm 367. Through the arm supporting part 325, the signal wire laid as above is set in the jointed-arm 367. The second base plate 308 is formed with a guide groove 324 in which a signal wire (not shown) for connecting each key switch 310 provided in the second keyboard unit 304 to the control part 362 is set. This signal wire is set in the guide groove 324 to extend to the hollow bearing part 318 and the bearing member 318B and therefrom to the outside and then pass from the hollow bearing part 314 through the arm supporting part 325 into the jointed-arm 367.

In the first base plate 305, a screw seat 327 is formed near a side edge 326 opposite the side edge 311 and in substantially the center. A screw 329, passing with play through a screw hole 328 in the first support plate 306, is screwed in the screw seat 327. Thus, on the first base plate 305, the first support plate 306 is mounted to be horizontally turnable about the screw 329 and the screw seat 327 serving as a turning axis. In the second base plate 308, similarly, a screw seat 330 is formed slightly inwardly (corresponding to the width of the control part 362 mentioned later) from a side edge 308a opposite the side edge 315 and in substantially the center. A screw 332, passing with play through a screw hole 331 in the second support plate 309, is screwed in the screw seat 330. Accordingly, on the second base plate 308, the second support plate 309 is mounted to be horizontally turnable about the screw 332 and the screw seat 330 serving as a turning axis.

Because the screw seat 327 in which the screw 329 is screwed is formed inwardly from the side edge 311 of the first base plate 305 and the screw seat 330 in which the screw 332 is screwed is formed inwardly from the side edge 308a of the second base plate 308, as above, the screw 329 is placed within the first key unit 337 and the screw 332 is placed within the second key unit 347. This makes it possible to more reliably prevent foreign matter from bumping against or entering each screw 329, 332 as compared with the case where the screws 329 and 332 are provided outside the associated key units 337 and 347 respectively. Thus, the first and second key units 337 and 347 can be held to be rotatable on the first and second base plates 305 and 308 respectively. Further, the structure that the screws 329 and 332 are placed inside the key units 337 and 347, avoiding placement outside the key units 337 and 347, can result in a reduction in size of each keyboard unit 303, 304.

The first support plate 306 in the first keyboard unit 303 is made of a thin metal plate, e.g., aluminum plate, on which there are arranged a predetermined number of key switches 307 which are operated by the user's left hand. It is to be noted that the number of key switches 307 is determined based on the ISO International Standards (ISO 2126 and ISO 2530).

The first support plate 306 is integrally formed with four supporting parts 333 per one key switch 307 by press working or other techniques. On the first support plate 306, there is placed a membrane switch of a three-layer structure not shown (including an upper sheet having a movable electrode, a lower sheet having a fixed electrode, and a spacer sheet placed between the upper and lower sheets and formed with a switching hole to separate the movable electrode and the fixed electrode). Each supporting part 333 is formed protruding upward through each hole formed in the membrane switch.

Each key switch 307 is mainly constructed of a key top 334, a pair of link members 335 for vertically guiding the key top 334, and a rubber spring 336 which is disposed on the membrane switch in a position corresponding to a switching part comprised of the movable electrode and the fixed electrode of the membrane switch and urges the key top 334 upward. Each upper end of the pair of link members 335 is movably connected with the key top 334 on its lower surface and each lower end of the link members 335 is movably engaged in each supporting part 333. During non-depression, the key top 334 is urged upward by the urging force of the rubber spring 336 and held in a non-depression position. When the key top 334 is pressed down against the urging force of the rubber spring 336, the rubber spring 336 pushes the movable electrode of the membrane switch to bring the movable electrode into contact with the fixed electrode in the switching hole, thereby performing a switching operation. The above mentioned key switches 307 and the first support plate 306 constitute a first key unit 337. The structure of each key switch 307 is well known in the art and the detailed explanation thereof is omitted herein.

The first support plate 306 is formed, in one side (the right side in Fig. 36), with a circular arc face 338 coincident with the turning radius of the first support plate 306 which turns about the turning axis (i.e., the screw 329 passing through the screw hole 328 with play and the screw seat 327). The first support plate 306 is also formed with an arcuate slot 339 inwardly from the circular arc face 338. A screw 340 passes with play through this arcuate slot 339 and is screwed in a screw seat 341 formed in the first base plate 305. The slot 339 and the screw 340 serve to guide the first support plate 306 so that it is stably turned in a horizontal direction on the first base plate 305.

On the side of the first support plate 306 where the circular arc face 338 is formed, there is placed a first support member 344 having a circular arc face 342 which is equal in curvature radius to the circular arc face 338, a plurality of locking recesses 345 under the circular arc face 342, and scales 343 marked on the circular arc face 342 in positions each corresponding to the associated locking recess 345. The locking recesses 345 constitute part of the locking mechanism 357 mentioned later.

As described above, the circular arc face 338 of the first support plate 306 and the circular arc face 342 of the first support member 344 are configured to have an equal curvature radius. Accordingly, the circular arc faces 338 and 342 coincide with each other. This makes it possible to prevent displacement between the circular arc faces 338 and 342 and improve the appearance of the first key unit 337. The first support member 344 is set in the first support plate 306 in such a manner as covering the screw 340 and the slot 339 from above, thereby hiding the screw 340 and the slot 339 from view to further improve the appearance of the first key unit 337. A peripheral wall member 346 is formed around the first support plate 306.

The second support plate 309 in the second keyboard unit 304 is made of a thin metal plate, e.g., aluminum plate as with the first support plate 306. On this second support plate 309, there are arranged a predetermined number of key switches 310 which are operated by the user's right hand. It is to be noted that the number of key switches 310 is determined based on the ISO International Standards (ISO 2126 and ISO 2530) and to be larger than the number of key switches 307 arranged on the first support plate 306 which are operated by the user's left hand. Each key switch 310 has an identical structure to each key switch 307 and will accordingly be explained with the same reference numerals.

The second support plate 309 is integrally formed with four supporting parts 333 per one key switch 310 by press working or other techniques. On the second support plate 309, there is placed a membrane switch of a three-layer structure not shown (including an upper sheet having a movable electrode, a lower sheet having a fixed electrode, and a spacer sheet placed between the upper and lower sheets and formed with a switching hole to separate the movable electrode and the fixed electrode). Each supporting part 333 is formed protruding upward through each hole formed in the membrane switch.

Each key switch 310 is mainly constructed of a key top 334, a pair of link members 335 for vertically guiding the key top 334, and a rubber spring 336 which is disposed on the membrane switch in a position corresponding to a switching part comprised of the movable electrode and the fixed electrode of the membrane switch and urges the key top 334 upward. Each upper end of the pair of link members 335 is movably connected with the key top 334 on its lower surface and each lower end of the link members 335 is movably engaged in each supporting part 333. During non-depression, the key top 334 is urged upward by the urging force of the rubber spring 336 and held in a non-depression position. When the key top 334 is pressed down against the urging force of the rubber spring 336, the rubber spring 336 pushes the movable electrode of the membrane switch to bring the movable electrode into contact with the fixed electrode in the switching hole, thereby performing a switching operation. The above mentioned key switches 310 and the second support plate 309 constitute a second key unit 347.

The second support plate 309 is formed, in one side (the left side in Fig. 36), with a circular arc face 348 coincident with the turning radius of the second support plate 309 which turns about the turning axis (i.e., the screw 331 passing through the screw hole 331 with play and the screw seat 330). The second support plate 309 is also formed with an arcuate slot 349 inwardly from the circular arc face 348. A screw 350 passes with play through this arcuate slot 349 and is screwed in a screw seat 351 formed in the second base plate 308. The slot 349 and the screw 350 serve to guide the second support plate 309 so that it is stably turned in a horizontal direction on the second base plate 308.

On the side of the second support plate 309 where the circular arc face 348 is formed, there is placed a second support member 354 having a circular arc face 352 which is equal in curvature radius to the circular arc face 348, a plurality of locking recesses 355 (see Fig. 37) under the circular arc face 352, and scales 353 marked on the circular arc face 352 in positions each corresponding to the associated locking recess 355. The locking recesses 355 constitute part of the locking mechanism 357 mentioned later.

As described above, the circular arc face 348 of the second support plate 309 and the circular arc face 352 of the second support member 354 are configured to have an equal curvature radius. Accordingly, the circular arc faces 348 and 352 coincide with each other. This makes it possible to prevent displacement between the circular arc faces 348 and 352 and improve the appearance of the second key unit 347. The second support member 354 is set in the second support plate 309 in such a manner as covering the screw 350 and the slot 349 from above, thereby hiding the screw 350 and the slot 349 from view to further improve the appearance of the second key unit 347. A peripheral wall member 356 is formed around the second support plate 309.

Next, referring to Fig. 37, an explanation is made on the locking mechanism for locking the first support plate 306 and the second support plate 309 to the first base plate 305 and the second base plate 308 respectively after the support plates 306 and 309 are independently turned in a horizontal direction to respective turning positions. Fig. 37 is an enlarged explanatory view of the locking mechanism for locking the first support plate 306 and the second support plate 309 in the respective turning positions after the first and second support plates 306 and 309 are turned independently.

In Fig. 37, the locking mechanisms 357 are provided between the first base plate 305 and the first key unit 337 and between the second base plate 308 and the second key unit 347, respectively. Each locking mechanism 157 has an identical structure.

The locking mechanism 357 provided between the first base plate 305 and the first key unit 337 is constructed of locking recesses 345 formed under the circular arc face 342 of the first support member 344 placed on the first support plate 306 in the first key unit 337 and a locking piece 359 formed in substantially the center of the circular arc face 380 of the bearing member 313 provided in the first base plate 305.

The locking mechanism 357 need be formed in both the first and second key units 337 and 347 because the first and second key units 337 and 347 are constructed to be independently turnable.

The bearing member 312 in the first base plate 305 is formed to be hollow in which a pair of holding portions 358 is provided. Between the pair of holding portions 358, the locking piece 359 made of a resilient thin metal plate bent in the shape of a Japanese letter "〈 " is placed with both ends held in the holding portions 358. A concave curved surface 380 of the bearing member 312 which is in contact with the circular arc face 342 of the first support member 344 is formed with an opening 361 through which a peaked end of the locking piece 359 protrudes. The peaked end of the locking piece 359 protruding through the opening 361 in this way is engaged in one of the plurality of locking recesses 345 formed in the circular arc face 342 of the first support member 344.

Similarly, the locking mechanism 357 provided between the second base plate 308 and the second key unit 347 in the second keyboard unit 304 is constructed of locking recesses 355 formed under the circular arc face 352 of the second support member 354 placed on the second support plate 309 in the second key unit 347 and a locking piece 359 formed in substantially the center of the circular arc face 381 of the bearing member 316 provided in the second base plate 308.

The bearing member 316 in the second base plate 308 is formed to be hollow in which a pair of holding portions 358 is provided. Between the pair of holding portions 358, the locking piece 359 made of a resilient thin metal plate bent in the shape of a Japanese letter "〈 " is placed with both ends held in the holding portions 358. A concave curved surface 381 of the bearing member 316 which is in contact with the circular arc face 352 of the second support member 354 is formed with an opening 361 through which a peaked end of the locking piece 359 protrudes. The peaked end of the locking piece 359 protruding through the opening 361 in this way is engaged in one of the plurality of locking recesses 355 formed in the circular arc face 352 of the second support member 354.

With the aforementioned locking mechanisms 357, the first and second key units 337 and 347 can be locked after they are turned independently from each other to the desired turning positions. In the turning positions, the peaked end of the locking piece 359 is engaged in the locking recess 345 of the first support member 344, thereby locking the first key unit 337, while the peaked end of the locking piece 359 is engaged in the locking recess 355 of the second support member 354, thereby locking the second key unit 347.

Thus, the keyboard can be operated stably in the fixed state most suitable for each user.

The locking mechanisms 357 are simply constructed of the locking recesses 345 formed in the circular arc face 342 of the first support member 344 and the locking piece 359 formed in the bearing member 312 of the first base plate 305, and, the locking recesses 355 formed in the circular arc face 352 of the second support member 354 and the locking piece 359 formed in the bearing member 316 of the second base plate 308. Accordingly, the locking mechanism 357 of each of the first and second key units 337 and 347 can be achieved at lower cost. Because the locking recesses 345, 355 are formed in the circular arc faces 342, 352 of the first and second gear members 344, 354, the locking recesses 345, 355 can be made at the same time of the formation of the circular arc faces 342, 352, thereby achieving a further reduction in cost.

Next, various states of turning of the first and second key units 337 and 347 are explained with reference to Figs. 38 and 39. Figs. 38 and 39 are explanatory views showing a state where the first and second key units 337 and 347 are not turned and another state where they have been turned to desired turning positions. Fig. 38(A) shows a non-turned state of the first and second key units 337 and 347, Fig. 38(B) shows a state where the first key unit 337 has been turned clockwise and the second key unit 347 has been turned counterclockwise. Fig. 39(A) shows a state where only the first key unit 337 has been turned clockwise from the state shown in Fig. 38(A). Fig. 39(B) shows a state where the second key unit 347 has been turned clockwise from the state shown in Fig. 39(A).

In the state where the first and second support plates 306 and 309 are not turned, as shown in Fig. 38(A), each key switch 307 arranged on the support plate 306 and each key switch 310 arranged on the support plate 309 have the same key placement relation as that in a standard keyboard. At this time, the locking piece 359 held in the bearing member 312 is engaged in the central locking recess 345 of the plurality of locking recesses 345 formed under the circular arc face 342 of the first support member 344. The locking piece 359 held in the bearing member 316 is engaged in the central locking recess 355 of the plurality of locking recesses 359 formed under the circular arc face 352 of the second support member 354. These engagement relations can be confirmed by viewing the scale 343 in the first support member 344 and the scale in the second support member 354.

If the operation of the keyboard 301 with the above key placement relation, needless to say, the keyboard can be operated in this state.

When the first support plate 306 in the first key unit 337 and the second support plate 309 in the second key unit 347 are independently turned clockwise and counterclockwise respectively in Fig. 38(A) from the state shown in Fig. 38(A), the locking recesses 345 correspondingly change positions to allow the locking piece 359 of the bearing member 312 to engage with from one locking recess 345 to another in sequence and the locking recesses 355 correspondingly change positions to allow the locking piece 359 of the bearing member 316 to engage with from one locking recess 355 to another in sequence. When the locking piece 359 of the bearing member 312 is engaged in the endmost locking recess 345 in the turning direction and the locking piece 359 of the bearing member 316 is engaged in the endmost locking recess 355 in the turning direction, the first key unit 337 and the second key unit 347 are brought into the states shown in Fig. 38(B).

The engagement state between the locking piece 359 of the bearing member 312 and the locking recess 345 of the first support member 344 and the engagement state between the locking piece 359 of the bearing member 316 and the locking recess 355 of the second support member 354 can be confirmed by viewing the scale 343 in the first support member 344 and the scale in the second support member 354.

If the operation of the keyboard 301 with the above key placement relation is desired, the keyboard can be operated in this state.

Further, only the first key unit 337 can independently be turned from the state shown in Fig. 38(A). When only the first support plate 306 in the first key unit 337 is turned clockwise in Fig. 38(A) from the state shown in Fig. 38(A), independently from the second support plate 309 in the second key unit 347, the locking recesses 345 move to allow the locking piece 359 of the bearing member 312 to engage with from one locking recess 345 to another in sequence until the locking piece 359 of the bearing member 312 is engaged in the endmost locking recess 345 in the turning direction. The first key unit 337 and the second key unit 347 are thus brought into the state shown in Fig. 39(A).

The engagement state between the locking piece 359 of the bearing member 312 and the locking recess 345 of the first support member 344 in the state shown in Fig. 39(A) and the engagement state between the locking piece 359 of the bearing member 316 and the locking recess 355 of the second support member 354 can be confirmed by viewing the scale 343 in the first support member 344 and the scale 353 in the second support member 354.

If the keyboard 301 with the above key placement relation is desired, the keyboard can be operated in this state.

As explained above, the first and second key units 337 and 347 can be locked independently from each other in respective desired turning positions by the locking mechanism 357 constructed of the locking pieces 359 and the locking recesses 345, 355. This very simple operation to place the keyboard units 337 and 347 independently to respective desired operating states makes it possible to allow each user to stably operate the keyboard in the fixed state most suitable for each user.

Further, the engagement state between the locking piece 359 and each locking recess 345 in the first key unit 337 and the engagement state between the locking piece 359 and each locking recess 355 in the second key unit 347 can be confirmed by viewing, from above the keyboard 301, the scale 343 marked on the circular arc face 342 of the first support member 344 and the scale 353 marked on the circular arc face 352 of the second support member 354. As above, because the first support member 344 is provided with the scales 343 at the positions each corresponding to the associated locking recess 345 and the second support member 354 is provided with the scales 353 at the positions each corresponding to the associated locking recess 355, a user can turn the first and second key units 337 and 347 while viewing the scales 343 and 353. Thus, each turning angle of the key units 337, 347 can be adjusted simply and easily.

Each structure provided in the keyboard 301 is explained below with reference to Figs. 40 to 45.

In the keyboard 301, as mentioned above, the predetermined number of key switches 307 which are operated by the left hand are arranged according to the ISO International Standards (ISO 2126 and ISO 2530) on the first support plate 306 in the first keyboard unit 303 and the predetermined number of key switches 310 which are operated by the right hand are arranged according to the ISO international Standards on the second support plate 309 in the second keyboard unit 304. The number of key switches 307 which are operated by the left hand is determined to be smaller than the number of key switches 310 which are operated by the right hand. Based on this, as shown in Figs. 38 and 39, the longitudinal length of the first keyboard unit 303 is determined to be shorter than the longitudinal length of the second keyboard unit 304.

When the first and second keyboard units 303 and 304 having the different lengths as above are folded, their lengths are unbalanced, deteriorating the portability of the keyboard 301. In the keyboard 301 in the present embodiment, therefore, a control part 362 for controlling the keyboard 301 is placed alongside one side edge of the first keyboard unit 303 (which is an opposite edge to the side rotatably connected with the second keyboard unit 304; a left side edge in Fig. 40) as shown in Figs. 40(A) to 40(C) so that the total longitudinal length of the first keyboard unit 303 with the addition of the control part 362 be equal to the longitudinal length of the second keyboard unit 304.

With the above structure, it is possible to effectively utilize the space generated in the first keyboard unit 303 due to the difference in length between the first and second keyboard units 303 and 304. As compared with the case where the control part 362 is placed under the keyboard 301 or at the side of the keyboard 301, a reduction in the thickness and size of the keyboard 301 can be improved.

Fig. 40(A) shows the keyboard units 303 and 304 in the folded state during nonuse, which have been rotated in a direction to come close to each other about the support shafts 319A and 319B inserted in the bearing hole 313A of each bearing 313B of the bearing member 313 and the bearing hole 317A of the bearing 317B of the bearing member 317, and, in the bearing hole 314A of each bearing 314B of the bearing member 314 and the bearing hole 318A of the bearing 318B of the bearing member 318; respectively. It is shown that the total longitudinal length of the first keyboard unit 303 with the addition of the control part 362 is equal to the length of the second keyboard unit 304, achieving a compact structure.

Fig. 40(B) shows the keyboard units 303 and 304 in the horizontal state during use, which have been rotated in a direction to come apart from each other about the support shaft 319. It is shown that the total longitudinal length of the first keyboard unit 303 with the addition of the control part 362 is equal to the length of the second keyboard unit 304, so that the right and left lengths of the keyboard 301 centering on the support shafts 319A and 319B is well balanced.

To the control part 362 in substantially its center, as shown in Fig. 40(C), a cover member 363 is attached to be opened and closed. On the underside of this cover member 363 is provided a connector member 364 which is connected to various kinds of portable electronic devices such as a PDA. The connector member 364 is connected to a flexible substrate 365 which is connected to a control unit (not shown) built in the control part 362 to control the keyboard 301. A pair of wire members 366A is fixed to both sides of the cover member 363 near the connector member 364. A wire member 366B rotatably spans outer ends of the wire members 366A. Furthermore, a support wire 366C is fixed to the center of the wire member 366B. Each wire member 366A is rotated together with the cover member 363 to the state shown in Fig. 40(C). The support wire 366C is then turned backward to hold the portable electronic device such as a PDA in a slanting position. Those wire members 366A, 366B, and 366C constitute a backrest member 366 for holding the portable electronic device such as a PDA in the slanting position.

As above, the connector member 364 is placed on the cover member 363 rotatably attached to the control part 362 and the backrest member 366 is provided in the cover member 363 near the connector member 364. The portable electronic device such as a PDA can be held in the slanting position while it is connected directly to the connector member 364 without needing cables or the like.

An explanation is made herein, referring to Fig. 40(B) and Fig. 43, on the structure to put the backrest member 366 constructed as above between the keyboard units 303 and 304 when these units 303 and 304 are folded as shown in Fig. 40(A). Fig. 43 is an enlarged sectional view of the keyboard units 303 and 304 in the folded state shown in Fig. 40(A), showing their sections along a direction (the short side direction) perpendicular to the longitudinal direction of each keyboard unit 303, 304.

As shown in Fig. 40(B), in the first keyboard unit 303, there exist from above even clearances between a first key switch row K1 and a second key switch row K2, between the second key switch row K2 and a third key switch row K3, and between the third key switch row K3 and a fourth key switch row K4, respectively. This relation is similarly shown in the second keyboard unit 304; specifically, between a first key switch row K1 and a second key switch row K2, between the second key switch row K2 and a third key switch row K3, and between the third key switch row K3 and a fourth key switch row K4, respectively. Accordingly, in the folded state shown in Fig. 40(A), in cooperation with the shape of each key top 334 in each key switch row, a clearance S is generated between the adjacent key switch rows in the first and second keyboard units 303 and 304 facing each other as shown in Fig. 43.

In the keyboard 301 in the present embodiment, one of the wire members 366A of the backrest member 366 is put in the clearance S generated between the first and second key switch rows K1 and K2, the support wire 366C is put in the clearance S generated between the second and third key switch rows K2 and K3, and similarly the other wire member 366A is put in the clearance S generated between the third and fourth key switch rows K3 and K4. The wire member 366B can be put well in the clearance between the first and second keyboard units 303 and 304 because a height difference existing between the top surface of each key top 334 and the flat surface of the first gear member 344 will be doubled when the first and second keyboard 303 and 304 are folded.

As mentioned above, it is constructed such that each wire member 366A and the support wire 366C constituting the backrest member 366 are put in the clearances S between the key switch rows facing each other in the folded keyboard units 303 and 304, while the wire member 366 is put in the clearance between the keyboard units 303 and 304. Consequently, the total thickness of the first and second keyboard units 303 and 304 in the folded state can be made smaller. Because the backrest member 366 need not be attached outside the keyboard 301, a reduction in the size of the whole keyboard 301 can be achieved.

Further, there is no need to provide a special structure for storing the backrest member 366 in the keyboard 301, so that the cost for the whole keyboard 301 can be reduced.

Next, a structure for electrically connecting each key switch 307 in the first keyboard unit 303 and each key switch 310 in the second keyboard unit 304 to the control part 362 will be explained with reference to Figs. 40 through 42. Figs. 41 are explanatory views showing a relation between the control part 362 and the keyboard 301; Fig. 41(A) is an explanatory view showing a state where the control part 362 is detached from the first keyboard unit 303, and Fig. 41(B) is an explanatory view showing a state where the control part 362 is to be connected to the jointed-arm.

The jointed-arm 367 is pivotally connected to the arm supporting part 325 formed on the back of the peripheral wall member 323 of the first base plate 305 in the first keyboard unit 303. The jointed-arm 367 is constructed of a first arm member 367A which is hollow and pivotally connected at one end to the arm supporting part 325 with a first connecting pin 368A and a second arm member 367B which is hollow and pivotally connected to the other end of the first arm member 367A with a second connecting pin 368B.

The signal wire 369 connected to the membrane switch corresponding to each of the key switches 310 arranged on the second support plate 309 in the second key unit 347 is laid, as mentioned above, in the guide groove 324, and laid to extend to the hollow bearing member 318 and the bearing 318B and therefrom to the outside and then from the hollow bearing member 314 through the arm supporting part 325 into the jointed-arm 367. The signal wire (not shown) connected to the membrane switch corresponding to each of the key switches 307 arranged on the first support plate 306 in the first key unit 337 is laid in the guide groove 323 to extend to the hollow bearing member 312 and into the jointed-arm 367. The arm supporting part 325 formed on the back of the bearing 312 is formed to be hollow and pivotally supports the jointed-arm 367. Through the arm supporting part 325, the signal wires laid as above are set in the jointed-arm 367.

The signal wire extending from the second key unit 347 and the signal wire extending from the first key unit 337 are collected up in the arm supporting part 325 and set in the first arm member 367A and the second arm member 367B. The thus set signal wires are connected to the connector member 370 (see Fig. 41(A)) provided on one side of the second arm member 367B.

In the control part 362, two projections 371 are formed on the side face which faces the side edge of the first keyboard unit 303. Each projection 371 is detachably fitted in a positioning hole (not shown) formed in the peripheral wall member 346 of the first support plate 306 in the first keyboard unit 303. The control part 362 is detachably placed at the side of the first keyboard unit 303. The control part 362 is also provided, on the end face, with the connector member 372 which is connected to the connector member 370 of the second arm member 367B.

As mentioned above, each projection 371 of the control part 362 is detachably fitted in the positioning hole in the peripheral wall member 346 in the first keyboard unit 303 and the connector member 372 of the control part 360 is allowed to connect with and disconnect from the connector member 370 of the second arm member 367B. Thus, the control part 362 is constructed to be detachable/attachable with respect to the first keyboard unit 303. If a plurality of control parts 362 are prepared in correspondence with various portable electronic devices such as a PDA, replacement of only the control part 362 makes it possible to use the same keyboard 301 for the inputting of data to any portable electronic device, thereby avoiding waste in buying a new keyboard 301 corresponding to a portable electronic device to be used, thus reducing an expense burden on the user. A manufacturer of the keyboard 301 individually does not have to manufacture individual keyboards 301 corresponding to various types of portable electronic devices. It is therefore possible to reduce investment costs and management expenses needed for manufacturing of many kinds of keyboards.

The action of the arm member 367 constructed as above is explained with reference to Figs. 41 and 42. Fig. 42 is an explanatory view showing various using states of the jointed-arm.

As shown in Fig. 41, of the jointed-arm 367, the first arm part 367A is pivotally connected at one end to the arm supporting part 325 formed on the back (opposite the operator) of the peripheral wall member 323 with the first connecting pin 368A. The second arm member 367B is pivotally connected to the other end of the first arm member 367A with the second connecting pin 368B. The control part 362 is constructed to be detachable/attachable with respect to the first keyboard unit 303 as mentioned above, so that the control part 362 can be positioned in various using states through the use of a free turning property of the jointed-arm 367.

For instance, as shown in Fig. 42, when each projection 371 of the control part 362 is removed from the positioning hole in the peripheral wall member 346 and the first arm member 367 is turned clockwise about the first connecting pin 368A, the control part 362 may be used in a state apart from the keyboard 301.

Fig. 44 shows the case where a PDA 373 is held in the slanting position by the backrest member 366 while a contact terminal of the PDA 373 is connected to the connector member 364 of the control part 362, to be used in the state shown in Fig. 42.

As described above, the control part 362 is constructed to be detachable/attachable with respect to the first keyboard unit 303 and be connected to the first keyboard unit 303 through the jointed-arm 167. The placement relation between the control part 367 and the keyboard 301 can be freely changed within a range allowed by the jointed-arm 367. Accordingly, the placing position of the PDA 373 with respect to the keyboard 301 can be freely changed to a desired position for the keyboard user to enhance the operability.

In relation to the jointed-arm 367 constructed as above, explanations will be given referring to Fig. 45 about a connecting structure of the first connecting pin 368A which connects the first arm member 367A and the arm supporting part 325 and a connecting structure of the second connecting pin 368B which connects the first arm member 367A and the second arm member 367B. Fig. 45 is an explanatory view schematically showing the keyboard 301 seen from back in the state shown in Fig. 40(B).

In Fig. 45, the thickness H of the second arm member 367B is determined to be larger than the thickness h of the keyboard 301 (the thickness between the bottom surface of each of the first and second base plates 305 and 308 and the top surface of each key top 334) in consideration of the necessity of providing the connector member 370 to be connected to the connector member 372 of the control part 362. Accordingly, in the states shown in Fig. 40(B) and (C) where the keyboard 301 is not used, a plane provided by the top surfaces of the key switches 307, 310 is slightly tilted, not parallel, relative to the plane of a location where the keyboard 301 is placed.

In the keyboard 301 in the present embodiment, considering such circumstances, the first connecting pin 368A and the second connecting pin 368B are provided for connection at an angle so that the bottom surface of the keyboard 301 (i.e., the bottom surfaces of the first and second base plates 305 and 308) be flush with the bottom surface of the second arm member 367B during actual use of the keyboard 301.

To be more specific, in Fig. 45, the first connecting pin 368A which pivotally connects the arm supporting part 325 and the first arm member 367A is provided at a slant angle A with respect to a perpendicular line L. On the other hand, the second connecting pin 368B which pivotally connects the first arm member 367A and the second arm member 367B is provided at a slant angle B with respect to the perpendicular line L. The angle B is determined to be larger than the angle A.

As above, the first connecting pin 368A is provided at the slant angle A with respect to the perpendicular line L while the second connecting pin 368B is provided at the slant angle B with respect to the perpendicular line L. Accordingly, the second arm member 367B is positioned upward by a height corresponding to the thickness difference (H-h) based on the total slant angle (A+B). Thus, the bottom surface of the control part 362 (which is placed to be flush with the lower end surface of the second arm member 367B) becomes flush with the bottom surface of the keyboard 301.

Even where the thickness H of the second arm member 367B and the thickness of the control part 362 are not equal to the thickness h of the keyboard 301, the bottom surface of the second arm member 367B or the control part 362 can become flush with the bottom surface of the keyboard 301 during use with the first connecting pin 368A and the second connecting pin 368B provided at their respective slant angles, thus bringing the plane provided by the top surfaces of the key switches 307, 310 into parallel relation with the setting plane of the keyboard 301. This makes it possible to prevent a deterioration of key operationality.

In the above example, both the first connecting pin 368A and the second connecting pin 368B are provided in the slanting positions. In an alternative, only either of the connecting pins may be provided in the slanting position.

The present invention is not limited to the above mentioned embodiments and may be changed or modified variously within a scope of the present invention.

For example, in the above embodiment, the locking mechanisms 357 are provided between the first base plate 305 and the first key unit 337 in the first keyboard unit 301 and between the second base plate 308 and the second key unit 347 in the keyboard unit 304. Alternatively, as shown in Fig. 46, a damping member placed in the bearing member 312 provided in the first base plate 305 and a damping member placed in the bearing member 316 provided in the second base plate 308 may be held in contact with the circular arc face 342 of the first support member 344 and the circular arc face 352 of the second support member 354 respectively to hold the first and second key units 337 and 347 in their turning positions.

Herein, a holding mechanism for holding the first and second key units 337 and 347 in the turning positions. Fig. 46 is an enlarged explanatory view of the holding mechanism for holding the first and second key units 337 and 347 in the turning positions. It is to be noted that the following explanation is made with similar reference numerals with respect to similar elements and members to those in the above embodiments.

In Fig. 46, a pad holding part 382 of a concave shape is formed in substantially the center of the circular arc face 380 of the bearing member 312 in the first key unit 317. A damping pad 383 made of a felt material or others is fixed to the pad holding part 382. The damping pad 383 is held in contact with the circular arc face 342 of the first support member 344. The damping pad 383 and the circular arc face 342 constitute a holding mechanism 384. It is to be noted that the holding mechanism 384 is structured to hold the damping pad 383 in contact with the circular arc face 342 of the first support member 344 and hold the first key unit 337 in the turning position through frictional force caused between the damping pad 383 and the circular arc face 342. Accordingly, the circular arc face 342 of the first support member 344 constituting the holding mechanism 384 is not formed with any locking recess 345, differently from the above embodiments.

Similarly, in the second unit 347, a pad holding part 382 of a concave shape is formed in substantially the center of the circular arc face 381 of the bearing member 316. A damping pad 383 made of a felt material or the like is fixed to the pad holding part 382. The damping pad 383 is held in contact with the circular arc face 352 of the second support member 354. The damping pad 383 and the circular arc face 352 constitute a holding mechanism 384. It is to be noted, as with the above case, that the holding mechanism 384 is structured to bring the damping pad 383 in contact with the circular arc face 352 of the second support member 354 and hold the second key unit 347 in the turning position through frictional force caused between the damping pad 383 and the circular arc face 352. Accordingly, the circular arc face 352 of the second support member 354 constituting the holding mechanism 384 is not formed with any locking recess 355, differently from the above embodiments.

The holding mechanisms provided between the first base plate 305 and the first key unit 337 and between the second base plate 308 and the second key unit 347 respectively hold the first key unit 337 in the desired turning position by holding the damping pad 383 fixed to the pad holding part 382 formed in the circular arc face 380 of the bearing member 312 of the base plate 305 in contact with the circular arc face 342 of the first support member 344 and holds the second key unit 347 in the desired turning position by holding the damping pad 383 fixed to the pad holding part 382 formed in the circular arc face 381 of the bearing member 316 of the second base plate 308 in the circular arc face 352 of the second support member 354. The contact position between the damping pad 383 and the circular arc face 342 of the first support member 344 and contact position between the damping pad 383 and the circular arc face 352 of the second support member 354 can be shifted without steps. Accordingly, when the first and second key units 337 and 347 are independently held in respective desired turning positions, the turning positions can freely be selected so that the keyboard can be operated in a fixed operating state more suitable for each user. Because each holding mechanism 384 in the first and second key units 337 and 347 is simply constructed of the damping pad 383 and the circular arc face 342, 352 of the support member 344, 354, the holding mechanisms in the first and second key units 337, 347 can be realized at lower cost.

### INDUSTRIAL APPLICABILITY

It is possible to provide a foldable keyboard constructed such that after the folded state of two keyboard units is released, each keyboard unit can be placed in a desired operating state by a very simple operation.

## Claims

1. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein the first keyboard unit includes a first base plate and a first key unit including a plurality of key switches arranged on a first support plate mounted on the first base plate, the first support plate being turnable in a horizontal direction;
the second keyboard unit includes a second base plate and a second key unit including a plurality of key switches arranged on a second support plate mounted on the second base plate, the second support plate being turnable in a horizontal direction;
the rotational connecting part includes a support shaft which rotatably supports the first base plate and the second base plate; and
the keyboard further comprises:
a first gear member placed in one side of the first support plate and formed with a predetermined circular arc face and a first gear teeth part in the circular arc face; and
a second gear member placed in one side of the second support plate and formed with a predetermined circular arc face and a second gear teeth part in the circular arc face, the second gear teeth part being engaged with the first gear teeth part.

2. The foldable keyboard according to claim 1 comprising a locking mechanism which is placed between the first base plate and the first key unit or between the second base plate and the second key unit and is used for locking the first key unit or the second key unit in a desired turning position.

3. The foldable keyboard according to claim 2, wherein the locking mechanism is constructed of a locking recess formed in the circular arc face in the first gear member or the second gear member and a locking piece provided in the first base plate or the second base plate and engaged in the locking recess.

4. The foldable keyboard according to claim 1, wherein the first support plate in the first key unit is placed to be turnable about a predetermined turning axis on the first base plate and is formed, in one side, with a circular arc face coincident with a turning radius of the first support plate which turns about the turning axis, and
the circular arc face of the first gear member is equal in curvature radius to the circular arc face of the first support plate.

5. The foldable keyboard according to claim 1, wherein the second support plate in the second key unit is placed to be turnable about a predetermined turning axis on the second base plate and is formed, in one side, with a circular arc face coincident with a turning radius of the second support plate which turns about the turning axis, and
the circular arc face of the second gear member is equal in curvature radius to the circular arc face of the second support plate.

6. The foldable keyboard according to claim 1, wherein the first gear teeth part formed in the first gear member includes a plurality of first gear teeth including a lower tooth positioned below an upper surface of the first gear member and an upper tooth positioned above the upper surface of the first gear member,
the second gear teeth part formed in the second gear member includes a plurality of second gear teeth including a lower tooth positioned below an upper surface of the second gear member and an upper tooth positioned above the upper surface of the second gear member, and
the plurality of the first gear teeth and the second gear teeth are engaged with each other through their respective upper teeth and lower teeth.

7. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein the first keyboard unit includes a first base plate and a first key unit including a plurality of key switches arranged on a first support plate mounted on the first base plate, the first support plate being turnable in a horizontal direction;
the second keyboard unit includes a second base plate and a second key unit including a plurality of key switches arranged on a second support plate mounted on the second base plate, the second support plate being turnable in a horizontal direction;
the rotational connecting part includes a support shaft which rotatably supports the first base plate and the second base plate and a sliding member which is slidably fitted on the support shaft and formed with a gear teeth part;
the keyboard further comprises:
a first gear member placed in one side of the first support plate and formed with a predetermined circular arc face and a first gear tooth in the circular arc face, the first gear tooth being engaged with the gear teeth part; and
a second gear member placed in one side of the second support plate and formed with a predetermined circular arc face and a second gear tooth being engaged with the gear teeth part.

8. The foldable keyboard according to claim 7 comprising a locking mechanism which is placed between the first base plate and the first key unit or between the second base plate and the second key unit and which is used for locking the first key unit or the second key unit in a desired turning position.

9. The foldable keyboard according to claim 8, wherein the locking mechanism is constructed of a locking recess formed in the circular arc face in the first gear member or the second gear member and a locking piece provided in the first base plate or the second base plate and engaged in the locking recess.

10. The foldable keyboard according to claim 7; wherein the first support plate in the first key unit is placed to be turnable about a predetermined turning axis on the first base plate and is formed, in one side, with a circular arc face coincident with a turning radius of the first support plate which turns about the turning axis, and
the circular arc face of the first gear member is equal in curvature radius to the circular arc face of the first support plate.

11. The foldable keyboard according to claim 7, wherein the second support plate in the second key unit is placed to be turnable about a predetermined turning axis on the second base plate and is formed, in one side, with a circular arc face coincident with a turning radius of the second support plate which turns about the turning axis, and
the circular arc face of the second gear member is equal in curvature radius to the circular arc face of the second support plate.

12. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein the first keyboard unit includes a first base plate and a first key unit including a plurality of key switches arranged on a first support plate mounted on the first base plate, the first support plate being turnable in a horizontal direction;
the second keyboard unit includes a second base plate and a second key unit including a plurality of key switches arranged on a second support plate mounted on the second base plate, the second support plate being turnable in a horizontal direction;
the rotational connecting part includes a support shaft which rotatably supports the first base plate and the second base plate and a sliding member which is slidably fitted on the support shaft; and the keyboard further comprises:
a first support member placed in one side of the first support plate;
a second support member placed in one side of the second support plate; and
a linking mechanism including a first link member which links the sliding member and the first support member and a second link member which links the sliding member and the second support member.

13. The foldable keyboard according to claim 12 comprising a locking mechanism which is placed between the first base plate and the first key unit or between the second base plate and the second key unit and which is used for locking the first key unit or the second key unit in a desired turning position.

14. The foldable keyboard according to claim 13, wherein the locking mechanism is constructed of a locking recess formed in the circular arc face in the first support member or the second support member and a locking piece provided in the first base plate or the second base plate and engaged in the locking recess.

15. The foldable keyboard according to claim 12, wherein the first support plate in the first key unit is placed to be turnable about a predetermined turning axis on the first base plate and is formed, in one side, with a circular arc face coincident with a turning radius of the first support plate which turns about the turning axis, and
the first support member is formed with a circular arc face equal in curvature radius to the circular arc face of the first support plate.

16. The foldable keyboard according to claim 12, wherein the second support plate in the second key unit is placed to be turnable about a predetermined turning axis on the second base plate and is formed, in one side, with a circular arc face coincident with a turning radius of the second support plate which turns about the turning axis, and
the second support member is formed with a circular arc face equal in curvature radius to the circular arc face of the second support plate.

17. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein the first keyboard unit includes a first base plate and a first key unit including a plurality of key switches arranged on a first support plate mounted on the first base plate, the first support plate being turnable in a horizontal direction;
the second keyboard unit includes a second base plate and a second key unit including a plurality of key switches arranged on a second support plate mounted on the second base plate, the second support plate being turnable in a horizontal direction;
the rotational connecting part includes a support shaft which rotatably supports the first base plate and the second base plate; and
the keyboard further comprises holding mechanisms which are placed between the first base plate and the first key unit and between the second base plate and the second key unit and which are used to hold the first key unit and the second key unit independently from each other in desired turning positions.

18. The foldable keyboard according to claim 17, wherein the holding mechanism includes:
a first support member placed in one side of the first support plate and formed with a predetermined circular arc face and a plurality of first locking recesses in the circular arc face;
a first locking piece provided in the first base plate and engaged in the first locking recess;
a second support member placed in one side of the second support plate and formed with a predetermined circular arc face and a plurality of second locking recesses in the circular arc face; and
a second locking piece provided in the second base plate and engaged in the second locking recess.

19. The foldable keyboard according to claim 18, wherein the first support member is provided with a scale at a position corresponding to each first locking recess, and the second support member is provided with a scale at a position corresponding to each second locking recess.

20. The foldable keyboard according to claim 18, wherein the first support plate in the first key unit is placed to be turnable about a predetermined turning axis on the first base plate and is formed, in one side, with a circular arc face coincident with a turning radius of the first support plate which turns about the turning axis, and
the circular arc face of the first support member is equal in curvature radius to the circular arc face of the first support plate.

21. The foldable keyboard according to claim 18, wherein the second support plate in the second key unit is placed to be turnable about a predetermined turning axis on the second base plate and is formed, in one side, with a circular arc face coincident with a turning radius of the second support plate which turns about the turning axis, and
the circular arc face of the second support member is equal in curvature radius to the circular arc face of the second support plate.

22. The foldable keyboard according to claim 17, wherein the holding mechanism includes:
a first support member placed in one side of the first support plate and formed with a predetermined circular arc face;
a first damping member provided in the first base plate and held in contact with the circular arc face of the first support plate;
a second support member placed in one side of the second support plate and formed with a predetermined circular arc face; and
a second damping member provided in the second base plate and held in contact with the circular arc face of the second support plate.

23. A foldable keyboard in which a rotational connecting part is provided between a first keyboard unit and a second keyboard unit so that both units are rotated about the rotational connecting part in a direction to come apart from each other into a horizontally arranged state during use of the keyboard and both units are rotated about the rotational connecting part in a direction to come close to each other into a superposed state during nonuse of the keyboard,
wherein the rotational connecting part includes a support shaft which rotatably supports a first base plate and a second base plate;
the first keyboard unit includes the first base plate and a first key unit including a plurality of key switches arranged on a first support plate mounted on the first base plate, the first support plate being turnable in a horizontal direction;
the second keyboard unit includes the second base plate and a second key unit including a plurality of key switches arranged on a second support plate mounted on the second base plate, the second support plate being turnable in a horizontal direction; and
the first support plate is allowed to turn in a horizontal direction through a first turning shaft provided on the first base plate, and the second support plate is allowed to turn in a horizontal direction through a second turning shaft provided on the second base plate.
